(19) Europäisches Patentamt
European Patent Office
Office européen des brevets

(11) Veröffentlichungsnummer: **0 144 766**
**B1**

# (12) EUROPÄISCHE PATENTSCHRIFT

(45) Veröffentlichungstag der Patentschrift: **05.10.88**

(51) Int. Cl.⁴: **C 09 B 62/04**, C 09 B 62/503, D 06 P 3/10, D 06 P 3/66

(21) Anmeldenummer: **84113351.5**

(22) Anmeldetag: **06.11.84**

## (54) Reaktivfarbstoffe, deren Herstellung und Verwendung.

(30) Priorität: **09.11.83 CH 6035/83**

(43) Veröffentlichungstag der Anmeldung: **19.06.85 Patentblatt 85/25**

(45) Bekanntmachung des Hinweises auf die Patenterteilung: **05.10.88 Patentblatt 88/40**

(84) Benannte Vertragsstaaten: **CH DE FR GB IT LI**

(56) Entgegenhaltungen:
**EP - A - 0 074 928**
**EP - A - 0 085 025**
**EP - A - 0 085 654**
**FR - A - 2 346 418**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Tzikas, Athanassios, Dr., Muttenzerstrasse 78, CH-4133 Pratteln (CH)**
Erfinder: **Seiler, Herbert, Dr., Leimgrubenweg 60, CH-4125 Riehen (CH)**
Erfinder: **Scheibli, Peter, Dr., Nussbaumweg 3, CH-4103 Bottmingen (CH)**

(74) Vertreter: **Zumstein, Fritz, Dr. et al, Bräuhausstrasse 4, D-8000 München 2 (DE)**

**EP 0 144 766 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es sind bereits z. B. aus der FR-A 2 346 418 oder aus den europäischen Patentanmeldungen Nr. 0 070 806, 0 070 807, 0 070 808, 0 074 928 und 0 085 025 Reaktivfarbstoffe enthaltend einen Triazinrest und einen Vinylsulfonylrest bzw. dessen Vorstufe, wobei die Reaktivreste über eine Alkylamino-Brücke miteinander verbunden sind, bekannt.

Die Erfindung betrifft neue wertvolle Reaktivfarbstoffe der Formel I

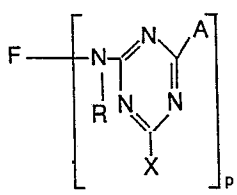

(I)

worin

F ein Rest eines mindestens eine $-SO_3H$-Gruppe enthaltenden metallfreien oder metallhaltigen Mono- oder Disazofarbstoffs, ein Rest eines Derivats des 1-Amino- oder 1-Anilino-anthrachinons, insbesondere ein Rest eines 4-Phenylamino-1-amino-anthrachinon-2-sulfonsäure-Derivats oder ein Rest eines Sulfophthalocyaninfarbstoffs, insbesondere eines im Phthalocyaninkern mindestens zwei Sulfonsäuregruppen tragenden Derivats eines Phthalocyaninsulfanilids oder -sulfalkylamids mit 2–6 C-Atomen in der Alkylkette sowie ein Rest eines Formazan-, Phenazin-, Oxazin- oder Nitroarylfarbstoffs ist,

R Wasserstoff oder gegebenenfalls durch $-COOH$ oder $-SO_3H$, substituiertes Alkyl mit 1 bis 4 C-Atomen, Cyanäthyl oder Hydroxyäthyl bedeutet,

X für Fluor, Chlor, Brom, Alkylsulfonyl mit 1 bis 4 C-Atomen, Phenylsulfonyl oder den $-SO_3H$ Rest steht,

P 1 oder 2 und

A einen Rest der Formel II

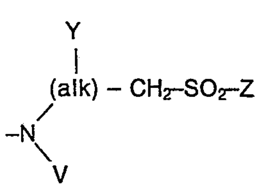

(II)

in der

Y Chlor, Brom, Fluor, $-OH$, $-OSO_3H$, $-O-$Acyl, $-CN$, $-COOH$, $-COO-$Alkyl mit 1 bis 4 C-Atomen im Alkylrest, $-CONH_2$ oder $-SO_2Z$ ist,

alk ein Polymethylenrest mit 1 bis 6 C-Atomen oder dessen verzweigte Isomere bedeutet,

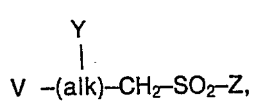

Wasserstoff, Methyl oder eine gegebenenfalls durch die Carboxylgruppe oder die Sulfonsäuregruppe oder deren Derivate substituierte Methylgruppe oder ein gegebenenfalls durch Alkoxygruppen mit 1 oder 2 C-Atomen, durch Carboxy- oder Sulfonsäuregruppen oder durch Halogenatome oder Hydroxygruppen substituierter Alkylrest mit 1 bis 4 C-Atomen ist, und worin

Z ein β-Halogenäthyl- oder ein Vinyl- oder β-Acetoxyäthylrest bedeutet;

oder einen Rest der Formel II'

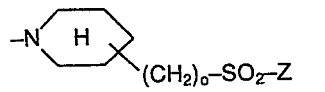

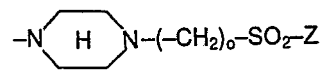

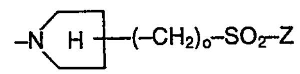

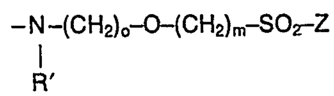

bedeutet, in denen R' $C_{1-6}$-Alkyl oder Wasserstoff bedeutet, Z die oben angegebenen Bedeutungen hat und o 0 bis 6 und m 2 bis 6 ist.

Unter faserreaktiven Farbstoffen sind solche zu verstehen, die mit den Hydroxylgruppen der Zellulose oder mit den reaktiven Zentren von natürlichen oder synthetischen Polyamiden unter Bildung kovalenter chemischer Bindungen zu reagieren vermögen. Der Rest F in Formel I kann aus irgendeiner bekannten Farbstoffklasse stammen, er gehört vorzugsweise der Anthrachinon-, der metallfreien oder metallhaltigen Monoazo- oder Disazo-, der Phthalocyanin-, der Formazan- oder der Nitroarylreihe an. Bevorzugt sind erfindungsgemässe Farbstoffe, in denen F ein Farbstoffrest der Anthrachinon-, der metallfreien oder metallhaltigen Monoazo- oder Disazo- oder der Phthalocyaninreihe ist.

Vorzugsweise enthält F zwei bis vier Sulfonsäuregruppen.

Der Substituent R ist Wasserstoff oder eine geradkettige oder verzweigte niedrigmolekulare Alkylgruppe mit 1 bis 4 C-Atomen, wie Methyl, Äthyl, Propyl, Isopropyl oder n-Butyl, 2-Methylpropyl, sek.-Butyl, tert.-Butyl, ferner ein substituierter Alkylrest, wie Carboxymethyl, Sulfomethyl, Sulfoäthyl, Cyanäthyl, β-Chlorpropyl oder β-Hydroxyäthyl.

Bevorzugt ist R der Methylrest. Besonders bevorzugt als R ist Wasserstoff.

Als Anion abspaltbare Substituenten X sind insbesondere Chlor, Brom, Fluor, Alkylsulfonyl wie Methyl- oder Äthylsulfonyl, Phenylsulfonyl oder der $-SO_3H$ Rest genannt.

Vorzugsweise ist X ein Chlor- oder Fluoratom. V in der Bedeutung eines Alkylrestes mit 1 bis 4 C-Atomen ist insbesondere eine gegebenenfalls durch die Carboxylgruppe oder die Sulfonsäuregruppe oder deren Derivate substituierte Methylgruppe oder ein gegebenenfalls durch Alkoxygruppen mit 1 oder 2 C-Atomen, durch Carboxy- oder Sulfonsäuregruppen oder durch Halogenatome oder Hydroxygruppen substituierter Alkylrest mit 2 bis 6 C-Atomen oder ein unsubstituierter Alkylrest mit 7 bis 20 C-Atomen, ein Cyclohexylrest, oder ein gegebenenfalls durch Methyl-, Äthyl-, Methoxy-, Äthoxy-, Carbonsäure- oder Sulfonsäuregruppen oder durch Halogenatome substituierter Phenylrest.

Die Erfindung betrifft insbesondere Farbstoffe der Formel I, in der Z für den β-Chloräthylrest und X für ein Halogenatom stehen.

Die Reaktivfarbstoffe der allgemeinen Formel I werden hergestellt, indem man einen Farbstoff der Formel V

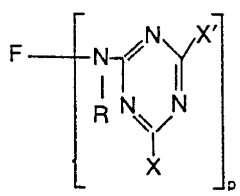
(V)

in der F, R und p die oben angegebenen Bedeutungen haben und X und X′ unabhängig voneinander eine der oben für X genannten Bedeutungen haben, mit einem Amin der Formel IIa

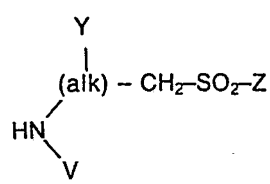
(IIa)

in der alk, Y, Z und V die oben angegebenen Bedeutungen haben, oder mit einem Amin der Formeln II′a

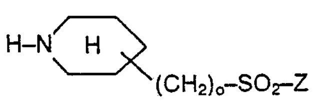

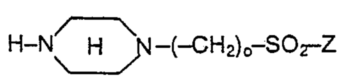

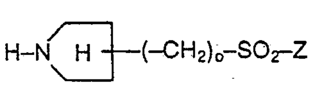

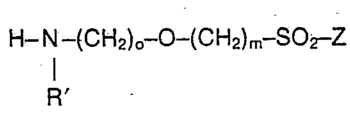

in denen Z und R′ die oben angegebenen Bedeutungen haben und o für 0 bis 6 und m für 2 bis 6 stehen, umsetzt.

Die Farbstoffe der allgemeinen Formel V werden hergestellt, indem man einen Farbstoff der Formel III

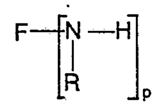
(III),

in der F, R und p die oben angegebenen Bedeutungen haben, mit einem reaktionsfähigen Derivat des 1,3,5-Triazins der Formel IV

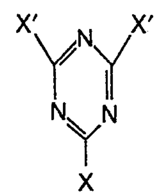
(IV)

in der X und X′ unabhängig voneinander eine der oben für X angegebenen Bedeutungen haben, umsetzt.

Die Herstellung der Farbstoffe der Formel V und der erfindungsgemässen Reaktivfarbstoffe der Formel I kann auch in vorteilhafter Weise miteinander kombiniert werden, so dass zunächst ein Farbstoff der Formel III mit einem reaktionsfähigen Derivat des 1,3,5-Triazins der Formel IV zum Farbstoff der Formel V und dieser anschliessend ohne Isolierung des Farbstoffs der Formel V mit einem Amin der Formel IIa oder II′a zu einem erfindungsgemässen Reaktivfarbstoff der Formel I umgesetzt wird. Die Umsetzung der Farbstoffe der Formel III mit den Triazinderivaten der Formel IV führt man zweckmässigerweise bei niederen Temperaturen, etwa zwischen −2 und +10 °C, vorzugsweise zwischen 0 und 5 °C, unter Zusatz von säurebindenden Mitteln wie Natronlauge, Soda oder Natriumhydrogencarbonat in einem pH-Bereich zwischen 1,5 und 9, vorzugsweise zwischen 4 und 6, durch.

Als Lösungsmittel dient bevorzugt Wasser, das einen gewissen Anteil an organischen Lösungsmitteln, wie z.B. Aceton, enthält. Doch lässt sich die Umsetzung auch in reinem Wasser durchführen.

Für die weitere Umsetzung der so erhaltenen Farbstoffe der Formel V mit den Aminen der Formel IIa oder II′a setzt man die Amine zweckmässigerweise in Form eines Salzes, bevorzugt in Form des Hydrochlorids, ein. Die Umsetzung wird bei erhöhter Temperatur, etwa zwischen 5 und 70 °C, bevorzugt zwischen 5 und 30 °C, unter Zusatz säurebindender Mittel, bevorzugt Natriumbicarbonat, in einem pH-Bereich von 2 bis 6,5, bevorzugt 3,5 bis 4,5, durchgeführt.

Wenn der Farbstoffrest F aus mehreren Komponenten zusammengesetzt ist, wie z.B. bei Azofarbstoffen oder Formazanfarbstoffen, sind die erfindungsgemässen Farbstoffe der Formel I auch in der Weise erhältlich, dass man sie in an sich bekannter Weise aus Komponenten von F aufbaut, von denen eine, gegebenenfalls aber auch zwei, eine Gruppe der Formel Va

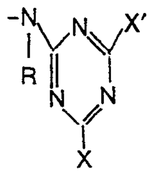 (Va)

worin R, X und X′ die oben angegebenen Bedeutungen haben, enthalten.

Derartige Komponenten werden erhalten durch Acylierung der entsprechenden, eine Gruppe der Formel IIIa

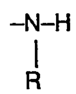 (IIIa)

enthaltenden Komponenten mit einem reaktionsfähigen Triazinderivat der Formel IV unter Bedingungen, die den oben bei der entsprechenden Umsetzung des Farbstoffes beschriebenen entsprechen. Die so erhaltenen Farbstoffe werden dann in der oben beschriebenen Weise mit einem Amin der Formel IIa oder II′a zu einem erfindungsgemässen Farbstoff entsprechend der Formel I umgesetzt.

Die Amine der Formel IIa oder II′a mit der Bedeutung eines β-Halogenäthylrestes für Z werden hergestellt, indem man ein der Formel IIa oder II′a entsprechendes Amin, das anstelle der $-SO_2-Z$ Gruppe ein Chloratom enthält, in alkalischem Medium mit β-Hydroxyäthylmerkaptan zur Reaktion bringt und den erhaltenen Thioäther anschliessend nach den Lehren des DP 887 505 mit Halogen in halogenwasserstoffsaurer Lösung oxydiert. Amine der Formel IIa oder II′a, in denen Z den Vinylrest bedeutet, können aus den Aminen der Formel IIa oder II′s, in denen Z für β-Halogenäthyl steht, durch Chlorwasserstoffabspaltung erhalten werden.

In analoger Weise können erfindungsgemässe Farbstoffe der Formel I, in denen Z Vinyl bedeutet, durch Chlorwasserstoffabspaltung, z. B. durch Behandlung mit Natriumhydrogencarbonat in Wasser bei 50 bis 60 °C, aus erfindungsgemässen Farbstoffen der Formel I, in denen Z für β-Chloräthyl steht, erhalten werden.

Reaktionsfähige Derivate des 1,3,5-Triazins der Formel IV sind bekannt. Als Beispiele seien genannt: Trichlortriazin, Tribromtriazin, Trifluortriazin, Trisulfotriazin, Tris-methylsulfonyltriazin, Tris-äthylsulfonyltriazin, Dichlorfluortriazin, Chlor-disulfotriazin, Chlor-bis-methylsulfonyltriazin, Trisphenylsulfonyltriazin.

Beispiele für Amine der Formel IIa sind:

α-Carbonsäure-β-(β′-chloräthylsulfonyl)-äthylamin-hydrochlorid

α-Carbonsäureäthylester-β-(β′-chloräthylsulfonyl)-äthylamin-hydrochlorid

β-Hydroxy-γ-(β′-chloräthylsulfonyl)-propylamin-hydrochlorid

β,γ-(Bis-β′-chloräthylsulfonyl)-propylamin-hydrochlorid

β-Acetoxy-γ-(β′-acetoxyäthylsulfonyl)-propylamin-hydrochlorid

β-Chlor-γ-(β′-chloräthylsulfonyl)-propylamin-hydrochlorid

β-Brom-γ-(β′-chloräthylsulfonyl)-propylamin-hydrochlorid

β-Sulfato-γ-(β′-sulfatoäthylsulfonyl)-propylamin-hydrochlorid

Bis-[β-hydroxy-γ-(β′-chloräthylsulfonyl)-propyl]-amin-hydrochlorid

Bis-[β-chlor-γ-(β′-chloräthylsulfonyl)-propyl]-amin-hydrochlorid

Bis-[β-sulfato-γ-(β′-chloräthylsulfonyl)-propyl]-amin-hydrochlorid

β-Hydroxy-γ-(β′-vinylsulfonyl)-propylamin-hydrochlorid

HCl 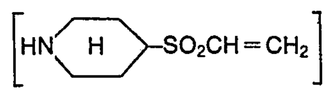

HCl 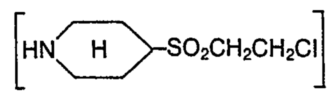

HCl 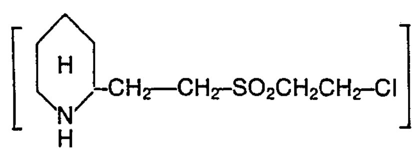

$H_2SO_4$ 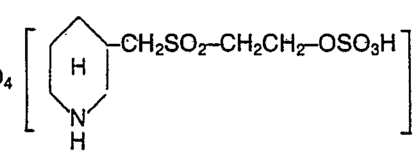

HCl 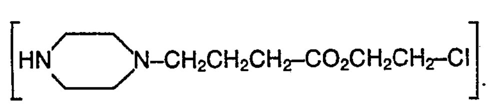

HCl [$H_2N-CH_2CH_2-O-CH_2CH_2-SO_2CH_2CH_2-Cl$]

HCl [$H_2N-CH_2CH_2CH_2-O-CH_2CH_2CH_2-SO_2CH_2CH_2-Cl$]

In den zur Herstellung erfindungsgemässser Farbstoffe eingesetzten Farbstoffen der Formel III steht F für den Rest eines mindestens eine Sulfonsäuregruppe tragenden wasserlöslichen Farbstoffes, insbesondere für den Rest eines Mono- oder Disazofarbstoffes, der metallfrei oder metallisiert sein kann, für den Rest eines Derivats des 1-Amino- oder 1-Anilinoanthrachinons, insbesondere

für den Rest eines 4-Phenylamino-1-aminoanthrachinon-2-sulfonsäure-Derivats oder für den Rest eines Sulfophthalocyaninfarbstoffs, insbesondere eines im Phthalocyaninkern mindestens zwei Sulfonsäuregruppen tragenden Derivats eines Phthalocyanin-sulfanilids oder -sulfalkylamids mit 2 bis 6 C-Atomen in der Alkylkette, sowie für die Reste von Formazan- oder Nitroarylfarbstoffen.

Eine wichtige Gruppe von Farbstoffen der Formel III sind solche, in denen F den Rest eines Mono- oder Disazofarbstoffs der Formel VIa oder VIb

$$D{-}N{=}N(M{-}N{=}N)_nK{-} \qquad (VIa)$$

oder

$$-D{-}N{=}N{-}(M{-}N{=}N)_nK \qquad (VIb)$$

oder eines davon abgeleiteten Metallkomplexes ist, wobei in den Formeln VIa und VIb

D für den Rest einer gegebenenfalls durch in der Azochemie übliche Substituenten, insbesondere Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome, substituierten Diazokomponente der Benzol- oder Naphthalinreihe,

K für den Rest einer gegebenenfalls durch in der Azochemie übliche Substituenten, insbesondere Hydroxy-, Amino-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Kupplungskomponente der Benzol-, Naphthalin-, Pyrazolon-, 6-Hydroxypyridon-(2) oder Acetessigsäurearylamid-Reihe,

M für den Rest einer gegebenenfalls durch in der Azochemie übliche Substituenten, insbesondere Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Mittelkomponente der Benzol- oder Naphthalinreihe steht und

n 0 bis 1 bedeutet, wobei

D, M und K zusammen mindestens zwei Sulfonsäuregruppen, vorzugsweise drei bis vier Sulfonsäuregruppen, enthalten.

Eine weitere wertvolle Gruppe von Farbstoffen der Formel III, in denen p für 2 steht, enthält für F den zweiwertigen Rest der Formel VIc

$$-D{-}N{=}N{-}(M{-}N{=}N)_nK{-} \qquad (VIc),$$

worin D, K, M und n die obengenannten Bedeutungen haben, oder einen davon abgeleiteten Metallkomplex.

Die Farbstoffe der Formel III, worin F ein Rest einer der Formeln VIa bis VIc ist, können für den Fall, dass n = 0 ist, in an sich bekannter Weise durch Diazotierung geeigneter aromatischer Amine und Kupplung auf geeigneten Kupplungskomponenten erhalten werden, wobei entweder die Diazokomponente oder die Kupplungskomponente oder beide einen Rest der Formel

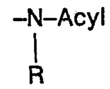

oder die Kupplungskomponente einen Rest der Formel

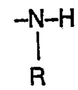

enthalten und die Acylgruppe nach der Kupplung durch Verseifen abgespalten wird.

Zur Herstellung von Disazofarbstoffen der Formel III, d.h. solchen, in denen F für einen Rest einer der Formeln VIa–VIc steht, wobei n = 1 ist, wird zunächst die Diazoniumverbindung eines geeigneten aromatischen Amins auf eine geeignete Mittelkomponente gekuppelt. Mittelkomponente sind im Prinzip alle Benzol- oder Naphthalinderivate, die eine diazotierbare Aminogruppe enthalten. Anschliessend wird die dann vorliegende Aminoazoverbindung diazotiert und auf eine geeignete Kupplungskomponente gekuppelt, wobei entweder die Diazokomponente der ersten Kupplung oder die Kupplungskomponente der zweiten Kupplung oder beide einen Rest der Formel

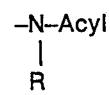

enthalten, und die Acylgruppe nach der Kupplung durch Verseifen abgespalten wird. Die Kupplungskomponente kann auch anstelle der

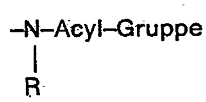

eine

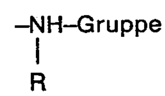

enthalten.

Zur Herstellung von Farbstoffen der Formel III, in denen F ein Rest der Formel VIa ist, sind beispielsweise die in der folgenden Liste Nr. 1 aufgeführten aromatischen Amine als Diazokomponenten geeignet.

Liste Nr. 1
Anilin; o-, m-, p-Toluidin;
o-, m-, p-Anisidin; o-, m-, p-Chloranilin;
Anilin-2-, -3-, -4-carbonsäure oder -sulfonsäure;
Anilin-2,4-, -2,5-dicarbonsäure oder -disulfonsäure;
2-Aminophenol-4-sulfonsäure;
2-Aminophenol-4,6-disulfonsäure;
4-Chlor-2-aminophenol-5- oder -6-sulfonsäure;

6-Chlor-2-aminophenol-4-sulfonsäure;
6-Nitro-2-aminophenol-4-sulfonsäure;
4-Nitro-2-aminophenol-6-sulfonsäure;
3- oder 4-Acetylamino-anilin-6-sulfonsäure;
3- oder 4-Benzoylamino-anilin-6-sulfonsäure;
4-Amino-4′-sulfo-benzanilid;
2-Aminoanisol-4-sulfonsäure;
4-Aminoanisol-2- oder -3-sulfonsäure;
3-Aminoanisol-4-sulfonsäure;
6-Chlor-2-amino-benzol-sulfonsäure;
5-Nitro-2-amino-benzol-sulfonsäure;
4-Chlor-3-amino-benzol-sulfonsäure;
6-Chlor-3-amino-benzol-sulfonsäure;
3-Chlor-4-amino-benzol-sulfonsäure;
2-Amino-toluol-4-sulfonsäure;
2-Amino-toluol-5-sulfonsäure;
3-Amino-toluol-6-sulfonsäure;
4-Amino-toluol-2-sulfonsäure;
4-Amino-toluol-3-sulfonsäure;
5-Chlor-2-amino-toluol-3-sulfonsäure;
3-Chlor-2-amino-toluol-5-sulfonsäure;
2-Chlor-4-amino-toluol-6-sulfonsäure;
3-Nitro-2-amino-toluol-5-sulfonsäure;
3-Nitro-4-amino-toluol-2-sulfonsäure;
3-Amino-1,2-dimethyl-benzol-4-sulfonsäure;
4-Amino-1,3-dimethyl-benzol-5-sulfonsäure;
4-Amino-1,3-dimethyl-benzol-6-sulfonsäure;
4-Chlor-2-amino-anisol-5-sulfonsäure;
4-Amino-phenetol-2-sulfonsäure;
4-Amino-phenetol-3-sulfonsäure;
2-Amino-phenetol-4-sulfonsäure;
2-Amino-toluol-3,4-disulfonsäure;
2-Amino-toluol-3,5-disulfonsäure;
4-Amino-2-sulfo-2′- oder 4′-methoxy-diphenylamin;
2-Amino-diphenyläther; 2-, 3- oder 4-Aminobenzolsulfamid;
2-Naphthylamin-1-, -5-, -6-, -7- oder -8-sulfonsäure;
2-Naphthylamin-1,5-, -1,7-, -3,6-, -3,7-, -4,7-, -4,8-, -5,7- oder -6,8-disulfonsäure;
2-Naphthylamin-1,5,7-, -3,6,8- oder -4,6,8-trisulfonsäure;
1-Naphthylamin-2-, -4-, -5-, -6- oder -7-sulfonsäure;
1-Naphthylamin-3,6-, -3,7-, -3,8-, -4,6-, -4,7-, -4,8-, -5,7- oder -6,8-disulfonsäure;
1-Naphthylamin-2,3,6-, -3,6,8- oder -4,6,8-trisulfonsäure;
2-Amino-1-naphthol-4-sulfonsäure;
2-Amino-1-naphthol-7-sulfonsäure;
1-Amino-2-naphthol-4-sulfonsäure;
4-Nitro-2-amino-1-naphthol-7-sulfonsäure und
5-Nitro-1-amino-2-naphthol-4-sulfonsäure,
sowie Amine der Formeln

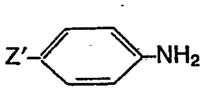 ,

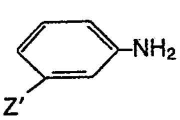 ,

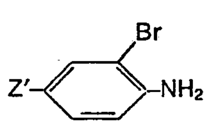 ,

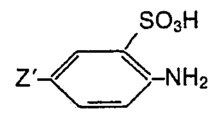 ,

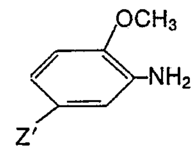 ,

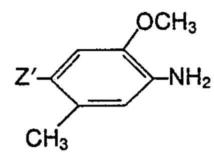

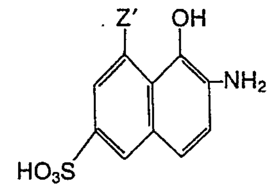 ,

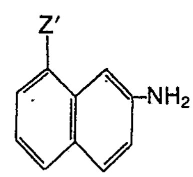 ,

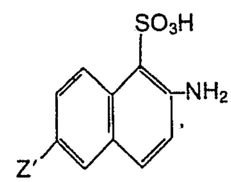 ,

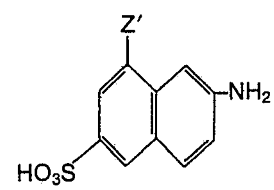 ,

worin Z′ Vinylsulfonyl, β-Chloralkylsulfonyl, β-Sulfatoäthylsulfonyl, β-Thiosulfatoäthylsulfonyl oder β-Acetoxyäthylsulfonyl ist, oder der Formeln

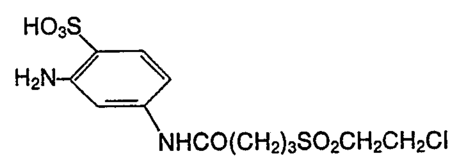 ,

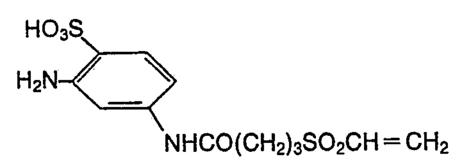 ,

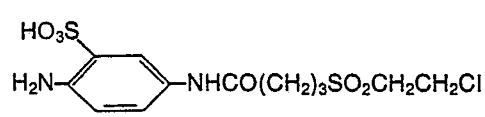 ,

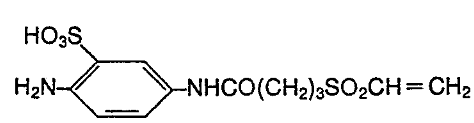 .

Am Aufbau von Farbstoffen der Formel III, in denen F ein Rest der Formel VIb oder VIc ist, werden beispielsweise die in der Liste Nr. 2 aufgeführten Diamine in Form ihrer Monoacyl-Derivate eingesetzt. Als Acylgruppen kommen insbesondere niedere Alkanoylgruppen mit 1 bis 5 C-Atomen vorzugsweise Formyl oder Acetyl in Betracht. Wie oben angegeben, werden die Acylgruppen nach der Kupplung abgespalten, um die Farbstoffe der Formel III zu erhalten.

Liste Nr. 2
p-Phenylendiamin;
1,4-Phenylendiamin-2-sulfonsäure;
1,4-Phenylendiamin-2-carbonsäure;
1,4-Diamino-naphthalin-2-sulfonsäure;
2,6-Diamino-naphthalin-8-sulfonsäure;
2,6-Diamino-naphthalin-4,8-disulfonsäure;
1,6-Diamino-naphthalin-4,8-disulfonsäure;
m-Phenylendiamin,
1,3-Phenylendiamin-4-sulfonsäure;
1,3-Phenylendiamin-4,6-disulfonsäure;
1,4-Phenylendiamin-2,6-disulfonsäure;
1,4-Phenylendiamin-2,5-disulfonsäure;
1,4-Diaminonaphthalin-6-sulfonsäure;
4,4'-Diaminodiphenyl-3-sulfonsäure;
4,4'-Diaminostilben-2,2'-disulfonsäure.

Beispiele für Mittelkomponenten, die am Aufbau der Reste VIa bis VIc beteiligt sein können, sind in der folgenden Liste Nr. 3 aufgeführt.

Liste Nr. 3
Anilin; m-Toluidin;
2,5-Dimethyl- oder -Dimethoxy-anilin;
m-Amino-anisol; m-Acetylamino;
m-Propionylamino-, m-Butyrylamino- oder m-Benzoylamino-anilin;
m-Amino-phenylharnstoff;
4-Acetamino-2-amino-toluol oder -anisol;
2-Amino-4-methylanisol;
1-Aminonaphthalin-6- oder -7-sulfonsäure;
2-Amino-4-acetylamino-benzolsulfonsäure;
2-Amino-5-naphthol-7-sulfonsäure;
2-Amino-8-naphthol-6-sulfonsäure;
2-(4-Aminobenzoyl-amino)-5-naphthol-7-sulfonsäure;
1-(4-Amino-2-sulfophenyl)-3-methyl- oder -3-carboxy-pyrazolon-5;
Acetoacet-3-sulfo-4-amino-anilid.

Beispiele für Kupplungskomponenten, die sich zur Herstellung von Farbstoffen der allgemeinen Formel III, worin F eine Gruppe der Formel VIb bedeutet, eignen, sind in der folgenden Liste Nr. 4 aufgeführt.

Liste Nr. 4
2-Naphthol; 2-Naphthol-6-, -7- oder -8-sulfonsäure;
2-Naphthol-3,6-, -3,7-, -4,8- oder -6,8-disulfonsäure;
2-Naphthol-3,6,8-trisulfonsäure;
1-Naphthol-4-, -5-, -6- oder -8-sulfonsäure;
1-Naphthol-3,6-, -3,7-, -3,8- oder -4,8-disulfonsäure;
1-Naphthol-3,6-, -3,7-, -3,8- oder -4,8-disulfonsäure;
1-Naphthol-3,6,8-trisulfonsäure;
2-Naphthylamin-5-, -6- oder -7-sulfonsäure;
2-Naphthylamin-3,6-, -3,7-, -5,7- oder -6,8-disulfonsäure;
1-Amino-8-naphthol-2,4-disulfonsäure;
2-Ureido-5-naphthol-7-sulfonsäure;
1-(4-Sulfophenyl)-3-methyl- oder -3-carboxy-pyrazolon-5;
1-(4-Methyl-2-sulfophenyl)-3-methyl- oder -3-carboxy-pyrazolon-5;
1-(2,5-Dichlor-4-sulfophenyl)-3-methyl- oder -3-carboxy-pyrazolon-5;
4-Acetoacetylamino-benzolsulfonsäure;
4-Acetoacetylamino-3,6-dimethoxy-benzolsulfonsäure;
Barbitursäure;
6-Hydroxy-4-methyl-3-sulfo- oder -3-carbonamido-pyridon-2.

Beispiele für Kupplungskomponenten, die sich zum Aufbau von Farbstoffen der Formel III, worin F eine Gruppe der Formel VIa oder VIc ist, eignen, sind in der folgenden Liste Nr. 5 aufgeführt.

Liste Nr. 5
Anilin; m-Toluidin; 2,5-Dimethyl- oder -Dimethoxy-anilin;
m-Amino-anisol; m-Acetylamino-,
m-Propionylamino-, m-Butyrylamino- oder m-Benzoylamino-anilin;
m-Amino-phenylharnstoff;
4-Acetamino-2-amino-touol ofer -anisol;
2-Amino-4-methylanisol;
1-Amino-naphthalin-6-, -7- oder -8-sulfonsäure;
2-Amino-4-acetyl-amino-benzolsulfonsäure;
2-Amino-5-naphthol-7-sulfonsäure;
2-Amino-8-naphthol-6-sulfonsäure;
2-(4-Aminobenzoyl-amino)-5-naphthol-7-sulfonsäure;
1-(4-Amino- oder 4-Acetylamino)-2-sulfophenyl-3-methyl- oder -3-carboxy-pyrazolon-5;
Acetoacet-3-sulfo-4-amino-anilid;
1-Amino-8-naphthol-3,6- oder 4,6-disulfonsäure;
1-(3- oder 4-Aminobenzoyl)-amino-8-naphthol-3,6- oder -4,6-disulfonsäure;
1-Acetylamino-8-naphthol-3,6- oder -4,6-disulfonsäure;
2-Acetylamino-5-naphthol-7-sulfonsäure;
2-Acetylamino-8-naphthol-6-sulfonsäure;
1-(3-Amino- oder 3-Acetylamino-6-sulfophenyl)-3-methyl- oder -3-carboxy-pyrazolon-5;
2-Acetyl-methylamino- oder 2-Methylamino-5-naphthol-7-sulfonsäure;
N-Methylanilin; N-Propyl-m-toluidin.

Zur Herstellung erfindungsgemässer Reaktivfarbstoffe geeignete eine oder zwei

–NH– oder –N–Acyl–Gruppen
  |          |
  R          R

tragende Disazofarbstoffe können auch durch Tetrazotierung eines zwei primäre Aminogruppen enthaltenden aromatischen Diamins und Kuppeln der so erhaltenen Tetrazoverbindung mit 2 Molanteilen einer eine

–NH– oder –N–Acyl–Gruppe
| |
R . R

enthaltenden Kupplungskomponente, beispielsweise einer der in Liste 5 angegebenen, oder mit je 1 Molanteil von zwei verschiedenen derartigen Kupplungskomponenten oder mit 1 Molanteil einer derartigen Kupplungskomponente und mit 1 Molanteil einer keine

–NH– bzw. –N–Acyl–Gruppe
| |
R R

enthaltenden Kupplungskomponente, beispielsweise einer der in Liste 4 angegebenen, erhalten werden. Als Beispiele solcher aromatischer Diamine seien erwähnt:

Liste Nr. 6
3,3′-Dimethoxybenzidin,
Benzidin-2,2′-disulfonsäure,
Benzidin-3,3′-dicarbonsäure,
Benzidin-3,3′-diglykolsäure und
4,4′-Diaminostilben-2,2′-disulfonsäure.

Weitere, zur Herstellung erfindungsgemässer Reaktivfarbstoffe geeignete eine oder zwei

–NH–Gruppen
|
R

tragende Disazofarbstoffe können erhalten werden, indem man auf eine zweimal ankuppelbare Kupplungskomponente entweder 2 Molanteile eines eine

N–Acyl–Gruppe
|
R

tragende diazotierten Amins, beispielsweise eines Acylderivats eines der Amine der Liste 2 oder 1 Molanteil eines dieser diazotierten Amine und 1 Molanteil eines keine

–N–Acyl–Gruppe
|
R

tragenden diazotierten Amins, beispielsweise eines der Amine der Liste 1, kuppelt und die erhaltenen Farbstoffe anschliessend verseift. Im Falle der Verwendung von 2 Molanteilen der eine

–N–Acyl–Gruppe
|
R

tragenden Amine können 2 Molanteile desselben Amins oder je 1 Molanteil zweier verschiedener Amine eingesetzt werden.

Geeignete zweimal ankuppelbare Kupplungskomponenten sind z.B.
1-Amino-8-naphthol-3,6- oder 4,6-disulfonsäure, Resorcin oder
5,5′-Dihydroxy-7,7′-disulfo-2,2′-dinaphthylharnstoff.

Die Farbstoffe der Formel III können in völliger Analogie zu den oben beschriebenen Herstellungsmöglichkeiten erhalten werden, wenn man anstelle der in den Listen 2, 3 und 5 angegebenen Diazo- bzw. Kupplungskomponenten Verbindungen einsetzt, die anstelle der

–NH– bzw. –N–Acyl–Gruppe
| |
R R

eine Nitrogruppe enthalten und die Nitrogruppe der aus diesen Komponenten aufgebauten Azoverbindungen zur Aminogruppe reduziert. Die Bedingungen dieser Reduktion sind an sich bekannt. Ein für diesen Zweck bekanntes Reduktionsmittel ist Alkalisulfid, das in wässrigem Medium bei Temperaturen von 40° bis 70 °C die Nitrogruppe reduziert, ohne die Azogruppe anzugreifen.

Beispiele für die Reste F besonders wertvoller, zur Herstellung erfindungsgemässer Farbstoffe geeigneter Mono- und Disazofarbstoffe werden durch die folgenden Formeln wiedergegeben, wobei die Benzol- und Naphthalinkerne nach den für D, M und K gegebenen Erläuterungen substituiert sein können, und die Stellung des Restes der Formel IIIa durch die offene Bindung angegeben ist:

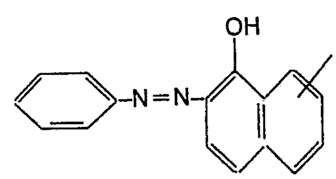

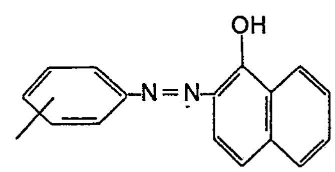

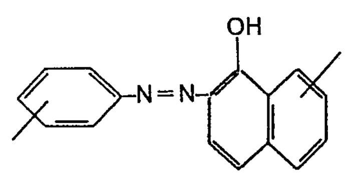

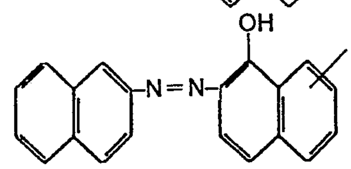

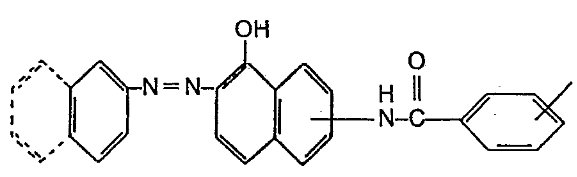

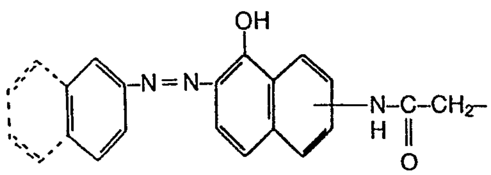

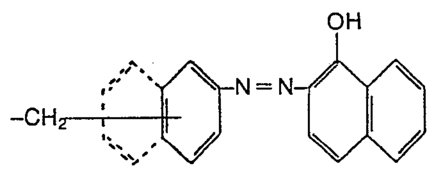

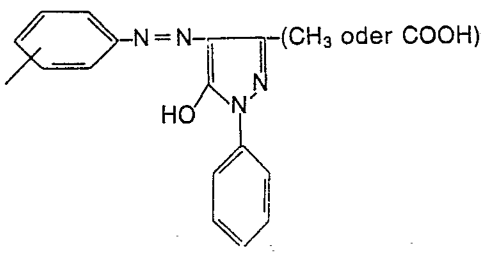

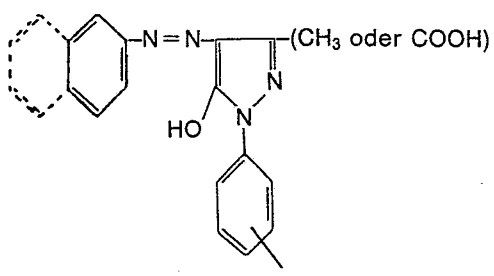

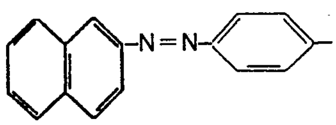

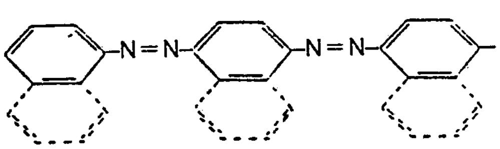

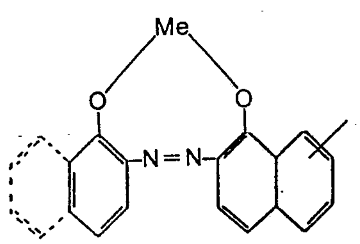

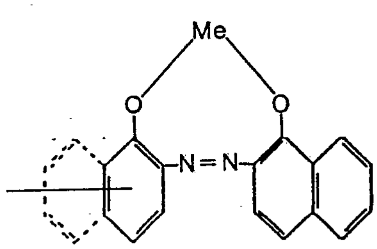

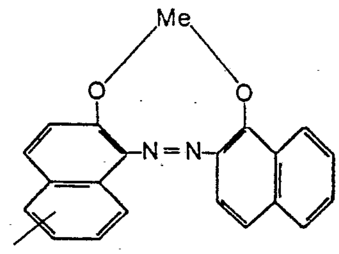

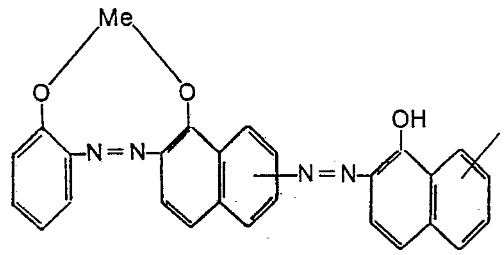

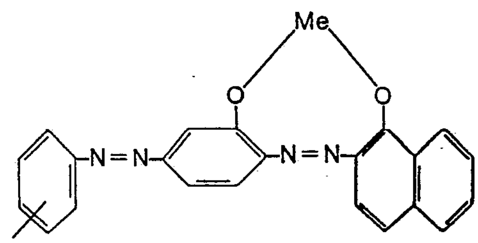

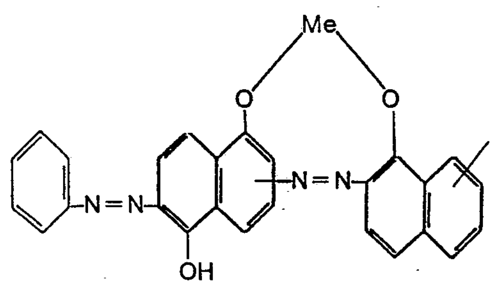

Beispiele für Diazokomponenten, aus denen sich besonders wertvolle Monoazofarbstoffe der Formel III herstellen lassen, sind:
Anilin-2-sulfonsäure;
Anilin-2,5-disulfonsäure;
2-Naphthylamin-1-sulfonsäure;
2-Naphthylamin-1,5-disulfonsäure;
2-Naphthylamin-4,8-disulfonsäure;
2-Naphthylamin-3,6,8-trisulfonsäure;
2-Naphthylamin-4,6,8-trisulfonsäure.

Beispiele für Kupplungskomponenten, aus denen sich besonders wertvolle Monoazofarbstoffe herstellen lassen, sind:
1-Amino-8-naphthol-3,6-disulfonsäure;
1-Amino-8-naphthol-4,6-disulfonsäure;
2-Amino-5-naphthol-7-sulfonsäure;
1-(4-Amino-2-sulfophenyl)-3-carboxypyrazolon-5;
1-(5-Amino-2-sulfophenyl)-3-carboxypyrazolon-5;
Anilin; N-Methylanilin; 3-Amino-toluol;
3-Amino-acetanilid; 3-Aminophenylharnstoff.

Beispiele für besonders wertvolle Monoazofarbstoffe der Formel III sind:

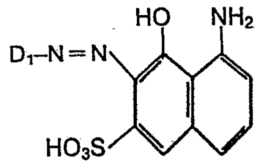

worin $D_1$ der 2-Sulfophenyl-, der 1-Sulfo-2-naphthyl- oder der 1,5-Disulfo-2-naphthylrest ist und die Kupplungskomponente durch eine weitere Sulfonsäuregruppe in 3- oder 4-Stellung substituiert ist.

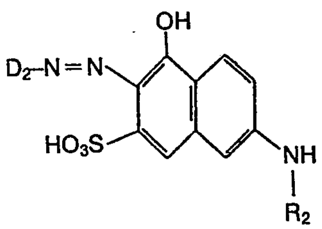

wobei $D_2$ der 2-Sulfophenyl-, der 2,5-Disulfophenyl- oder der 1,5-Disulfo-2-naphthylrest ist, die Kupplungskomponente keine weiteren Substituenten trägt und $R_2$ für Wasserstoff oder Methyl steht.

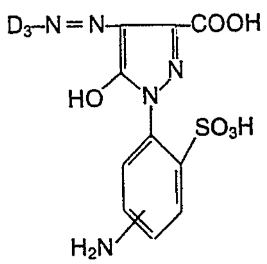

worin $D_3$ der 2-Sulfophenyl- oder der 1-Sulfo-2-naphthylrest ist und die Aminogruppe im 2-Sulfophenylkern der Kupplungskomponente in 4- oder 5-Stellung steht.

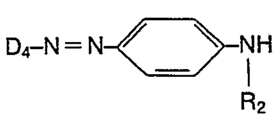

worin $D_4$ der 2,5-Disulfophenyl-, der 4,8-Disulfo-2-naphthyl-, der 3,6,8-Trisulfo-2-naphthyl- oder der 4,6,8-Trisulfo-2-naphthylrest ist, die Kupplungskomponente in o-Stellung zur Azogruppe durch eine Methylgruppe, eine Acetaminogruppe oder den Harnstoffrest substituiert sein kann und $R_2$ für Wasserstoff oder Methyl steht.

Beispiele für einzelne Farbstoffe der Formel III, in denen F ein Rest eines Mono- oder Disazofarbstoffs ist, sind:

1-(3'-Aminobenzoylamino)-8-hydroxy-7-(2'-sulfophenylazo)-naphthalin-3,6-disulfonsäure,
1-(4'-Aminobenzoylamino)-8-hydroxy-7,2'-azonaphthalin-1',3,5',6-tetrasulfonsäure,
1-Amino-8-hydroxy-7,2'-azonaphthalin-1',4,6-trisulfonsäure,
1-(Aminoacetylamino)-8-hydroxy-7,2'-azonaphthalin-1',3,5'-6-tetrasulfonsäure,
2-Methylamino-5-hydroxy-6,2'-azonaphthalin-1',5',7-trisulfonsäure,
2-Amino-8-hydroxy-7,2'-azonaphthalin-1',6-disulfonsäure,
2-Methylamino-8-hydroxy-7,2'-azonaphthalin-1',6,5'-trisulfonsäure,
2-Amino-5-hydroxy-6-(2',5'-disulfophenylazo)-naphthalin-7-sulfonsäure,
2-Methylamino-5-hydroxy-6-(4'-methoxy-2'-sulfophenylazo)-naphthalin-7-sulfonsäure,
1-Amino-8-hydroxy-7-(2'-sulfophenylazo)-naphthalin-3,6-disulfonsäure,
1-Amino-8-hydroxy-7-(4'-chlor-2'-sulfophenylazo)-naphthalin-4,6-disulfonsäure,
2-(4'-Amino-2'-methylphenylazo)-naphthalin-4,8-disulfonsäure,
2-(4'-Amino-2'-methylphenylazo)-naphthalin-4,6,8-trisulfonsäure,
2-(4'-Amino-2'-acetylaminophenylazo)-naphthalin-5,7-disulfonsäure,
2-(4'-Amino-2'-acetylaminophenylazo)-naphthalin-3,6,8-trisulfonsäure,
4-Nitro-4'-(4''-methylaminophenylazo)-stilben-2,2'-disulfonsäure,
4-Nitro-4'-(4''-amino-2''-methyl-5''-methoxyphenylazo)-stilben-2,2'-disulfonsäure,

1-(2',5'-Dichlor-4'-sulfophenyl)-3-methyl-4-(3''-amino-6''-sulfophenylazo)-5-pyrazolon,
1-(4'-Sulfophenyl)-3-carboxy-4-(4''-amino-2''-sulfophenylazo)-5-pyrazolon,
1-(2'-Methylphenyl)-3-methyl-4-(4''-amino-2'',5''-disulfophenylazo)-5-pyrazolon,
1-(2'-Sulfophenyl)-3-methyl-4-(3''-amino-6''-sulfophenylazo)-5-pyrazolon,
2-(3'-Sulfophenylamino)-5-hydroxy-6-(4'-amino-2'-sulfophenylazo)-naphthalin-7-sulfonsäure,
1-(3'-Aminophenyl)-3-methyl-4-(2'',5''-disulfophenylazo)-5-pyrazolon,
1-(3'-Amino-6'-sulfophenyl)-3-carboxy-4-(2'-sulfophenylazo)-5-pyrazolon,
1-(4'-Amino-2'-sulfophenyl-3-carboxy-4-(2'-sulfophenylazo)-5-pyrazolon,
1-(4'-Amino-2'-sulfophenyl)-3-carboxy-4-[4''-(2''',5'''-disulfophenylazo)-2''-methoxy-5''-methylphenylazo]-5-pyrazolon,

der Kupferkomplex von 1-Amino-8-hydroxy-7-(2'-hydroxy-5'-sulfophenylazo)-naphthalin-3,6-disulfonsäure,
der Kupferkomplex von 2-Amino-5-hydroxy-6-(2'-hydroxy-3'-sulfo-5'-nitrophenylazo)-naphthalin-7-sulfonsäure,
der Kupferkomplex von 2-Amino-5-hydroxy-6-(2'-hydroxy-5'-sulfophenylazo)-naphthalin-1,7-disulfonsäure,
der Kupferkomplex von 1-Amino-8-hydroxy-7-(2'-hydroxy-3'-chlor-5'-sulfophenylazo)-naphthalin-3,6-disulfonsäure,
der Kupferkomplex von 2-Methylamino-5-hydroxy-6-(2'-carboxy-5'-sulfophenylazo)-naphthalin-7-sulfonsäure,

4,4′-Bis-(1″-amino-8″-hydroxy-3″,6″-disulfo-7″-naphthylazo)-3,3′-dimethoxydiphenyl,
2-Amino-5-hydroxy-6-[4′-(2″-sulfophenylazo)-2′-methoxy-5′-methylphenylazo]-naphthalin-1,7-disulfonsäure,
1-Amino-8-hydroxy-2-(2′,5′-disulfophenylazo)-7-(3′-amino-6′-sulfophenylazo)-naphthalin-3,6-disulfonsäure,
der Kupferkomplex von 1-Amino-8-hydroxy-7-[4′-(2″-sulfophenylazo)-2′-hydroxy-5′-methylphenylazo]-naphthalin-3,6-disulfonsäure,
der Kupferkomplex von 2-Amino-5-hydroxy-6-[4′-(2″,5″-disulfophenylazo)-2′-hydroxy-5′-methylphenylazo]-naphthalin-7-sulfonsäure,
der Kupferkomplex von 1-(4′-Amino-2′-sulfophenyl)-3-carboxy-4-[4″-(2‴,5‴-disulfophenylazo)-2″-hydroxy-5″-methylphenylazo]-5-pyrazolon,
der Kupferkomplex von 2-(4′-Amino-3′-sulfoanilino)-5-hydroxy-6-(2″-carboxyphenylazo)-naphthalin-7-sulfonsäure,
der 2 : 1-Chromkomplex von 2-Amino-6′-nitro-8,2′-dihydroxy-7,1′-azonaphthalin-6,4′-disulfonsäure,
der 2 : 1-Chromkomplex von 2-Amino-5-hydroxy-6-(2′-carboxyphenylazo)-naphthalin-7-sulfonsäure,
der 2 : 1-Chromkomplex von 1-Amino-8-hydroxy-7-(4′-nitro-2′-hydroxyphenylazo)-naphthalin-3,6-disulfonsäure,
der 2 : 1-Kobaltkomplex von 2-(4′-Amino-3′-sulfoanilino)-5-hydroxy-6-(5″-chlor-2″-hydroxyphenylazo)-naphthalin-7-sulfonsäure,
der Kupferkomplex von 2-Amino-6′-nitro-2′,8-dihydroxy-1′,7-azonaphthalin-4′,6-disulfonsäure,
der Kupferkomplex von 1,6′-Diamino-2′,8-dihydroxy-1′,7-azonaphthalin-2,4,4′-trisulfonsäure,
der Kupferkomplex von 6′-Amino-1′,2-dihydroxy-1,2′-azonaphthalin-3,4′,6,8′-tetrasulfonsäure,
der Kupferkomplex von 1-Amino-1′,8-dihydroxy-2′,7-azonaphthalin-3,4′,6,8′-tetrasulfonsäure.

Ein weiterer Weg zur Herstellung erfindungsgemässer Farbstoffe besteht darin, dass Mono- oder Disazofarbstoffe oder gegebenenfalls deren Metallkomplexe der Formel V

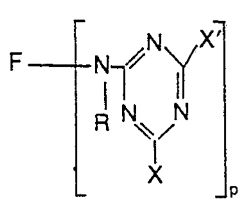

(V)

worin F ein Rest einer der oben angegebenen Formeln VIa bis VIc ist und X und X′ die oben angegebenen Bedeutungen haben, durch Einsatz von Diazo- und Kupplungskomponenten, von denen eine, gegebenenfalls aber auch beide eine Gruppe der Formel Va

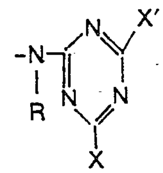

(Va)

enthalten, direkt hergestellt und anschliessend, wie oben beschrieben, mit einem Amin der Formel IIa oder II′a umgesetzt werden.

Die hierfür erforderlichen Ausgangsmaterialien werden erhalten durch Umsetzung von Diazo- bzw. Kupplungskomponenten, die einen Rest der Formel

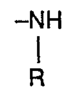

enthalten, mit Acylierungsmitteln der Formel IV.

Diazokomponenten zur direkten Herstellung von Azofarbstoffen der Formel V, in denen F ein Rest der Formel VIb oder VIc ist, sind beispielsweise durch Acylierung der

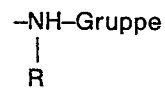

eines in der Liste 2 aufgeführten aromatischen Amins mit einem Acylierungsmittel der Formel IV zu erhalten.

Kupplungskomponenten zur direkten Herstellung von Azofarbstoffen der Formel V, in denen F ein Rest der Formel VIa oder VIc ist, sind beispielsweise durch Acylierung der

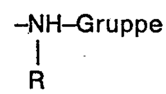

einer der in der Liste 5 genannten Kupplungskomponenten mit einem Acylierungsmittel der Formel IV zu erhalten.

Beispiele für komplexbildende Metalle, die in für F stehenden Resten metallhaltiger Mono- oder Disazofarbstoffe enthalten sein können, sind Chrom, Mangan, Kobalt, Nickel und Kupfer. Bevorzugt sind Kupfer, Chrom und Kobalt.

Eine weitere wichtige Gruppe von Farbstoffen der allgemeinen Formel III sind solche, in denen F der Rest eines Derivats des 1-Amino- oder 1-Anilinoanthrachinons, insbesondere der Rest eines 4-Phenylamino-1-amino-anthrachinon-2-sulfonsäurederivats ist. Geeignete Aminoanthrachinone enthalten 2 bis 3, vorzugsweise 2 Aminogruppen, die auch durch Alkyl oder Aryl substituiert sein können.

Alkylreste haben insbesondere 1 bis 4, vorzugsweise 1 bis 2 C-Atome, als Arylrest ist Phenyl bevorzugt. Die Derivate des Aminoanthrachinons können 1 oder 2 Sulfonsäuregruppen direkt im Anthrachinonkern und eine oder zwei Sulfonsäuregruppen in eventuell vorhandenen aromatischen Substituenten des Anthrachinonkerns enthalten. Die Gruppe

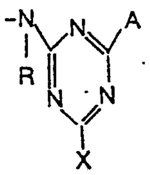

kann direkt an den Anthrachinonkern, vorzugsweise aber an einen Substituenten des Anthrachinonkerns gebunden sein.

Bei einer bevorzugten Gruppe erfindungsgemässer Anthrachinonfarbstoffe der Formel I steht F für einen Rest der Formel VII

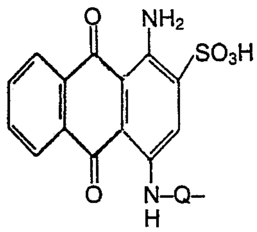

(VII)

in der der Anthrachinonkern durch eine weitere Sulfonsäuregruppe substituiert sein kann. Q steht für einen Phenylenrest, der einen Rest der allgemeinen Formel IIIa trägt. Der Phenylenrest Q kann durch eine Sulfonsäure- oder Carbonsäuregruppe substituiert sein, so dass der Farbstoff mindestens zwei stark wasserlöslich machende Gruppen enthält. Weiter kann der Phenylenrest durch eine Alkoxygruppe mit 1–3 C-Atomen, durch ein Halogenatom oder durch 1 bis 3 Alkylgruppen mit 1–3 C-Atomen substituiert sein.

Die bevorzugten Anthrachinonfarbstoffe der allgemeinen Formel III, in denen F ein Rest der Formel VII ist, werden hergestellt durch Kondensation eines Diamins der allgemeinen Formel

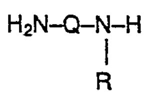

oder dessen Monoacylderivat

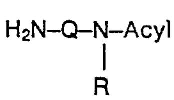

mit einem Anthrachinonderivat, das in 4-Stellung einen reaktiven Substituenten, beispielsweise ein Br-Atom, enthält. Acyl hat hierbei die oben angegebenen Bedeutungen, insbesondere die als bevorzugt charakterisierten.

Geeignete Diamine der Formel

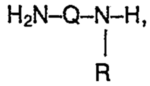

die auch in Form ihrer Acylderivate eingesetzt werden können, sind beispielsweise:
2,4-Diaminobenzolsulfonsäure,
2,4-Diaminotoluol-6-sulfonsäure,
2,6-Diaminotoluol-4-sulfonsäure,
3,5-Diamino-2,4,6-trimethylbenzolsulfonsäure,
p-Phenylendiamin,
2,5-Diaminobenzol-carbonsäure,
2,5-Diaminobenzol-sulfonsäure,
2,4-Diaminobenzol-carbonsäure.

Beispiele für Farbstoffe der Formel III, in denen F der Rest eines 1-Amino-anthrachinons ist, sind
1-Amino-4-(3′-amino-4′-sulfoanilino)-anthrachinon-2-sulfonsäure,
1-Amino-4-(3-amino-2′,4′,6′-trimethyl-4′-sulfoanilino)-anthrachinon-2-sulfonsäure,
1-Amino-4-(4′-amino-3′-sulfoanilino)-anthrachinon-2,5-disulfonsäure,
1-Amino-5,8-bis-(4′-methyl-2′-sulfoanilino)-anthrachinon.

Eine weitere wichtige Gruppe von Farbstoffen der allgemeinen Formel III sind solche, in denen F für den Rest eines Sulfophthalocyaninfarbstoffs, insbesondere eines im Phthalocyaninkern mindestens 2 Sulfonsäuregruppen tragenden Derivats des Phthalocyaninsulfanilids oder -sulfalkylamids mit 2–6 C-Atomen in der Alkylkette steht.

Eine bevorzugte Gruppe von Phthalocyaninfarbstoffen der allgemeinen Formel III sind solche, in denen F für einen Rest der Formel VIII steht,

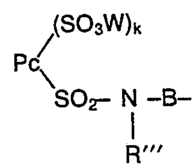

(VIII),

worin Pc den Rest eines metallhaltigen oder metallfreien Phthalocyaninkerns, vorzugsweise des Kupfer- oder Nickelphthalocyanins,

W –OH und/oder –NR′R″, wobei R′, R″ und R‴ unabhängig voneinander für Wasserstoff oder Alkyl mit 1–4 C-Atomen stehen,

k die Zahlen 1 bis 3 und

B einen gegebenenfalls durch Halogen, 1 bis 3 Alkylgruppen mit 1–2 C-Atomen oder durch eine oder zwei Sulfonsäure- oder Carbonsäuregruppen substituierten Phenylrest oder einen Alkylrest mit 2–6 C-Atomen bedeutet.

Bevorzugt ist B der durch eine Sulfonsäuregruppe substituierte Phenylrest sowie Äthylen.

Die Farbstoffe der Formel III, in denen F für einen Rest der Formel VIII steht, werden in an sich bekannter Weise durch Kondensation eines Sulfochlorids der Formel

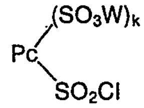

worin Pc, W und k die oben angegebenen Bedeutungen haben, mit einem Diamin der allgemeinen Formel

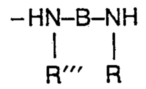

bzw. seinem Monoacylderivat

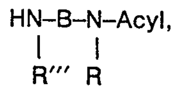

wobei Acyl die obengenannten Bedeutungen, insbesondere die als bevorzugt charakterisierten, hat.

Diamine der Formel

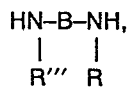

die sich zur Herstellung der bevorzugten Phthalocyaninfarbstoffe der Formel III eignen, sind beispielsweise:
m-Phenylendiamin, p-Phenylendiamin,
2,4-Diaminobenzolsulfonsäure,
2,5-Diaminobenzolsulfonsäure,
2,5-Diaminobenzolcarbonsäure,
2,5-Diaminobenzol-1,4-disulfonsäure,
2,4-Diaminotoluol-6-sulfonsäure,
Äthylendiamin, Hexamethylendiamin.

Beispiele für Farbstoffe der Formel III, in denen F der Rest eines N-substituierten Phthalocyaninsulfonamids ist, sind
3-[N-(3-Amino-4-sulfophenyl)-sulfamyl]-kupferphthalocyanin-3',3'',3'''-trisulfonsäure,
Bis-4,4'-[N-3'-amino-4'-sulfophenyl)-sulfamyl]-kupferphthalocyanin-4'',4'''-disulfonsäure,
3-[N-(4-Amino-3-sulfophenyl)-sulfamyl]-nickelphthalocyanin-3',3'',3'''-trisulfonsäure,
3-[N-(3-Aminophenyl)-sulfamyl]-3'-sulfamylkupferphthalocyanin-3'',3'''-disulfonsäure,
3-(N-β-Aminoäthyl-sulfamyl)-kupferphthalocyanin-3',3'',3'''-trisulfonsäure.

Die erfindungsgemässen Reaktivfarbstoffe der Formel I sind hervorragend geeignet zum Färben und Bedrucken von Zellulose und zellulosehaltigen Materialien. Sie zeichnen sich insbesondere bei Druckverfahren durch eine gleichmässig hohe Fixierausbeute unabhängig von der Art der Fixierung aus, z.B. bei Fixierung durch Dämpfen oder Trockenhitze oder ein- bzw. zweiphasige Verfahren. Auch bei den verschiedenen Färbeverfahren werden sehr gute Ergebnisse erhalten, z.B. bei Ausziehverfahren oder Klotz-Aufdock-Verfahren bzw. Klotz-Thermofixier-Verfahren. Die erhaltenen Färbungen und Drucke sind von hoher Brillanz und Farbstärke bei sehr guten Lichtechtheiten, auch in nassem Zustand, sehr guten Nassechtheiten, wie Wäsche 60° und 95 °C, sowie guten Gebrauchsechtheiten, wie Seewasserechtheit, Schweissechtheit sauer und alkalisch, Chlorbadewasserechtheit, Peroxidechtheit und Abgasechtheit. Ferner zeichnen sich die Farbstoffe durch Unempfindlichkeit gegen atmosphärische Einflüsse aus.

Sehr gute Ergebnisse werden auch bei der Anwendung nach Reaktivfärbeverfahren auf Polyamiden, insbesondere Wolle, erhalten. Hier sind neben sehr guter Lichtechtheit insbesondere die hervorragenden Wasch- und Schweissechtheiten hervorzuheben, sowie das ausgezeichnete Aufbauvermögen.

Die in den folgenden Beispielen angegebenen Temperaturen beziehen sich auf °C, Teile sind Gewichtsteile und Prozente Gewichtsprozente.

Beispiel 1

31,9 Teile
1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 32 Teilen

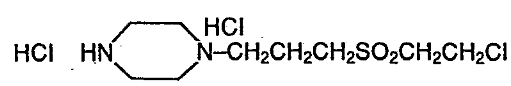

in 100 ml Wasser wird der pH der Reaktionsmischung durch ständige Zugabe von 2n Natriumhydroxydlösung zuerst kurze Zeit schwach kongosauer und dann bei 5–6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 30,3 Teilen diazotiertem 2-Amino-1,5-disulfonsäurenaphthalin gekuppelt. Nach vollständiger Kupplungsreaktion bei pH 8 wird die Reaktionsmischung geklärt und der gebildete Reaktivfarbstoff der Formel

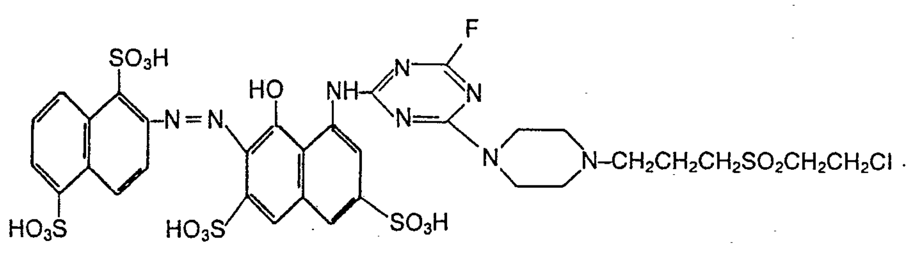

durch Eindampfen oder Gefriertrocknen der Reaktionslösung bei pH 7 isoliert. Er färbt Baumwolle in roten Tönen.

Beispiel 2

31,9 Teile
1-Amino-8-hydroxynaphthalin-3,6-disulfonsäure

werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusastz einer auf pH 5 gestellten Mischung von 31 Teilen

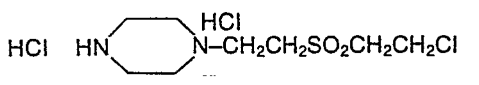

in 100 ml Wasser wird der pH der Reaktionsmischung durch ständige Zugabe von 2n Natriumhydroxydlösung zuerst kurze Zeit schwach kongosauer und dann bei 5–6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 30,3 Teilen diazotiertem 2-Amino-1,5-disulfonsäurenaphthalin gekuppelt. Nach vollständiger Kupplungsreaktion bei pH 8 wird die Reaktionsmischung geklärt und der gebildete Reaktivfarbstoff der Formel

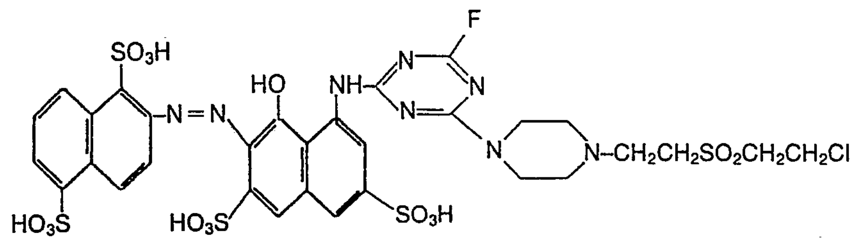

durch Eindampfen oder Gefriertrocknen der Reaktionslösung bei pH 7 isoliert. Er färbt Baumwolle in roten Tönen.

Beispiel 3

31,9 Teile 1-Amino-8-hydroxynaphthalin-3,6-disulfonsäure werden in 800 ml Wasser neutral gelöst und die Lösung auf 0° bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxydlösung schwach kongosauer gehalten wird. Nach Zusatz einer auf pH 5 gestellten Mischung von 26 Teilen

$HClH_2NCH_2CH_2OCH_2CH_2SO_2CH_2CH_2Cl$

in 100 ml Wasser wird der pH der Reaktionsmischung durch ständige Zugabe von 2n Natriumhydroxydlösung zuerst kurze Zeit schwach kongosauer und dann bei 5–6 gehalten. Dabei wird die Temperatur innert 2 bis 3 Stunden auf 20° bis 25° erhöht. Nach vollständiger Reaktion wird dieses Zwischenprodukt bei 0° bis 10° und pH 6,5 mit 30,3 Teilen diazotiertem 2-Amino-1,5-disulfonsäurenaphthalin gekuppelt. Nach vollständiger Kupplungsreaktion bei pH 8 wird die Reaktionsmischung geklärt und der gebildete Reaktivfarbstoff der Formel

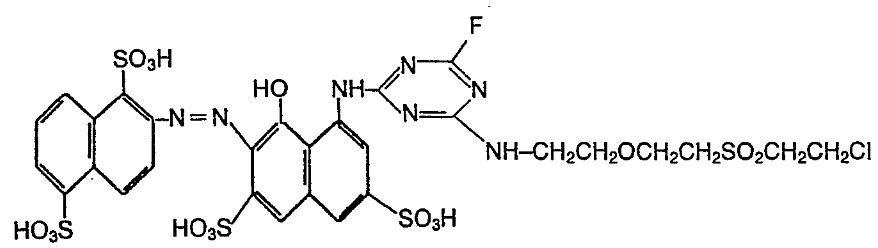

durch Eindampfen oder Gefriertrocknen der Reaktionslösung bei pH 7 isoliert. Er färbt Baumwolle in roten Tönen.

Beispiel 4

a) In eine Suspension von 255,2 Teilen 1-Amino-8-naphthol-4,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5 °C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7–6,8 von 224,8 Teilen 4-β-Sulfatoäthylsulfonylanilin in 640 Teilen Wasser werden mit 105 Volumenteilen einer 40%igen wässrigen Natriumnitritlösung versetzt. Dieses Gemisch lässt man unter gutem Rühren in eine Mischung aus 800 Teilen zerkleinertem Eis und 70 Volumenteilen einer 95%igen wässrigen Schwefelsäure einfliessen. Man rührt noch eine Stunde bei einer Temperatur zwischen 0 °C und 5 °C nach und zersetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5 °C mittels Natriumbicarbonat auf einen pH-Wert von 4,0 bis 4,5 eingestellt und die Temperatur auf 15 bis 20 °C erhöht. Es wird noch einige Stunden bei diesem pH-Wert und

dieser Temperatur weitergerührt, bis die Kupplung beendet ist.

d) Die Lösung der Monoazoverbindung von c) wird mit einer Lösung mit einem pH-Wert von 5,5 bis 6,0 von 240 Teilen
HCl $H_2NCH_2CH_2OCH_2CH_2SO_2CH_2CH_2Cl$
in 640 Teilen Wasser vereinigt. Der pH-Wert wird auf etwa 6 gehalten und das Reaktionsgemisch im Verlaufe von zwei Stunden auf eine Temperatur von 60 bis 65 °C erwärmt. Sodann wird der pH mittels Natriumbicarbonat auf einen Wert zwischen 6,5 und 7,0 erhöht, und das Filtrat sprühgetrocknet.

Es werden etwa 1100 Teile natriumchloridhaltiges Pulver der Formel

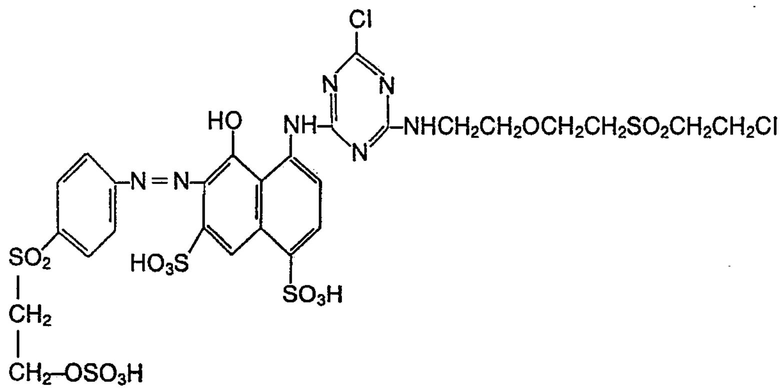

erhalten. Es färbt Baumwolle in roten Tönen.

Beispiel 5

a) In eine Suspension von 255,2 Teilen 1-Amino-8-naphthol-3,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5 °C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7–6,8 von 224,8 Teilen 4-β-Sulfatoäthylsulfonylanilin in 640 Teilen Wasser werden mit 105 Volumenteilen einer 40%igen wässrigen Natriumnitritlösung versetzt. Dieses Gemisch lässt man unter gutem Rühren in eine Mischung aus 800 Teilen zerkleinertem Eis und 70 Volumenteilen einer 95%igen wässrigen Schwefelsäure einfliessen. Man rührt noch eine Stunde bei einer Temperatur zwischen 0 °C und 5 °C nach und zersetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5 °C mittels Natriumbicarbonat auf einen pH-Wert von 4,0 bis 4,5 eingestellt und die Temperatur auf 15 bis 20 °C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 240 Teilen
HCl $H_2NCH_2CH_2OCH_2CH_2SO_2CH_2CH_2Cl$
in 640 Teilen Wasser vereinigt. Der pH-Wert wird auf etwa 6 gehalten und das Reaktionsgemisch im Verlaufe von zwei Stunden auf eine Temperatur von 60 bis 65 °C erwärmt. Sodann wird der pH mittels Natriumbicarbonat auf einen Wert zwischen 6,5 und 7,0 erhöht, und das Filtrat sprühgetrocknet.

Es werden etwa 1100 Teile natriumchloridhaltiges Pulver der Formel

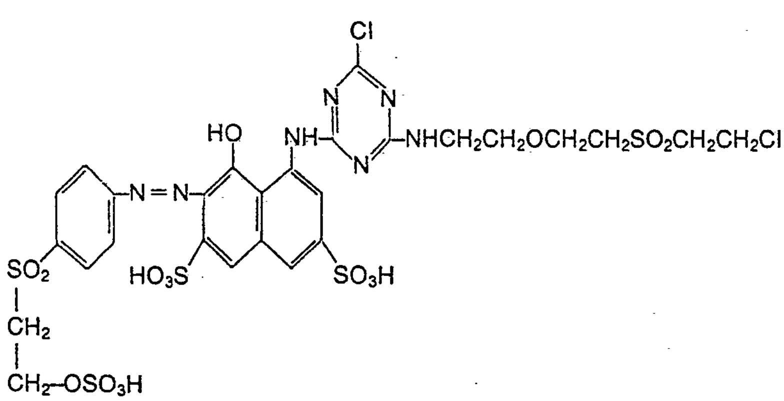

erhalten. Es färbt Baumwolle in roten Tönen.

Beispiel 6

a) In eine Suspension von 255,2 Teilen 1-Amino-8-naphthol-4,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5 °C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7–6,8 von 224,8 Teilen 4-β-Sulfatoäthylsulfonylanilin in 640 Teilen Wasser werden mit 105 Volumenteilen einer 40%igen wässrigen Natriumnitritlösung versetzt. Dieses Gemisch lässt man unter gutem Rühren in eine Mischung aus 800 Teilen zerkleinertem Eis und 70 Volumenteilen einer 95%igen wässrigen Schwefelsäure einfliessen. Man rührt noch eine Stunde bei einer Temperatur zwischen 0 °C und 5 °C nach und zersetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5 °C mittels Natriumbicarbonat auf einen pH-Wert von 4,0 bis 4,5 eingestellt und die Temperatur auf 15 bis 20 °C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 300 Teilen

HCl 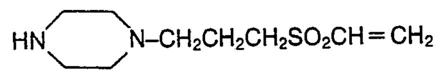

in 640 Teilen Wasser vereinigt.

Der pH-Wert wird auf etwa 6 gehalten und das Reaktionsgemisch im Verlaufe von zwei Stunden auf eine Temperatur von 60 bis 65 °C erwärmt. Sodann wird der pH mittels Natriumbicarbonat auf einen Wert zwischen 6,5 und 7,0 erhöht, und das Filtrat sprühgetrocknet.

Es werden etwa 1200 Teile natriumchloridhaltiges Pulver der Formel

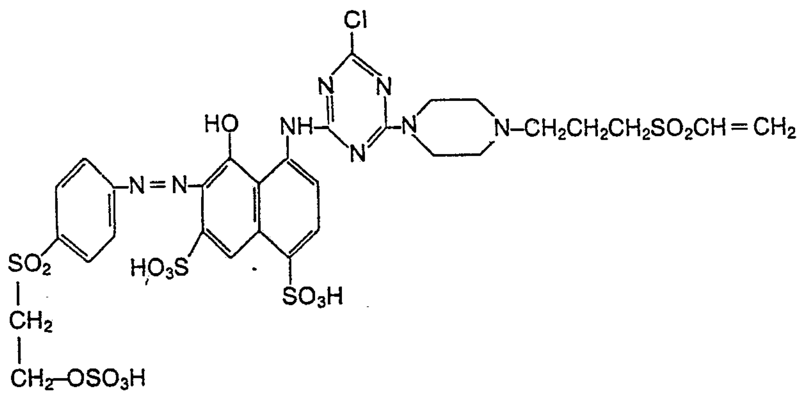

erhalten. Es färbt Baumwolle in roten Tönen.

Beispiel 7

a) In eine Suspension von 255,2 Teilen 1-Amino-8-naphthol-4,6-disulfonsäure in 1440 Teilen Wasser und 720 Teilen Eis werden unter gutem Rühren 155,2 Teile Cyanurchlorid eingetragen; der Reaktionsansatz wird noch 4 Stunden bei einer Temperatur zwischen 3 und 5 °C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt: Eine Lösung mit einem pH-Wert von 6,7–6,8 von 142,8 Teilen 4-Vinylsulfonylanilin in 600 Teilen Wasser werden mit 105 Volumenteilen einer 40%igen wässrigen Natriumnitritlösung versetzt. Dieses Gemisch lässt man unter gutem Rühren in eine Mischung aus 800 Teilen zerkleinertem Eis und 70 Volumenteilen einer 95%igen wässrigen Schwefelsäure einfliessen. Man rührt noch eine Stunde bei einer Temperatur zwischen 0 °C und 5 °C nach und zersetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5 °C mittels Natriumbicarbonat auf einen pH-Wert von 4,0 bis 4,5 eingestellt und die Temperatur auf 15 bis 20 °C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 290 Teilen

HCl 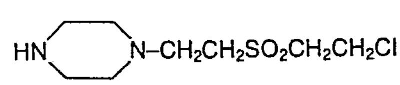

in 640 Teilen Wasser vereinigt.

Der pH-Wert wird auf etwa 6 gehalten und das Reaktionsgemisch im Verlaufe von zwei Stunden auf eine Temperatur von 60 bis 65 °C erwärmt.

Sodann wird der pH mittels Natriumbicarbonat auf einen Wert zwischen 6,5 und 7,0 erhöht, und das Filtrat sprühgetrocknet.

Es werden etwa 1000 Teile natriumchloridhaltiges Pulver der Formel

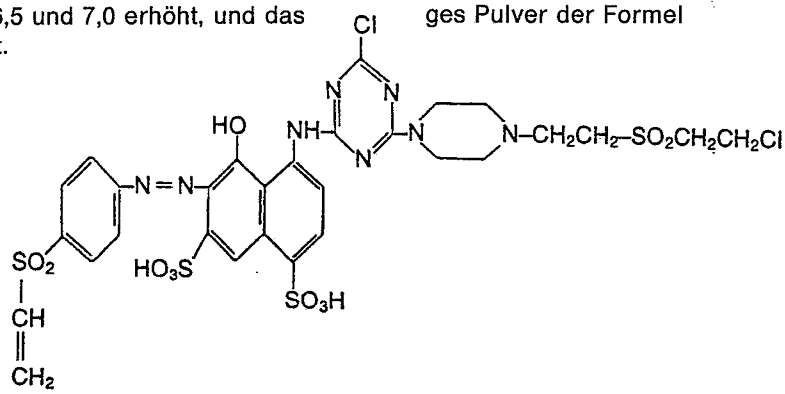

erhalten. Es färbt Baumwolle in roten Tönen.

Beispiel 8

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution

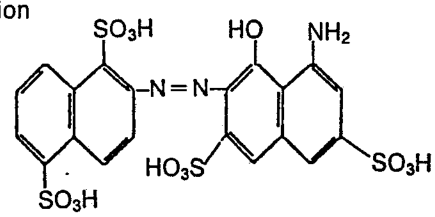

bei 0° hinzufliessen. Anschliessend werden 50 Teile 2-normale Sodalösung zugetropft, wobei sich ein pH-Wert von 6–6,5 ergibt. Nun kommen 22 Teile

HCl $H_2NCH_2CH_2-O-CH_2CH_2SO_2CH=CH_2$

als Pulver hinzu. Man erwärmt in ½ Stunde auf 40°C und hält diese Temperatur 3 Stunden. Gleichzeitig werden 100 Teile 2-normale Sodalösung bei einem pH-Wert von 6,0–6,5 zugetropft. Zur Abscheidung gibt man 20% Kaliumchlorid hinzu, lässt unter Rühren auf 20–25° abkühlen und filtriert. Man erhält etwa 235 Teile Farbstoffpaste, die bei 50–55° im Vakuum getrocknet werden. Der hergestellte Reaktivfarbstoff hat folgende Konstitution

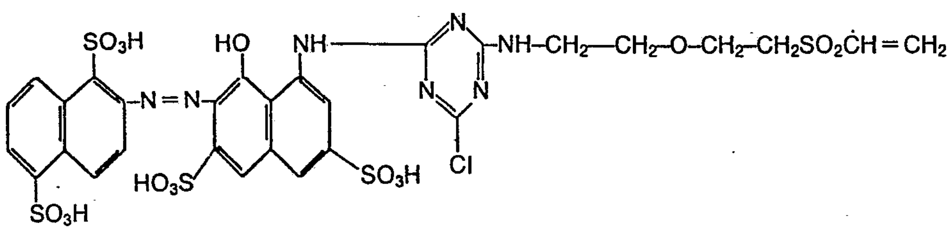

Beispiel 9

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution

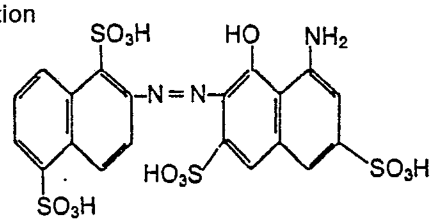

bei 0° hinzufliessen. Anschliessend werden 50 Teile 2-normale Sodalösung zugetropft, wobei sich ein pH-Wert von 6–6,5 ergibt. Nun kommen 26 Teile

HCl 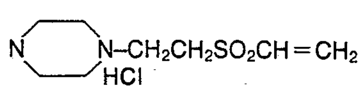

als Pulver hinzu. Man erwärmt in ½ Stunde auf 40° und hält diese Temperatur 3 Stunden. Gleichzeitig werden 100 Teile 2-normale Sodalösung bei einem pH-Wert von 4,0–6,0 zugetropft. Zur Abscheidung gibt man 20% Kaliumchlorid hinzu, lässt unter Rühren auf 20–25° abkühlen und filtriert. Man erhält etwa 235 Teile Farbstoffpaste, die bei 50–55° im Vakuum getrocknet werden. Der hergestellte Reaktivfarbstoff hat folgende Konstitution:

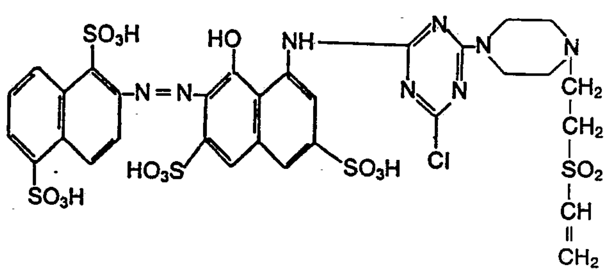

Beispiel 10

18,5 Teile Cyanurchlorid werden in 110 Teilen Aceton gelöst und unter kräftigem Rühren auf 250 Teile Eis gegeben. Dazu lässt man eine Lösung von 55,3 Teilen des Farbstoffs der folgenden Konstitution

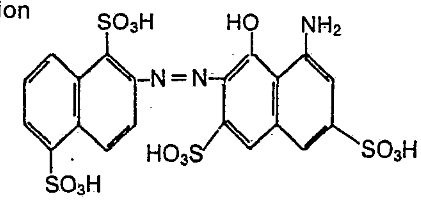

bei 0° hinzufliessen. Anschliessend werden 50 Teile 2-normale Sodalösung zugetropft, wobei sich ein pH-Wert von 6–6,5 ergibt. Nun kommen 26,5 Teile

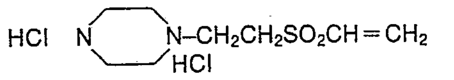

als Pulver hinzu. Man erwärmt ½ Stunde auf 40° und hält diese Temperatur 3 Stunden. Gleichzeitig werden 100 Teile 2-normale Sodalösung bei einem pH-Wert von 4,0–6,0 zugetropft. Zur Abscheidung gibt man 20% Kaliumchlorid hinzu, lässt unter Rühren auf 20–25° abkühlen und filtriert. Man erhält etwa 235 Teile Farbstoffpaste, die bei 50–55° im Vakuum getrocknet werden. Der hergestellte Reaktivfarbstoff hat folgende Konstitution:

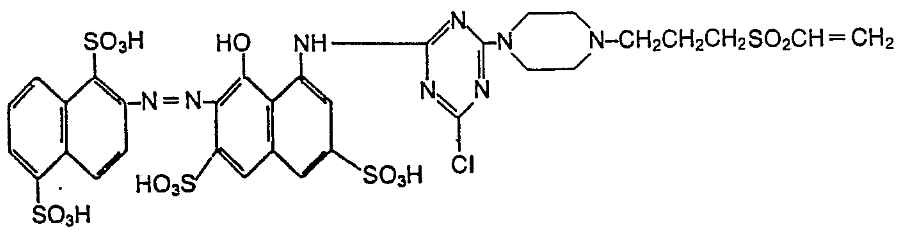

Ähnlich wertvolle Reaktivfarbstoffe erhält man auch, wenn man anstelle des oben eingesetzten Ausgangsfarbstoffes 1-Amino-8-hydroxy-2′,7-azonaphthalin-1′,3,5′,6-tetrasulfonsäure die aus den in der nachstehenden Tabelle angegebenen Diazo- und Kupplungskomponenten erhältlichen Azofarbstoffe einsetzt und im übrigen wie vorangehend beschrieben verfährt.

Diazokomponenten
2-Aminobenzol-sulfonsäure, 3-Aminobenzol-sulfonsäure, 4-Aminobenzol-sulfonsäure, 5-Chlor-2-aminobenzol-sulfonsäure, 6-Chlor-2-aminobenzol-sulfonsäure, 5-Nitro-2-aminobenzol-sulfonsäure, 4-Chlor-3-aminobenzol-sulfonsäure, 6-Chlor-3-aminobenzol-sulfonsäure, 3-Chlor-4-aminobenzol-sulfonsäure, 2-Aminotoluol-4-sulfonsäure, 2-Aminotoluol-5-sulfonsäure, 3-Aminotoluol-6-sulfonsäure, 4-Aminotoluol-2-sulfonsäure, 4-Aminotoluol-3-sulfonsäure, 5-Chlor-2-aminotoluol-3-sulfonsäure, 3-Chlor-2-aminotoluol-5-sulfonsäure, 6-Chlor-3-aminotoluol-4-sulfonsäure, 2-Chlor-4-aminotoluol-5-sulfonsäure, 2-Chlor-4-aminotoluol-6-sulfonsäure, 4-Nitro-2-aminotoluol-6-sulfonsäure, 6-Nitro-4-aminotoluol-2-sulfonsäure, 3-Amino-1,2-dimethylbenzol-4-sulfonsäure, 4-Amino-1,3-dimethylbenzol-5-sulfonsäure, 4-Amino-1,3-dimethylbenzol-6-sulfonsäure, 2-Amino-anisol-4-sulfonsäure, 4-Amino-anisol-2-sulfonsäure, 4-Amino-anisol-3-sulfonsäure, 4-Chlor-2-amino-anisol-5-sulfonsäure, 4-Amino-phenetol-2-sulfonsäure, 4-Amino-phenetol-3-sulfonsäure, 2-Amino-phenetol-4-sulfonsäure, 4-Aminobenzol-1,3-disulfonsäure, 2-Aminobenzol-1,4-disulfonsäure, 2-Aminotoluol-3,4-disulfonsäure, 2-Aminotoluol-3,5-disulfonsäure, Anilin, 4-Aminotoluol, 4-Aminoanisol, 4-Aminochlorbenzol, 2-Aminobenzol-sulfonsäure, 2-Naphthylamin-1-sulfonsäure, 2-Naphthylamino-5-sulfonsäure, 2-Naphthylamin-6-sulfonsäure, 2-Naphthylamin-7-sulfonsäure, 2-Naphthylamin-8-sulfonsäure, 2-Naphthylamin-1,7-disulfonsäure, 2-Naphthylamin-3,6-disulfonsäure, 2-Naphthylamin-3,7-disulfonsäure, 2-Naphthylamin-4,7-disulfonsäure, 2-Naphthylamin-4,8-disulfonsäure, 2-Naphthylamin-5,7-disulfonsäure, 2-Naphthylamin 6,8-disulfonsäure, 2-Naphthylamin-1,5,7-trisulfonsäure, 2-Naphthylamin-3,6,8-trisulfonsäure, 2-Naphthylamin-4,6,8-trisulfonsäure, 1-Naphthylamin-4-sulfonsäure, 1-Naphthylamin-5-sulfonsäure, 1-Naphthylamin-6-sulfonsäure, 1-Naphthylamin-7-sulfonsäure, 1-Naphthylamin-3,6-disulfonsäure, 1-Naphthylamin-3,7-disulfonsäure, 1-Naphthylamin-3,8-disulfonsäure, 1-Naphthylamin-4,6-disulfonsäure, 1-Naphthylamin-4,7-disulfonsäure, 1-Naphthylamin-4,8-disulfonsäure, 1-Naphthylamin-5,7-disulfonsäure, 1-Naphthylamin-6,8-disulfonsäure, 1-Naphthylamin-2,4,6-trisulfonsäure, 1-Naphthylamin-3,6,8-trisulfonsäure, 1-Naphthylamin-4,6,8-trisulfonsäure, 1-Amino-4-β-chloräthylsulfonylbenzol, 1-Amino-3-vinylsulfonylbenzol, 1-Amino-2-brom-4-β-sulfatoäthylsulfonylbenzol, 1-Amino-4-β-sulfatoäthylsulfonylbenzol-2-sulfonsäure, 1-Amino-3-δ-(β-chloräthylsulfonyl)-butyrylbenzol-6-sulfonsäure, 2-Amino-8-β-sulfatoäthylsulfonylnaphthalin, 2-Amino-6-β-sulfatoäthylsulfonylnaphthalin-1-sulfonsäure, 2-Amino-8-vinylsulfonylnaphthalin-6-sulfonsäure.

Kupplungskomponenten:
1-Amino-8-naphthol-4,6-disulfonsäure, 1-Amino-8-naphthol-4-sulfonsäure, 1-Amino-8-naphthol-6-sulfonsäure, 1-Amino-8-naphthol-3,5-disulfonsäure, 1-(4′-Aminobenzoylamino)-8-naphthol-3,6- oder 4,6-disulfonsäure, 1-(3′-Aminobenzoylamino)-8-naphthol-3,6- oder 4,6-disulfonsäure.

Beispiel 11

50,3 Teile des Farbstoffs
2-Amino-5-hydroxy-6-(2,5-disulfonylbenzolazo)-naphthalin-7-sulfonsäure
werden in 800 ml Wasser neutral gelöst und die Lösung auf 0° bis 5 °C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung bei 6–6,5 gehalten wird. Nach Zusatz von 21 Teilen

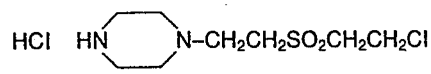

in 100 ml Wasser wird die Temperatur auf 20 bis 25 °C erhöht und der pH bei 5,5–6,5 gehalten. Reaktionsdauer ca. 2 Stunden.

Zur Abscheidung des Farbstoffes wird die neutrale Lösung mit 10% Natriumchlorid und 10% Kaliumchlorid versetzt und filtriert. Die erhaltene Paste wird im Vakuum bei 40 bis 50° getrocknet. Der so hergestellte Reaktivfarbstoff hat die folgende Konstitution:

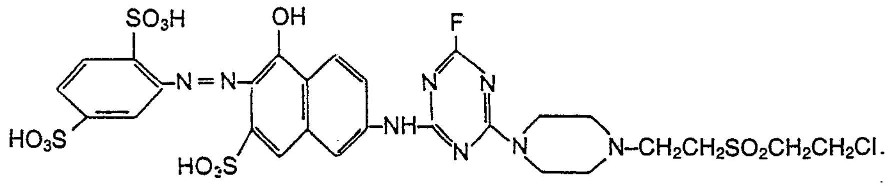

Beispiel 12

50,3 Teile des Farbstoffs 2-Amino-5-hydroxy-6-(2,5-disulfonylbenzolazo)-naphthalin-7-sulfonsäure werden in 800 ml Wasser neutral gelöst und die Lösung auf 0° bis 5 °C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung bei 6–6,5 gehalten wird. Nach Zusatz von 32 Teilen

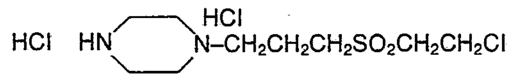

in 100 ml Wasser wird die Temperatur auf 20 bis 25 °C erhöht und der pH bei 5,5–6,5 gehalten. Reaktionsdauer ca. 2 Stunden.

Zur Abscheidung des Farbstoffs wird die neutrale Lösung mit 10% Natriumchlorid und 10% Kaliumchlorid versetzt und filtriert. Die erhaltene Paste wird im Vakuum bei 40 bis 50° getrocknet. Der so hergestellte Reaktivfarbstoff hat die folgende Konstitution:

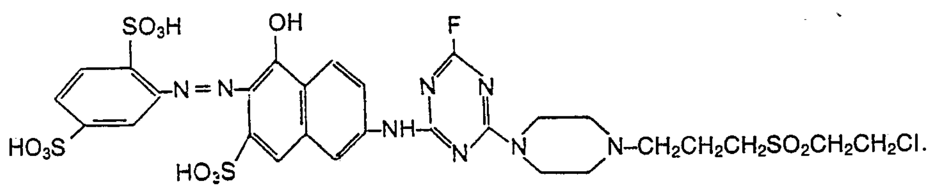

Beispiel 13

50,3 Teile des Farbstoffs 2-Amino-5-hydroxy-6-(2,5-disulfonylbenzolazo)-naphthalin-7-sulfonsäure werden in 800 ml Wassser neutral gelöst und die Lösung auf 0° bis 5 °C abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung bei 6–6,5 gehalten wird. Nach Zusatz von 26 Teilen

HCl $H_2NCH_2CH_2OCH_2CH_2SO_2CH_2CH_2Cl$

in 100 ml Wasser wird die Temperatur auf 20 bis 25 °C erhöht und der pH bei 5,5–6,5 gehalten. Reaktionsdauer ca. 2 Stunden.

Zur Abscheidung des Farbstoffes wird die neutrale Lösung mit 10% Natriumchlorid und 10% Kaliumchlorid versetzt und filtriert. Die erhaltene Paste wird im Vakuum bei 40 bis 50° getrocknet. Der so hergestellte Reaktivfarbstoff hat die folgende Konstitution:

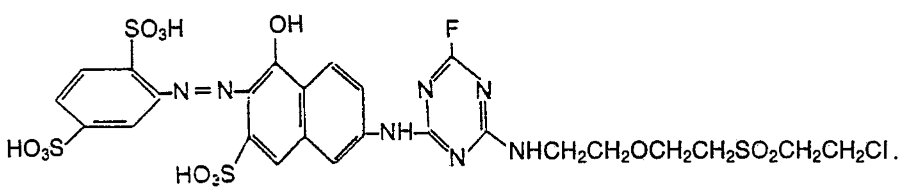

Der zur Herstellung des erfindungsgemässen Farbstoffs benötigte Ausgangsstoff

2-Amino-5-hydroxy-6-(2′,5′-disulfophenylazo)-naphthalin-7-sulfonsäure

kann wie folgt erhalten werden:

50,6 Teile 2-Amino-benzol-1,4-disulfonsäure werden in 120 Teilen Wasser neutral gelöst und wie üblich diazotiert. Hierauf lässt man die Diazoverbindung bei 0–5° zu einer Mischung von 56,2 Teilen 2-Acetamino-5-naphthol-7-sulfonsäure, welche in 300 Teilen Wasser neutral gelöst wurden, 25 Teilen Natriumhydrogencarbonat und 150 Teilen Eis hinzulaufen. Der pH-Wert beträgt zunächst 6,5 und steigt nach längerem Rühren auf 7,5–7,8. Nach Beendigung der Kupplung gibt man 60 Teile 10-normale Natronlauge hinzu und erwärmt zur Verseifung der Acetaminogruppe 2 Stunden auf 90°. Die alkalische Lösung des orangen Zwischenfarbstoffes wird mit etwa 22 Teilen 10-normaler Salzsäure neutral gestellt, mit 20% Natriumchlorid und 15% Kaliumchlorid versetzt, einige Zeit gerührt und filtriert.

Ersetzt man die 2-Amino-benzol-1,4-disulfonsäure durch molare Mengen einer der im folgenden genannten Diazokomponenten und verfährt im übrigen wie beschrieben, so erhält man ebenfalls wertvolle, erfindungsgemässe Farbstoffe:

2-Amino-benzol-sulfonsäure
3-Amino-benzol-sulfonsäure
4-Amino-benzol-sulfonsäure
2-Naphthylamin-1,5-disulfonsäure
5-Chlor-2-amino-benzol-sulfonsäure
6-Chlor-2-amino-benzol-sulfonsäure
5-Nitro-2-amino-benzol-sulfonsäure
4-Chlor-3-amino-benzol-sulfonsäure
6-Chlor-3-amino-benzol-sulfonsäure
3-Chlor-4-amino-benzol-sulfonsäure
2-Amino-toluol-4-sulfonsäure
2-Amino-toluol-5-sulfonsäure
3-Amino-toluol-6-sulfonsäure
4-Amino-toluol-2-sulfonsäure
4-Amino-toluol-3-sulfonsäure
5-Chlor-2-amino-toluol-3-sulfonsäure
3-Chlor-2-amino-toluol-5-sulfonsäure
6-Chlor-3-amino-toluol-4-sulfonsäure
2-Chlor-4-amino-toluol-5-sulfonsäure
2-Chlor-4-amino-toluol-6-sulfonsäure
4-Nitro-2-amino-toluol-6-sulfonsäure
6-Nitro-4-amino-toluol-2-sulfonsäure
3-Amino-1,2-dimethyl-benzol-4-sulfonsäure
4-Amino-1,3-dimethyl-benzol-5-sulfonsäure
4-Amino-1,3-dimethyl-benzol-6-sulfonsäure
2-Amino-anisol-4-sulfonsäure
4-Amino-anisol-2-sulfonsäure
4-Amino-anisol-3-sulfonsäure
4-Chlor-2-amino-anisol-5-sulfonsäure
4-Amino-phenetol-2-sulfonsäure
4-Amino-phenetol-3-sulfonsäure
2-Amino-phenetol-4-sulfonsäure
4-Amino-benzol-1,3-disulfonsäure
2-Amino-toluol-3,4-difulsonsäure
2-Amino-toluol-3,5-disulfonsäure
Anilin
4-Amino-toluol
4-Amino-anisol
4-Amino-chlorbenzol
2-Amino-chlorbenzol
2-Naphthylamin-1-sulfonsäure
2-Naphthylamin-5-sulfonsäure
2-Naphthylamin-6-sulfonsäure
2-Naphthylamin-7-sulfonsäure
2-Naphthylamin-8-sulfonsäure
2-Naphthylamin-1,7-disulfonsäure
2-Naphthylamin-3,6-disulfonsäure
2-Naphthylamin-3,7-disulfonsäure
2-Naphthylamin-4,7-disulfonsäure
2-Naphthylamin-5,7-disulfonsäure
2-Naphthylamin-6,8-disulfonsäure
2-Naphthylamin1,5,7-trisulfonsäure
2-Naphthylamin-3,6,8-trisulfonsäure
2-Naphthylamin-3,6,8-trisulfonsäure
2-Naphthylamin-4,6,8-trisulfonsäure.

Ersetzt man die als Kupplungskomponente zur Herstellung des Ausgangsfarbstoffs eingesetzte 2-Acetamino-5-naphthol-7-sulfonsäure durch molare Mengen der Acetylverbindung einer der im folgenden genannten Kupplungskomponenten und verfährt im übrigen wie oben beschrieben, so erhält man ebenfalls wertvolle erfindungsgemässe Farbstoffe:

2-Amino-8-naphthol-6-sulfonsäure, 2-Methylamino-8-naphthol-6-sulfonsäure, 2-Carboxymethylamino-8-naphthol-6-sulfonsäure, 2-β-Sulfoäthylamino-8-naphthol-6-sulfonsäure, 2-iso-Propylamino-8-naphthol-6-sulfonsäure, 2-Methylamino-5-naphthol-7-sulfonsäure, 2-Äthylamino-5-naphthol-7-sulfonsäure, 2-n-Butylamino-5-naphthol-7-sulfonsäure, 2-Amino-8-naphthol-4-sulfonsäure, 2-Amino-5-naphthol-4,7-disulfonsäure, 1-Amino-5-naphthol-7-sulfonsäure, 2-Amino-5-naphthol-1,7-disulfonsäure.

Beispiel 14

Ersetzt man im Beispiel 13 die 26 Teile

HCl $H_2NCH_2CH_2OCH_2CH_2SO_2CH_2CH_2Cl$

durch eine molare Menge des Hydrochlorids eines der im folgenden genannten Amine, so erhält man ebenfalls wertvolle, erfindungsgemässe Farbstoffe:

α-Carbonsäure-β-(β′-chloräthylsulfonyl)-äthylamin-hydrochlorid
α-Carbonsäureäthylester-β-(β′-chloräthylsulfonyl)-äthylamin-hydrochlorid
β-Hydroxy-γ-(β′-chloräthylsulfonyl)-propylamin-hydrochlorid.

Beispiel 15

Ersetzt man bei den Beispielen 11 bis 14 die 14,2 Teile Cyanurfluorid durch die molare Menge eines der im folgenden genannten Derivate des 1,3,5-Triazins, so erhält man ebenfalls wertvolle erfindungsgemässe Farbstoffe: Tribromtriazin, Trichlortriazin, Trisulfotriazin, Tris-methylsulfonyltriazin, Tris-äthylsulfonyltriazin, Tris-phenylsulfonyltriazin, Dichlorfluortriazin, Chlor-disulfotriazin, Chor-bis-methylsulfotriazin.

Beispiel 16

76,6 Teile 2-Naphthylamin-3,6,8-trisulfonsäure werden mit 250 Teilen Wasser neutral gelöst. Dazu kommen 50 Teile 4-normale Natriumnitritlösung. Die Mischung läuft zu einem Gemisch von 50 Teilen 10-normaler Salzsäure und 400 Teilen Eis. Zur Suspension der Diazoverbindung kommt bei 0–5° eine Lösung von 30,2 Teilen 3-Aminophenyl-harnstoff in 100 Teilen Wasser und 20 Teilen 10-normaler Salzsäure. Mit 150 Teilen 4-normaler Natriumacetatlösung wird zunächst auf einen pH-Wert von 3,5 abgestumpft und dann mit Natronlauge auf einen pH-Wert von 5,5 gebracht. Nach beendeter Kupplung wird filtriert.

54,5 Teile des so hergestellten Farbstoffes 2-(4′-Amino-2′-ureidophenylazo)-naphthalin-3,6,8-trisulfonsäure werden mit 250 Teilen Wasser neutral gelöst. Diese neutrale Lösung wird auf 0 °C abgekühlt.

Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung bei 6–6,5 gehalten wird. Nach Zugabe von 26 Teilen

HCl $H_2NCH_2CH_2OCH_2CH_2SO_2CH_2CH_2Cl$

in 100 ml Wasser wird die Temperatur auf 20° bis 25 °C erhöht und der pH bei 5,5–6,5 gehalten.

Reaktionsdauer ca. 3 Stunden.

Der entstandene Farbstoff der Formel:

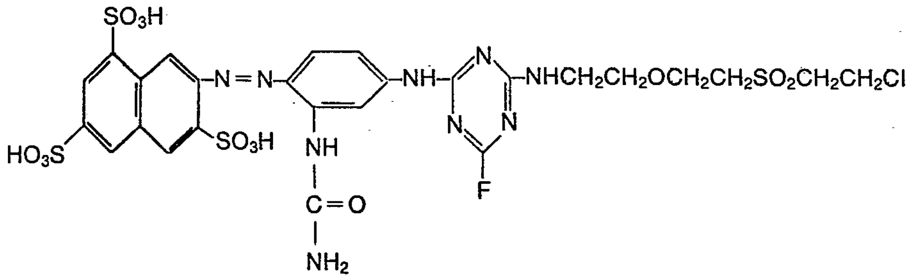

wird durch Zugabe von Kochsalz abgeschieden und im Vakuum bei 40 bis 50° getrocknet.

Beispiel 17

54,5 Teile des Farbstoffes 2-(4′-Amino-2′-ureidophenylazo)-naphthalin-3,6,8-trisulfonsäure werden mit 250 Teilen Wasser neutral gelöst. Diese neutrale Lösung gibt man zu einer wie im Beispiel 5 hergestellten Suspension von Cyanurchlorid in Aceton und Wasser. Durch Kühlung mit Eis hält man die Temperatur bei 0° bis 3°. Im Verlauf der Acylierungsreaktion werden 9 g Bicarbonat so eingetragen, dass der pH zwischen 5,5 und 7 bleibt. Wenn kein Ausgangsfarbstoff mehr im Chromatogramm nachweisbar ist, gibt man 26 Teile

HCl $H_2NCH_2CH_2OCH_2CH_2SO_2CH_2CH_2Cl$

in Form einer ca. 50%igen Paste zu und erwärmt auf 50°. Durch Zugabe von weiteren 18 g Bicarbonat hält man den pH-Wert in den Grenzen von 4,5 bis 6,0. Die Reaktion ist beendet, wenn kein weiteres Alkali mehr verbraucht wird. Der entstandene Farbstoff der Formel:

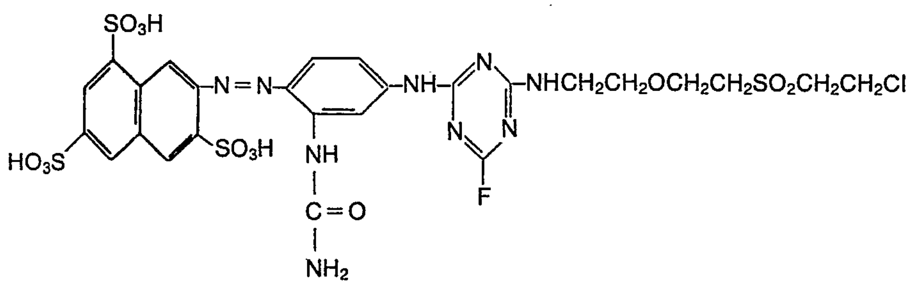

wird durch Zugabe von Kochsalz abgeschieden und im Vakuum bei 50 bis 75° getrocknet.

Ähnlich wertvolle Reaktivfarbstoffe erhält man auch, wenn man anstelle des oben eingesetzten Ausgangsfarbstoffes

2-(4′-Amino-2′-ureidophenylazo)-naphthalin-3,6,8-trisulfonsäure

die aus den in der nachstehenden Tabelle angegebenen Diazo- und Kupplungskomponenten erhältlichen Azofarbstoffe einsetzt und im übrigen wie oben beschrieben verfährt:

Diazokomponenten:
2-Naphthylamin-1,5-disulfonsäure
2-Naphthylamin-4,8-disulfonsäure
2-Naphthylamin-5,7-disulfonsäure
2-Naphthylamin-6,8-disulfonsäure
2-Naphthylamin-1,5,7-trisulfonsäure
2-Naphthylamin-4,6,8-trisulfonsäure
Anilin-2,5-disulfonsäure.

Kupplungskomponenten:
Anilin, N-Methylanilin
3-Amino-anisol, 3-Amino-toluol
2-Amino-4-acetamino-toluol
2-Amino-4-acetamino-anisol
3-Amino-acetanilid
3-Amino-4-methoxy-toluol
3-Toluidin
1-Naphthylamin-5-sulfonsäure
1-Naphthylamin-7-sulfonsäure
1-Naphthylamin-8-sulfonsäure
2-Amino-toluol
2-Amino-anisol
2,5-Dimethyl-anilin
2-Methoxy-5-methyl-anilin
2,5-Dimethoxy-anilin
o-Phenetidin
m-Phenetidin.

Beispiel 18

Ersetzt man bei den Beispielen 16 und 17 die 26 Teile HCl $H_2N(CH_2)_2O(CH_2)_2SO_2(CH_2)_2Cl$ durch eine molare Menge des Hydrochlorids eines der im folgenden genannten Amine, so erhält man ebenfalls wertvolle, erfindungsgemässe Farbstoffe:

α-Carbonsäure-β-(β′-chloräthylsulfonyl)-äthylamin-hydrochlorid

α-Carbonsäureäthylester-β-(β′-chloräthylsulfonyl)-äthylamin-hydrochlorid

β-Hydroxy-γ-(β′-chloräthylsulfonyl)-propylamin-hydrochlorid

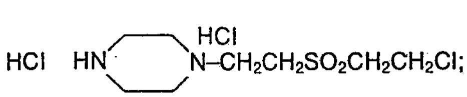 ; 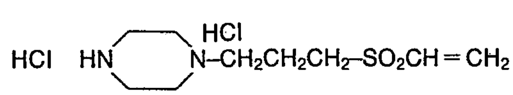 .

Beispiel 19

Ersetzt man bei den Beispielen 16 bis 18 die 18,5 Teile Cyanurchlorid oder 14,2 Teile Cyanurfluorid durch die molare Menge eines der im folgenden genannten Derivate des 1,3,5-Triazins, so erhält man ebenfalls wertvolle erfindungsgemässe Farbstoffe:

Tribromtriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Beispiel 20

72,5 Teile 1-[2′-Sulfo-4′-(4″,6″-dichlor-1″,3″,5″-triazin-2″-yl-amino)-phenyl]-4-(4‴-β-sulfatoäthylsulfonyl-phenylazo)-5-pyrazolon-3-carbonsäure
werden in Wasser bei pH 6,8–7,2 gelöst. Zu dieser Lösung gibt man bei etwa 25°
26 Teile HCl $H_2NCH_2CH_2OCH_2CH_2SO_2CH_2CH_2Cl$
und erwärmt auf 35–40°. Der pH beginnt zu fallen. Wenn er einen Wert von etwa 3,5 erreicht hat, wird er durch portionsweise Zugabe von ca. 11 g Soda in einem Bereich von 3,5–4,5 gehalten. Die Reaktion ist nach etwa 3 Stunden beendet, was man daran erkennt, dass kein weiteres Alkali mehr verbraucht wird. Die Farbstofflösung wird jetzt durch Zugabe von Dinatriumhydrogenphosphat auf 7,0 gestellt. Der erhaltene Farbstoff der Konstitution

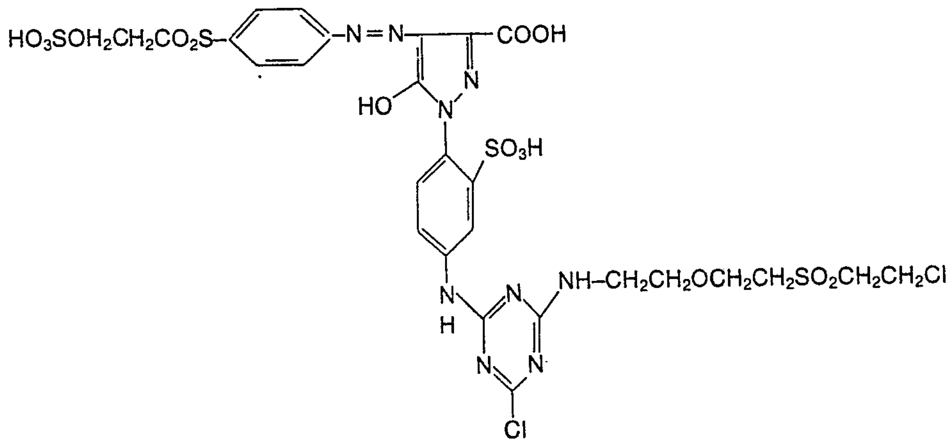

kann durch Aussalzen oder Sprühtrocknen isoliert werden.

Beispiel 21

63,1 Teile
1-[2′-Sulfo-4′-(4″,6″-dichlor-1″,3″,5″-triazin-2″-yl-amino)-phenyl]-4-(2‴-sulfophenylazo)-pyrazolon-5,
werden in Wasser bei pH 6,8–7,2 gelöst. Zu dieser Lösung gibt man bei etwa 25°
26 Teile HCl $H_2NCH_2CH_2OCH_2CH_2SO_2CH_2CH_2Cl$
und erwärmt auf 35–40°. Der pH beginnt zu fallen. Wenn er einen Wert von etwa 3,5 erreicht hat, wird er durch portionsweise Zugabe von ca. 11 g Soda in einem Bereich von 3,5–4,5 gehalten. Die Reaktion ist nach etwa 3 Stunden beendet, was man daran erkennt, dass kein weiteres Alkali mehr verbraucht wird. Die Farbstofflösung wird jetzt durch Zugabe von Dinatriumhydrogenphosphat auf 7,0 gestellt. Der erhaltene Farbstoff der Konstitution

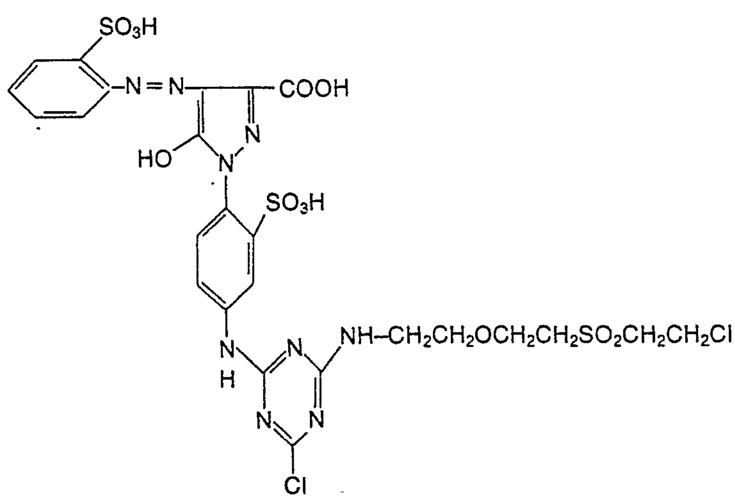

kann durch Aussalzen oder Sprühtrocknen isoliert werden.

Beispiel 22

Ersetzt man bei den Beispielen 20 und 21 die 26 Teile HCl $H_2NCH_2CH_2$–O–$CH_2CH_2SO_2CH_2CH_2Cl$ durch eine molare Menge des Hydrochlorids eines der im folgenden genannten Amine, so erhält man ebenfalls wertvolle, erfindungsgemässe Farbstoffe:

α-Carbonsäure-β-(β′-chloräthylsulfonyl)-äthylamin-hydrochlorid

α-Carbonsäureäthylester-β-(β′-chloräthylsulfonyl)-äthylamin-hydrochlorid

β-Hydroxy-γ-(β′-chloräthylsulfonyl)-propylamin-hydrochlorid

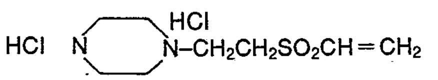 ; 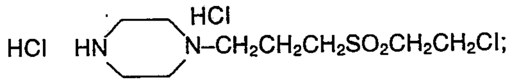

HCl $H_2N$–$CH_2CH_2$–O–$CH_2CH_2SO_2$–CH=$CH_2$.

Beispiel 23

Ersetzt man bei den Beispielen 20 bis 22 die 18,5 Teile Cyanurchlorid durch die molare Menge eines der im folgenden genannten Derivate des 1,3,5-Triazins, so erhält man ebenfalls wertvolle erfindungsgemässe Farbstoffe:

Tribromtriazin
Trifluortriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Ähnliche wertvolle, erfindungsgemässe Reaktivfarbstoffe erhält man, wenn man anstelle des oben eingesetzten Zwischenfarbstoffes die Kondensationsprodukte der aus den in der nachstehenden Tabelle angegebenen Diazo- und Kupplungskomponenten erhältlichen Azofarbstoffe mit Cyanurchlorid einsetzt und im übrigen wie oben beschrieben verfährt.

Diazokomponenten

3-Amino-benzol-sulfonsäure
4-Amino-benzol-sulfonsäure
5-Chlor-2-amino-benzol-sulfonsäure
2,5-Dichlor-4-amino-benzol-sulfonsäure
2-Amino-toluol-4-sulfonsäure
4-Amino-toluol-3-sulfonsäure
2-Amino-anisol-4-sulfonsäure
4-Amino-benzol-1,3-disulfonsäure
2-Amino-benzol-1,4-disulfonsäure
2-Amino-toluol-3,5-disulfonsäure
2-Amino-naphthalin-1,5-disulfonsäure
2-Amino-naphthalin-4,8-disulfonsäure
2-Amino-naphthalin-6,8-disulfonsäure
2-Amino-naphthalin-1-sulfonsäure
2-Amino-naphthalin-6-sulfonsäure
4-β-Äthylsulfonylanilin
3-β-Chloräthylsulfonyl-anilin
2-Methoxy-4-β-sulfatoäthylsulfonyl-anilin
2-Methoxy-5-methyl-4-β-sulfatoäthylsulfonyl-anilin
2-Brom-4-β-sulfatoäthylsulfonyl-anilin
2-Sulfo-4-β-sulfatoäthylsulfonyl-anilin
2-Methoxy-5-β-sulfatoäthylsulfonyl-anilin
2-Sulfo-5-δ-(β-chloräthylsulfonylbutyryl-aminoanilin
2-Amino-8-β-sulfatoäthylsulfonylnaphthalin-5-sulfonsäure
2-Amino-8-β-sulfatoäthylsulfonylnaphthalin
2-Amino-6-vinylsulfonylnaphthalin-1-sulfonsäure.

Kupplungskomponenten

1-(3′-Amino-6′-sulfo-phenyl)-3-methyl-5-pyrazolon
1-(4′-Amino-3′-sulfo-phenyl)-3-methyl-5-pyrazolon
1-(4′-Amino-2′-sulfo-phenyl)-3-methyl-5-pyrazolon
1-(3′-Amino-6′-sulfo-phenyl)-5-pyrazolon-3-carbonsäure
1-(4′-Amino-3′-sulfo-phenyl)-5-pyrazolon-3-carbonsäure
1-(3′-Amino-5′-sulfo-6′-methyl-phenyl)-5-pyrazolon-3-carbonsäure
1-(2′-Methyl-3′-amino-5′-sulfo-phenyl)-5-pyrazolon-3-carbonsäure
1-(2′-Methyl-3′-amino-5′-sulfo-phenyl)-3-methyl-5-pyrazolon
1-(3′-Amino-5′-sulfo-6′-methyl-phenyl)-3-methyl-5-pyrazolon
1-(4′-Amino-2′,5′-disulfo-phenyl)-5-pyrazolon-3-carbonsäure

Beispiel 24

50,3 Teile des Monoazofarbstoffes 1-(5′-Amino-2′-sulfo-phenylazo)-2-naphthol-6,8-disulfonsäure werden zuerst bei 0–5° und bei einem pH-Wert von 6–6,5 mit einer Anschlämmung von 18,5 Teilen Cyanurchlorid, welche durch Lösen des Cyanurchlorides in 100 Teilen Aceton und Ausfällen mit 250 g Eis hergestellt wurden, und dann bei 30–40° und bei einem pH-Wert von 4,0–4,5 mit 26 Teilen HCl $H_2NCH_2CH_2OCH_2CH_2SO_2CH_2CH_2Cl$ umgesetzt. Der erhaltene orange Reaktivfarbstoff der Formel

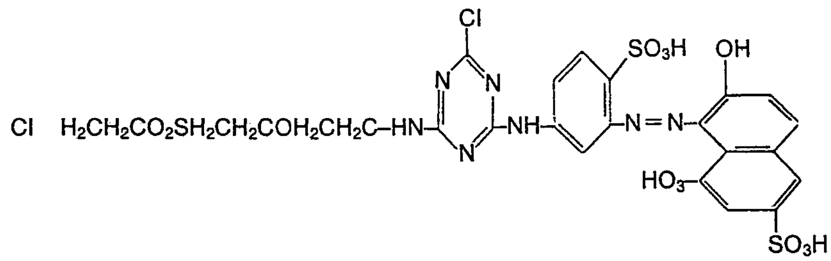

wird aus der neutralen Lösung im Vakuum bei 55–60° zur Trockene eingeengt oder mit Natriumchlorid abgeschieden, filtriert und im Vakuum getrocknet.

Den Ausgangsfarbstoff
1-(5′-Amino-2′-sulfo-phenylazo)-2-naphthol-6,8-disulfonsäure
erhält man durch Kupplung von diazotierter 2-Amino-4-acetamino-benzol-sulfonsäure mit 2-Naphthol-6,8-disulfonsäure und anschliessender Verseifung der Acetylgruppe mit Natronlauge oder Salzsäure.

Ähnliche wertvolle, erfindungsgemässe Reaktivfarbstoffe erhält man, wenn man von solchen aminogruppenhaltigen Monoazofarbstoffen ausgeht, die aus den nachstehenden Diazo- und Kupplungskomponenten mit anschliessender Verseifung der Acetylgruppe bzw. Reduktion der Nitrogruppe hergestellt werden können, und im übrigen nach den obigen Angaben verfährt.

Diazokomponenten
2-Amino-5-acetamino-benzol-sulfonsäure
2-Amino-4-acetamino-toluol-5-sulfonsäure
2-Amino-4-acetamino-toluol-6-sulfonsäure
2-Amino-6-acetamino-toluol-4-sulfonsäure
5-Nitro-2-amino-benzol-sulfonsäure
6-Acetamino-2-aminonaphthalin-4,8-disulfonsäure
4-Nitro-2-amino-toluol-6-sulfonsäure
6-Nitro-4-amino-toluol-2-sulfonsäure
6-Nitro-2-amino-naphthalin-8-sulfonsäure
6-Nitro-2-amino-naphthalin-4,8-disulfonsäure
1-Amino-3-aminomethylbenzol-6-sulfonsäure
2-Amino-5-aminomethylnaphthalin-1-sulfonsäure.

Kupplungskomponenten
1-Naphthol-3,6-disulfonsäure
1-Naphthol-3,8-disulfonsäure
1-Naphthol-3,7-disulfonsäure
2-Naphthol-3,7-disulfonsäure
2-Naphthol-4,8-disulfonsäure
1-Naphthol-3,6,8-trisulfonsäure
2-Naphthol-3,6,8-trisulfonsäure
2-Amino-naphthalin-3,6-disulfonsäure
2-Amino-naphthalin-5,7-disulfonsäure
1-(2′- oder 3′- oder 4′-sulfophenyl)-3-methyl-5-pyrazolon
1-(2′-Methyl-4′-sulfophenyl)-3-methyl-5-pyrazolon
1-(2′,5′-Dichlor-4′-sulfophenyl)-3-methyl-5-pyrazolon
1-(2′,5′-Disulfophenyl)-3-methyl-5-pyrazolon
1-(2′- oder 3′- oder 4′-Sulfophenyl)-5-pyrazolon-3-carbonsäure
1-(2′-Chlor-5′-sulfophenyl)-5-pyrazolon-3-carbonsäure
1-Äthyl-3-sulfomethyl-4-methyl-6-hydroxypyridon-(2)
1-Äthyl-3-carbamoyl-4-methyl-6-hydroxypyridon-(2)
1-Äthyl-3-cyan-4-methyl-6-hydroxypyridon-(2)
1-Alkanoylamino-8-hydroxynaphthalin-3,6- oder -4,6-disulfonsäure
1-Benzoylamino-8-hydroxynaphthalin-3,6- oder -4,6-disulfonsäure.

Beispiel 25

Ersetzt man im Beispiel 24 die 26 Teile
HCl $H_2NCH_2CH_2OCH_2CH_2SO_2CH_2CH_2Cl$
durch eine molare Menge des Hydrochlorids eines der im folgenden genannten Amine, so erhält man ebenfalls wertvolle, erfindungsgemässe Farbstoffe:
β,γ-(Bis-β′-chloräthylsulfonyl)-propylamin-hydrochlorid
α-Carbonsäure-β-(β′-chloräthylsulfonyl)-äthyl-amin-hydrochlorid
β-Hydroxy-γ-(β′-chloräthylsulfonyl)-propyl-amin-hydrochlorid

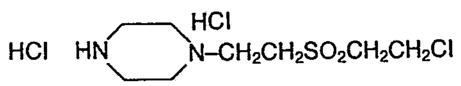 ;

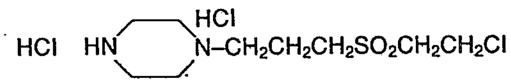 .

Beispiel 26

Ersetzt man bei den Beispielen 24 und 25 die 18,5 Teile Cyanurchlorid durch die molare Menge eines der im folgenden genannten Derivate des 1,3,5-Triazins, so erhält man ebenfalls wertvolle erfindungsgemässe Farbstoffe:
Tribromtriazin
Trifluortriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Beispiel 27

50,3 Teile des Farbstoffes
1-Amino-4-(3′-amino-4′-methyl-5′-sulfo-phenyl-amino)-anthrachinon-2-sulfonsäure
werden mit Wasser und der nötigen Menge Soda neutral gelöst. Diese Lösung wird bei 0–5° zu einer Anschlämmung von 18,5 Teilen Cyanurchlorid gegeben, welche durch Zutropfen des in 110 Teilen Aceton gelösten Cyanurchlorides auf 250 Teile Eis hergestellt wurde. Der bei der Umsetzung entstehende Chlorwasserstoff wird durch Zutropfen von 50 Teilen 2-normaler Sodalösung neutralisiert, wobei sich ein pH-Wert von 6–6,5 einstellt.

Dann gibt man 26 Teile
$HCl\ H_2NCH_2CH_2OCH_2CH_2–SO_2CH_2CH_2Cl$
hinzu, erwärmt auf 30–40° und hält diese Temperatur 3 Stunden. Gleichzeitig wird durch Zutropfen von 100 Teilen 2-normaler Sodalösung der pH-Wert auf 4,0–4,5 gehalten. Der erhaltene Reaktivfarbstoff der Formel

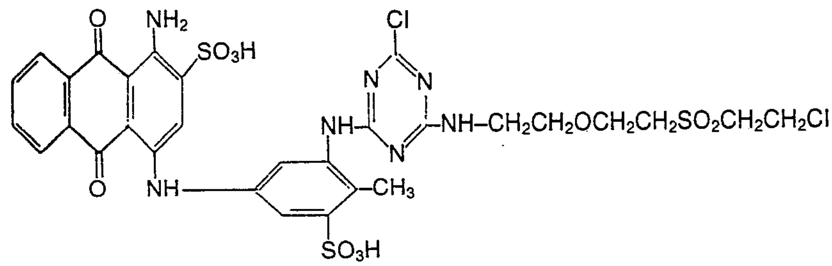

wird mit Natriumchlorid ausgesalzen, filtriert und bei 55–60° getrocknet.

Ähnliche wertvolle, erfindungsgemässe Farbstoffe erhält man, wenn man anstelle des Ausgangsfarbstoffes 1-Amino-4-(3′-amino-4′-methyl-5′-sulfo-phenyl-amino)-anthrachinon-2-sulfonsäure Farbstoffe der folgenden Tabelle einsetzt und im übrigen wie oben beschrieben verfährt.

Zwischenfarbstoffe
1-Amino-4-(3′-amino-4′-sulfo-phenyl-amino)-anthrachinon-2-sulfonsäure
1-Amino-4-(4′-amino-3′-sulfo-phenyl-amino)-anthrachinon-2-sulfonsäure
1-Amino-4-(3′-amino-2′-methyl-5′-sulfophenyl-amino)-anthrachinon-2-sulfonsäure
1-Amino-4-(4′-amino-2′,2″-disulfo-diphenyl-(4″)-amino)-anthrachinon-2-sulfonsäure
1-Amino-4-(3′-amino-4′-methyl-5′-sulfophenyl-phenyl-(3″)-amino)-anthrachinon-2-sulfonsäure
1-Amino-4-(4′-amino-phenyl-amino)-anthrachinon-2,5-disulfonsäure
1-Amino-4-(4″-amino-2′,2″-disulfo-stilbyl-(4′)-amino)-anthrachinon-2-sulfonsäure.

Beispiel 28

Ersetzt man im Beispiel 27 die 26 Teile
$HCl\ H_2NCH_2CH_2OCH_2CH_2SO_2CH_2CH_2Cl$
durch eine molare Menge des Hydrochlorids eines der im folgenden genanten Amine, so erhält man ebenfalls wertvolle, erfindungsgemässe Farbstoffe:
β,γ-(Bis-(β′-chloräthylsulfonyl)-propylamin-hydrochlorid
α-Carbonsäureäthylester-β-(β′-chloräthylsulfonyl)-äthylamin-hydrochlorid
β-Hydroxy-γ-(β′-chloräthylsulfonyl)-propylamin-hydrochlorid

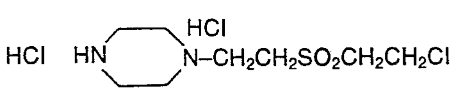 ; 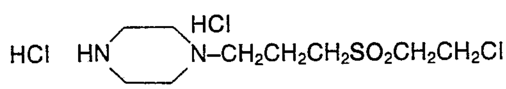 .

Beispiel 29

Ersetzt man bei den Beispielen 27 und 28 die 18,5 Teile Cyanurchlorid durch die molare Menge eines der im folgenden genannten Derivate des 1,3,5-Triazins, so erhält man ebenfalls wertvolle erfindungsgemässe Farbstoffe:
Tribromtriazin
Trifluortriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Beispiel 30

106,6 Teile des Farbstoffes
3-(3′-Amino-4′-sulfophenyl-amino-sulfonyl)-kupferphthalocyanin-3″,3‴,3‴-trisulfonsäure
werden mit Wasser und der nötigen Sodamenge neutral gelöst. Diese Lösung lässt man bei 0 bis 5° zu einer Anschlämmung von 18,5 Teilen Cyanurchlorid hinzulaufen, welche durch Zutropfen des in 110 Teilen Aceton gelösten Cyanurchlorids auf 250 Teile Eis hergestellt wurde. Bei der Umsetzung wird der pH-Wert durch Zutropfen von 50 ml 2-normaler Sodalösung auf 6 bis 6,5 gehalten. Zu der erhaltenen Zwischenstufe gibt man 32 Teile

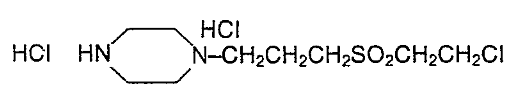

hinzu und erwärmt 4 Stunden auf 35 bis 45°. Durch Zutropfen von 100 Teilen 2-normaler Natronlauge wird gleichzeitig der pH-Wert auf 4,0 bis 4,5 gehalten. Der hergestellte Reaktivfarbstoff hat die folgende Konstitution:

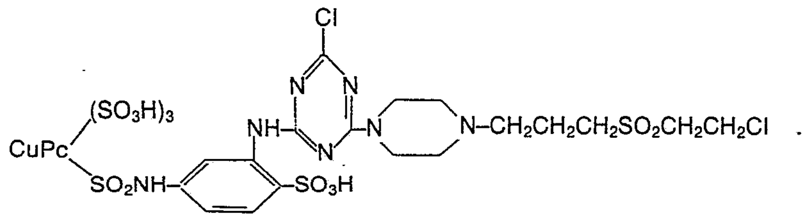

Er wird mit Natriumchlorid abgeschieden, filtriert und im Vakuum bei 55–60° getrocknet.

Der als Ausgangsmaterial dienende Farbstoff
3-(3'-Amino-4'-sulfophenyl-amino-sulfonyl)-kupferphthalocyanin-3'',3''',3''''-trisulfonsäure
kann durch Umsetzung von Kupferphthalocyanintetrasulfochlorid mit 2,4-Diamino-benzolsulfonsäure in Gegenwart von Pyridin bei pH 5–9 hergestellt werden.

Zu ähnlich wertvollen, erfindungsgemässen Farbstoffen gelangt man, wenn man solche Ausgangsfarbstoffe einsetzt, die anstelle der
2,4-Diamino-benzol-sulfonsäure mit
2,4-Diamino-toluol-6-sulfonsäure
2,5-Diamino-benzol-sulfonsäure
2,6-Diamino-toluol-4-sulfonsäure
4,4'-Diamino-diphenyl-2,2'-disulfonsäure
3,3'-Diamino-4-methyl-diphenyl-sulfon-5-sulfonsäure
hergestellt wurden und im übrigen die Umsetzung mit Cyanurchlorid und
α-Carbonsäure-β-chloräthyl-sulfonyl-äthyl-amin-hydrochlorid
wie oben beschrieben durchführt.

Weiterhin gelangt man zu ähnlich wertvollen, erfindungsgemässen Reaktivfarbstoffen, wenn man anstelle von Kupferphthalocyaninfarbstoffen von entsprechenden Nickelphthalocyaninfarbstoffen ausgeht.

Beispiel 31

Ersetzt man im Beispiel 30 die 32 Teile

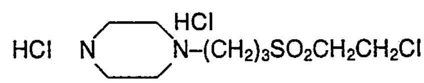

durch eine molare Menge des Hydrochlorids eines der im folgenden genannten Amine, so erhält man ebenfalls wertvolle, erfindungsgemässe Farbstoffe:
β,γ-(Bis-β'-chloräthylsulfonyl)-propylamin-hydrochlorid
α-Carbonsäureäthylester-β-(β'-chloräthyl-sulfonyl)-äthylamin-hydrochlorid
β-Hydroxy-γ-(β'-chloräthylsulfonyl)-propyl-amin-hydrochlorid

HCl $H_2NCH_2CH_2OCH_2CH_2SO_2CH_2CH_2Cl$ ; 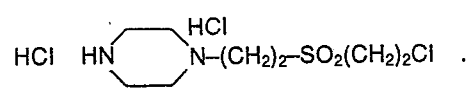

Beispiel 32

58,1 Teile des durch Diazotierung von 2-Amino-phenol-4,6-disulfonsäure und Kupplung auf 2-Amino-5-naphthol-7-sulfonsäure mit anschliessender Kupferung in essigsaurer Lösung hergestellten Kupferkomplexfarbstoffes werden in Wasser neutral gelöst. Diese Farbstofflösung lässt man bei 0–5° zu einer Anschlämmung von 18,5 Teilen Cyanurchlorid hinzulaufen, welche durch Lösen des Cyanurchlorides in 110 Teilen Aceton und Zutropfen zu 250 Teilen Eis hergestellt wurde. Während der Umsetzung hält man den pH-Wert durch Zutropfen von 50 Teilen 2-normaler Sodalösung auf 4,5–5,5. Es wird 1–2 Stunden bei 0–5° nachgerührt, bis die Umsetzung beendet ist. Dann gibt man 26 Teile HCl $H_2NCH_2CH_2OCH_2CH_2SO_2CH_2CH_2Cl$ hinzu, erwärmt auf ca. 45° und hält den pH-Wert durch portionsweise Zugabe von 100 Teilen 2-normaler Sodalösung auf 4,5–5,0. Der erhaltene rubinrote Reaktivfarbstoff entspricht der folgenden Formel:

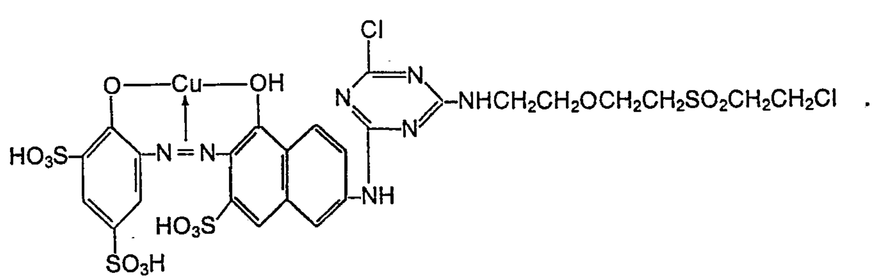

Er wird mit Natriumchlorid abgeschieden, filtriert und bei 55–60° getrocknet.

Ähnlich wertvolle, erfindungsgemässe Reaktivfarbstoffe erhält man, wenn man anstelle des Kupferkomplexfarbstoffes aus 2-Amino-phenol-4,6-disulfonsäure und 2-Amino-5-naphthol-7-sulfonsäure als Ausgangsfarbstoffe die Kupferkomplexfarbstoffe der aus den nachstehenden Diazo- und Kupplungskomponenten hergestellten Farbstoffe einsetzt.

Diazokomponenten
2-Amino-phenol-4-sulfonsäure
2-Amino-phenol-5-sulfonsäure
6-Nitro-2-amino-phenol-4-sulfonsäure
4-Nitro-2-amino-phenol-6-sulfonsäure
4-Chlor-2-amino-phenol-6-sulfonsäure
2-Amino-4-methyl-phenol-6-sulfonsäure
2-Amino-4-acetamino-phenol-6-sulfonsäure
1-Amino-2-naphthol-4-sulfonsäure
6-Nitro-1-amino-2-naphthol-4-sulfonsäure

Kupplungskomponenten
1-Amino-5-naphthol-7-sulfonsäure
1-Amino-8-naphthol-4-sulfonsäure
1-Amino-8-naphthol-6-sulfonsäure
2-(N-Methylamino)-5-naphthol-7-sulfonsäure
2-(N-Äthylamino)-5-naphthol-7-sulfonsäure
2-(N-β-Hydroxyäthylamino)-5-naphthol-7-sulfonsäure
2-Amino-8-naphthol-6-sulfonsäure
2-(N-Methylamino)-8-naphthol-6-sulfonsäure
2-(N-Äthylamino)-8-naphthol-6-sulfonsäure
1-Amino-8-naphthol-3,6-disulfonsäure
1-Amino-8-naphthol-4,6-disulfonsäure
2-Amino-5-naphthol-1,7-disulfonsäure
2-Amino-8-naphthol-3,6-disulfonsäure.

Beispiel 33

Ersetzt man im Beispiel 32 die 26 Teile HCl $H_2N(CH_2)_2O(CH_2)_2SO_2(CH_2)_2Cl$ durch eine molare Menge des Hydrochlorids eines der im folgenden genannten Amine, so erhält man ebenfalls wertvolle erfindungsgemässe Farbstoffe:
β,γ-(Bis-β′-chloräthylsulfonyl)-propylamin-hydrochlorid
α-Carbonsäure-β-(β′-chloräthylsulfonyl)-äthylamin-hydrochlorid
β-Hydroxy-γ-(β′-chloräthylsulfonyl)-propylamin-hydrochlorid

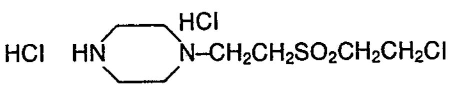 ; 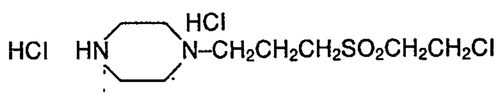 .

Beispiel 34

Ersetzt man bei den Beispielen 33 und 34 die 18,5 Teile Cyanurchlorid durch die molare Menge eines der im folgenden genannten Derivate des 1,3,5-Triazins, so erhält man ebenfalls wertvolle erfindungsgemässe Farbstoffe:
Tribromtriazin
Trifluortriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Beispiel 35

Zu einer Anschlämmung von 79,4 Teilen des Kupferkomplexes von
7-[6′-(2″,4″-Dichlor-1″,3″,5″-triazinyl-amino)-2′-hydroxy-4′-sulfo-1′-naphthylazo]-amino-8-hydroxy-naphthalin-2,4-disulfonsäure
in ca. 800 Teilen Wasser von 0–5° und einem pH-Wert von 6,5 kommen 31 Teile

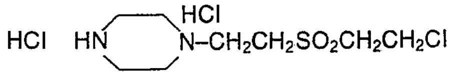

als Pulver. Man erwärmt auf 30–40° und hält diese Temperatur 4 Stunden. Gleichzeitig wird durch Zutropfen von 100 Teilen 2-normaler Sodalösung der pH-Wert auf 4,0–4,5 gehalten. Das Ende der Reaktion erkennt man daran, dass der pH-Wert konstant bei 4,5 bleibt. Der dargestellte blaue Reaktivfarbstoff hat folgende Konstitution:

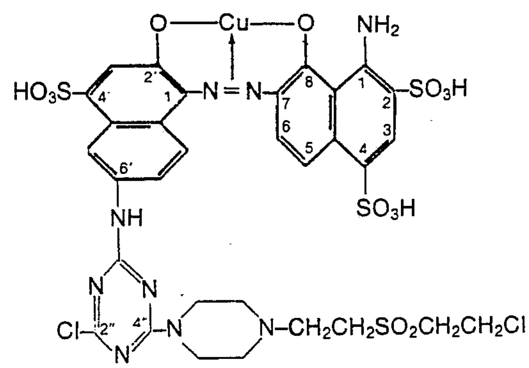

Er wird entweder im Vakuum bei 55–60° eingedampft oder mit Natriumchlorid abgeschieden.

Ähnlich wertvolle erfindungsgemässe Reaktivfarbstoffe erhält man, wenn man anstelle des 6-Nitro-1-diazo-4-sulfonaphtholats die Diazoverbindungen der folgenden Amine einsetzt:
4-Nitro-2-amino-1-hydroxy-naphthalin-6-sulfonsäure
6-Nitro-2-amino-phenol-4-sulfonsäure
4-Nitro-2-amino-phenol-6-sulfonsäure.

Beispiel 36

Ersetzt man im Beispiel 35 die 36 Teile

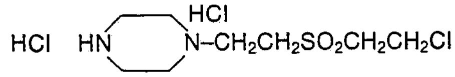

durch eine molare Menge des Hydrochlorids eines der im folgenden genannten Amine, so erhält man ebenfalls wertvolle, erfindungsgemässe Farbstoffe:
β,γ-(Bis-β′-chloräthylsulfonyl)-propylamin-hydrochlorid
α-Carbonsäure-β-(β′-chloräthylsulfonyl)-äthylamin-hydrochlorid
β-Hydroxy-γ-(β′-chloräthylsulfonyl)-propylamin-hydrochlorid

HCl $H_2NCH_2CH_2OCH_2CH_2SO_2CH_2CH_2Cl$ ; HCl 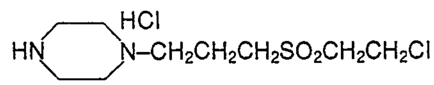 .

Beispiel 37

Ersetzt man bei den Beispielen 35 und 36 die 79,4 Teile des Kupferkomplexes von

7-[6′-(2″,4″-Dichlor-1″,3″,5″-triazinyl-amino)-2′-hydroxy-4′-sulfo-1′-naphthylazo]-1-amino-8-hydroxy-naphthalin-2,4-disulfonsäure

durch 76,1 Teile

7-[6′-(2″,4″-Difluor-1″,3″,5″-triazinyl-amino)-2′-hydroxy-4′-sulfo-1′-naphthylazo]-1-amino-8-hydroxy-naphthalin-2,4-disulfonsäure,

so erhält man ebenfalls wertvolle, erfindungsgemässe Farbstoffe.

Beispiel 38

Man gibt 26 Teile HCl $H_2NCH_2CH_2OCH_2CH_2SO_2CH_2CH_2Cl$ in Pulverform zu einer neutralen Farbstoffanschlämmung von 82,4 Teilen des Kupferkomplexes von

N-(2-Hydroxy-4-sulfo-phenyl)-N′-(2′-carboxy-4′-sulfo-phenyl)-ms-[4″-(2‴,4‴-dichlor-1‴,3‴,5‴-triazinyl-amino)-2″-sulfo-phenyl]-formazan

in ca. 800 Teilen Wasser, wobei die Temperatur etwa 0–5° beträgt. Dann erwärmt man 4 Stunden auf 30–40° und hält während dieser Zeit den pH-Wert durch portionsweise Zugabe von verdünnter Natronlauge auf 4,0–4,5. Wenn keine Natronlauge mehr erforderlich ist, d.h. wenn der pH-Wert konstant bleibt, wird der dargestellte blaue Reaktivfarbstoff durch Sprühtrocknen bei 55–60° oder durch Aussalzen isoliert. Er hat folgende Konstitution:

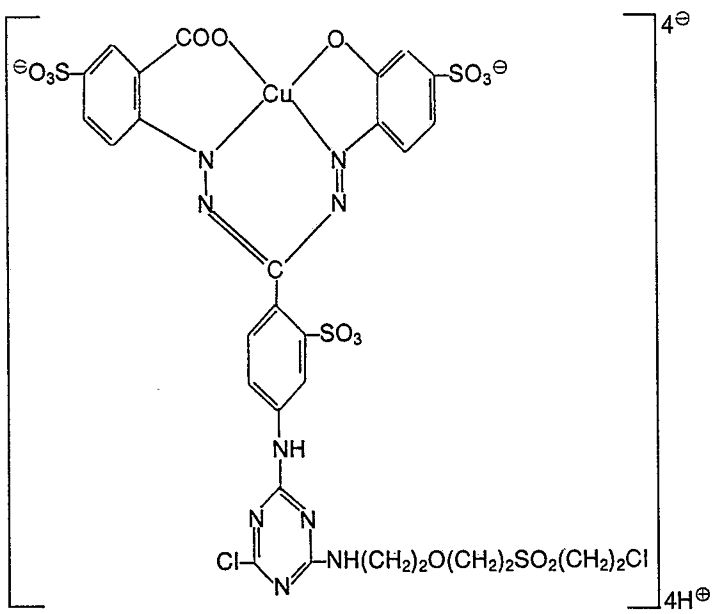

Der als Ausgangsfarbstoff dienende Kupferkomplex des

N-(2-Hydroxy-4-sulfo-phenyl)-N′-(2″-carboxy-4″-sulfo-phenyl)-ms-[4″-(2‴,4‴-dichlor-1‴,3‴,5‴-triazinyl-amino)-2-sulfophenyl]-formazans

wird auf folgende Weise gewonnen: 46,4 Teile 2-Carboxyphenylhydrazin-4-sulfonsäure und 48,6 Teile 4-Acetamino-benzaldehyd-2-sulfonsäure werden in wässriger Lösung kondensiert und das erhaltene Hydrazon in Gegenwart von Soda mit der Diazoverbindung von 37,8 Teilen 1-Amino-2-hydroxybenzol-4-sulfonsäure bei 0–5° gekuppelt. Das gebildete Formazan wird mit Essigsäure auf pH 5–5,3 gestellt und mit kupferabgebenden Mitteln, wie z.B. 40 Teilen Kupferacetat oder 50 Teilen Kupfersulfat, unter 5-stündigem Erwärmen auf 40–50° in den Kupferkomplex übergeführt. Dieser wird mit Natriumchlorid abgeschieden und in ca. 800 ml Wasser neutral gelöst.

Die Farbstofflösung läuft bei 0–5° zu einer Anschlämmung von 37,0 Teilen Cyanurchlorid, welche durch Lösen des Cyanurchlorides in 200 Teilen Aceton und Ausfällen mit 500 Teilen Eis hergestellt wird. Man rührt 1–2 Stunden bei 0–5° bis vollständige Umsetzung eingetreten ist.

Ähnlich wertvolle erfindungsgemässe Reaktivfarbstoffe erhält man, wenn man aus den nachstehenden Hydrazin, Aldehyd- und Diazokomponenten Formazane herstellt, wobei mindestens eine Acetaminogruppe wahlweise in der Aldehyd- oder Diazokomponente vorhanden sein muss, die Formazane in den Kupferkomplex überführt, die Acetaminogruppe verseift, die Farbstoffe mit Cyanurchlorid umsetzt und im übrigen wie oben angegeben verfährt. Dabei sind die Komponenten so zu wählen, dass mindestens drei Sulfonsäuregruppen pro Farbstoffmolekül vorhanden sind.

Wenn je eine verseifbare Acetaminogruppe in der Aldehyd- und Diazokomponente vorhanden

ist, lassen sich reaktive Reste zweimal in den Farbstoff einführen.

Hydrazinkomponenten:
2-Hydroxy-phenylhydrazin
6-Nitro-2-hydroxy-phenylhydrazin
4-Chlor-2-carboxy-phenylhydrazin
5-Nitro-2-carboxy-phenylhydrazin
4-Methoxy-2-carboxy-phenylhydrazin
4-Nitro-2-hydroxy-6-sulfo-phenylhydrazin
6-Nitro-2-hydroxy-4-sulfo-phenylhydrazin
2-Carboxy-5-sulfo-phenylhydrazin
2-Hydroxy-6-carboxy-4-sulfo-phenylhydrazin
2-Hydroxy-4,6-disulfo-phenylhydrazin
2-Hydroxy-4-sulfo-naphthylhydrazin
2-Hydroxy-4,6'-disulfo-naphthyl-1-hydrazin
2-Carboxy-4-acetamino-phenylhydrazin.

Aldehydkomponenten:
Benzaldehyd
4-Methyl-benzaldehyd
Benzaldehyd-2- oder -3- oder -4-sulfonsäure
Benzaldehyd-2,4-disulfonsäure
2- oder 3- oder 4-Nitro-benzaldehyd
2-Chlor-benzaldehyd-5-sulfonsäure
2- oder 3- oder 4-Acetamino-benzaldehyd
3-Acetamino-benzaldehyd-4-sulfonsäure
5-Acetamino-benzaldehyd-2-sulfonsäure
Benzaldehyd-2-sulfonsäure.

Diazokomponenten:
1-Amino-3-acetamino-2-hydroxy-benzol-5-sulfonsäure
1-Amino-5-acetamino-2-hydroxy-benzol-3-sulfonsäure
3-Chlor-1-amino-2-hydroxy-benzol-5-sulfonsäure
5-Nitro-1-amino-2-hydroxy-benzol-3-sulfonsäure
5-Nitro-1-amino-2-hydroxy-benzol-4-sulfonsäure
1-Amino-2-hydroxy-benzol-4,6-disulfonsäure
3-Chlor-1-amino-2-hydroxy-benzol-5-sulfonsäure
5-Nitro-1-amino-2-hydroxy-benzol-3-sulfonsäure
5-Nitro-1-amino-2-hydroxy-benzol-4-sulfonsäure
1-Amino-2-hydroxy-benzol-4,6-disulfonsäure
1-Amino-2-hydroxy-benzol-3,5-disulfonsäure.

Beispiel 39

Ersetzt man im Beispiel 38 die 26 Teile HCl $H_2N(CH_2)_2O(CH_2)_2SO_2(CH_2)_2Cl$ durch eine molare Menge des Hydrochlorids eines der im folgenden genannten Amine, so erhält man ebenfalls wertvolle, erfindungsgemässe Farbstoffe:
β,γ-(Bis-β'-chloräthylsulfonyl)-propylamin-hydrochlorid,
α-Carbonsäure-β-(β'-chloräthylsulfonyl)-äthyl-amin-hydrochlorid,
β-Hydroxy-γ-(β'-chloräthylsulfonyl)-propylamin-hydrochlorid,

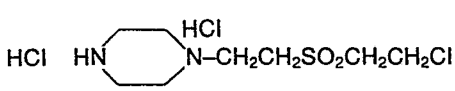 ; 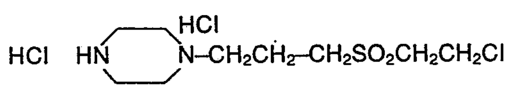 .

Beispiel 40

Ersetzt man in den Beispielen 38 und 39 die 82,4 Teile des Kupferkomplexes von
N-(2-Hydroxy-4-sulfo-phenyl)-N'-(2'-carboxy-4'-sulfo-phenyl)-ms-[4''-(2''',4'''-dichlor-1''',3''',5'''-triazinylamino)-2''-sulfophenyl]-formazan
durch 79,1 Teile
N-(2-Hydroxy-4-sulfophenyl)-N'-(2'-carboxy-4'-sulfo-phenyl)-ms-[4''-(2''',4'''-difluor-1''',3''',5'''-triazinyl-amino)-2''-sulfophenyl]-formazan,
so erhält man ebenfalls wertvolle erfindungsgemässe Farbstoffe.

Beispiel 41

Zu einer wässrigen Anschlämmung von 81,4 Teilen der N,N'-Bis-(2,4-dichlor-1,3,5-triazinyl)-Verbindung der 7-(5'-Amino-2'-sulfo-phenyl-azo)-1-amino-8-naphthol-3,6-disulfonsäure gibt man bei 0–5° eine wässrige Anschlämmung von 52 Teilen

$$HCl\ H_2NCH_2CH_2O{-}CH_2CH_2SO_2CH_2CH_2Cl.$$

Darauf erwärmt man auf 30–40°, hält diese Temperatur 3–4 Stunden und lässt gleichzeitig portionsweise eine Lösung von 100 Teilen 2-normaler Sodalösung hinzutropfen, um den pH-Wert auf 4,0–4,5 zu halten. Wenn der pH-Wert konstant bleibt, ist die Umsetzung beendet. Der erhaltene blaustichig rote Reaktivfarbstoff wird entweder bei 55–60° im Vakuum eingedampft oder mit Natriumchlorid abgeschieden. Er hat folgende Konstitution:

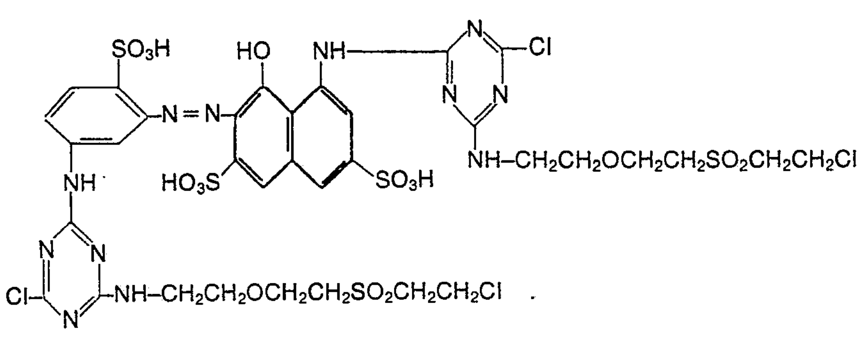 .

Zu der als Ausgangsfarbstoff dienenden N,N'-Bis-(2,4-dichlor-1,3,5-triazinyl)-Verbindung der 7-(5'-Amino-2'-sulfo-phenyl-azo)-1-amino-8-naphthol-3,6-disulfonsäure gelangt man auf folgendem Weg: Bei einer Temperatur von 0–5° und einem pH-Wert von 6–7 werden eine neutrale Lösung von 37,6 Teilen 2,4-Diamino-benzolsulfonsäure mit einer Anschlämmung von 37,0 Teilen Cyanurchlorid und eine neutrale Lösung von 63,8 Teilen 1-Amino-8-naphthol-3,6-disulfonsäure mit einer Anschlämmung von 37,0 Teilen Cyanurchlorid umgesetzt. Der pH-Wert von 6–7 wird in beiden Fällen durch Zutropfen von je 100 Teilen 2-normaler Sodalösung eingehalten. Die Diazokomponente 2-Amino-5-(2'',4''-dichlor-1'',3'',5''-triazinyl-amino)-benzol-sulfonsäure wird auf übliche Weise in salzsaurer Lösung mit Natriumnitrit bei 0–5° diazotiert und dann mit der Kupplungskomponente 1-(2''',4'''-Dichlor-1''',3''',5'''-triazinyl-amino)-8-naphthol-3,6-disulfonsäure zum Monoazofarbstoff vereinigt.

Ähnlich wertvolle, erfindungsgemässe Reaktivfarbstoffe erhält man, wenn man zur Herstellung des Ausgangsfarbstoffes anstelle des Kondensationsproduktes von 1-Amino-8-naphthol-3,6-disulfonsäure mit Cyanurchlorid die Kondensationsprodukte der in Beispiel 1 genannten Kupplungskomponenten mit Cyanurchlorid einsetzt und im übrigen wie oben beschrieben verfährt.

Ersetzt man das als Diazokomponente für die Herstellung des Ausgangsfarbstoffs eingesetzte Kondensationsprodukt von 2,4-Diaminobenzolsulfonsäure mit Cyanurchlorid durch die entsprechenden Kondensationsprodukte des Cyanurchlorids mit 2,5-Diaminobenzolsulfonsäure oder 2,5-Diaminobenzol-1,4-disulfonsäure und verfährt im übrigen wie oben beschrieben, so erhält man ebenfalls wertvolle erfindungsgemässe Farbstoffe.

Beispiel 42

Ersetzt man im Beispiel 41 die 52 Teile HCl $H_2N(CH_2)_2O(CH_2)_2SO_2(CH_2)_2Cl$ durch eine molare Menge des Hydrochlorids eines der im folgenden genannten Amine, so erhält man ebenfalls wertvolle, erfindungsgemässe Farbstoffe:

β,γ-(Bis-β'-chloräthylsulfonyl)-propylamin-hydrochlorid,

α-Carbonsäureäthylester-β-(β'-chloräthylsulfonyl)-äthylamin-hydrochlorid,

β-Hydroxy-γ-(β'-chloräthylsulfonyl)-propyl-amin-hydrochlorid,

HCl 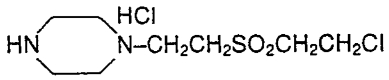 ; HCl 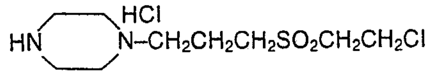 .

Beispiel 43

Ersetzt man bei den Beispielen 41 und 42 die 81,4 Teile

N,N'-Bis-(3,5-dichlor-2,4,6-triazinyl)-Verbindung

der 7-(5'-Amino-2'-sulfophenyl-azo)-1-amino-8-naphthol-3,6-disulfonsäure

durch 78,1 Teile

N,N'-Bis-(2,4-difluor-1,3,5-triazinyl)-Verbindung

der 7-(5'-Amino-2'-sulfophenyl-azo)-1-amino-8-naphthol-3,6-disulfonsäure,

so erhält man ebenfalls wertvolle erfindungsgemässe Farbstoffe.

Beispiel 44

Zu einer Anschlämmung von 18,5 Teilen Cyanurchlorid, die in 70 Teilen Aceton warm gelöst und unter Rühren auf 300 Teile Eis gegeben wurden, lässt man eine neutrale Lösung von 72,8 Teilen des Kupferkomplexes des Farbstoffs 6-Amino-1,2',8'-trihydroxy-2,1'-azonaphthalin-3',4,6',8-tetrasulfonsäure in 400 Teilen Wasser bei 0–5° hinzufliessen. Die bei der Umsetzung gebildete Salzsäure wird durch Zutropfen von 50 Teilen 2-normaler Natronlauge neutralisiert (pH-Wert 5,5–6,5). Darauf werden 26 Teile

HCl $H_2NCH_2CH_2OCH_2CH_2SO_2CH_2CH_2Cl$

als Pulver hinzugegeben. Man erwärmt in ca. ½ Stunde auf 40° und hält diese Temperatur 3 Stunden. Gleichzeitig wird durch Zugabe von 17 g Natriumbicarbonat der pH-Wert auf 4,0–4,5 gehalten. Der erhaltene blaue Reaktivfarbstoff der Formel

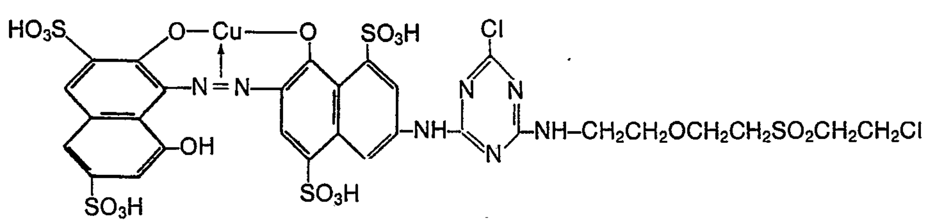

wird mit Natriumchlorid ausgesalzen, filtriert und im Vakuum bei 60° getrocknet.

Der als Ausgangsmaterial verwendete Kupferkomplexfarbstoff wird auf folgende Weise nach den Angaben der deutschen Patentschrift 1 117 235 hergestellt:

81,8 Teile des o-Benzolsulfonylesters der 1-Amino-8-naphthol-3,6-disulfonsäure werden diazotiert und mit 72,2 Teilen 2-Acetamino-5-naphthol-4,8-disulfonsäure sodaalkalisch gekuppelt. Der erhaltene Monoazofarbstoff wird in bekannter Weise durch oxydative Kupferung mit Kupfersulfat

und Wasserstoffperoxyd in essigsaurer Lösung in den Kupferkomplex übergeführt und dann durch Hydrolyse die Benzolsulfonyl- und Acetylgruppe abgespalten.

Ersetzt man bei der Herstellung des Ausgangsfarbstoffes die Diazokomponente durch molare Mengen der nachstehenden Diazokomponenten und verfährt im übrigen nach der oben beschriebenen Weise, so erhält man ebenfalls wertvolle erfindungsgemässe Farbstoffe:

1-Amino-8-naphthol-4,6-disulfonsäure-o-benzolsulfonylester
1-Amino-8-naphthol-4,7-disulfonsäure-o-benzolsulfonylester
2-Amino-naphthalin-4,8-disulfonsäure
2-Amino-6-nitro-naphthalin-4,8-disulfonsäure
2-Amino-naphthalin-4,6,8-trisulfonsäure
2-Amino-naphthalin-6-sulfonsäure
2-Amino-naphthalin-8-sulfonsäure

Ersetzt man bei der Herstellung des Ausgangsfarbstoffes die Kupplungskomponente 2-Acetamino-5-naphthol-4,8-disulfonsäure durch molare Mengen der N-Acetylverbindung der folgenden Kupplungskomponenten, so erhält man weiterhin wertvolle erfindungsgemässe Farbstoffe:

2-Amino-8-naphthol-6-sulfonsäure
2-Amino-5-naphthol-7-sulfonsäure
2-Amino-5-naphthol-1,7-disulfonsäure
2-Amino-8-naphthol-3,6-disulfonsäure.

Beispiel 45

Ersetzt man im Beispiel 40 die 26 Teile HCl $H_2N(CH_2)_2O(CH_2)_2SO_2(CH_2)_2Cl$ durch eine molare Menge des Hydrochlorids eines der im folgenden genannten Amine, so erhält man ebenfalls wertvolle, erfindungsgemässe Farbstoffe:

β,γ-(Bis-β′-chloräthylsulfonyl)-propylamin-hydrochlorid,
α-Carbonsäure-β-(β′-chloräthylsulfonyl)-äthylamin-hydrochlorid,
β-Hydroxy-γ-(β′-chloräthylsulfonyl)-propylamin-hydrochlorid,

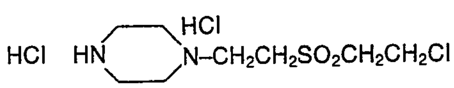 ; 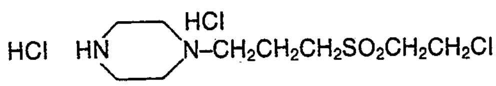 .

Beispiel 46

Ersetzt man im Beispiel 39 und 40 die 18,5 Teile Cyanurchlorid durch die molare Menge eines der im folgenden genannten Derivate des 1,3,5-Triazins, so erhält man ebenfalls wertvolle erfindungsgemässe Farbstoffe:

Tribromtriazin
Trifluortriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Beispiel 47

70,2 Teile des Diazofarbstoffes 1-Amino-2-(4′-sulfophenylazo)-7-(2″-sulfo-5″-aminophenylazo)-8-naphthol-3,6-disulfonsäure werden in Form einer neutralen Lösung bei 0–5° mit einer Anschlämmung von 18,5 Teilen Cyanurchlorid umgesetzt, welche in 110 Teilen Aceton gelöst und mit 250 Teilen Eis wieder gefällt wurden. Die Umsetzung erfolgt bei pH 6,0–6,5, wobei die Einhaltung des pH-Wertes durch Zutropfen von 50 Teilen 2-normaler Sodalösung erfolgt. Anschliessend werden 26 Teile

HCl $H_2N\text{-}CH_2CH_2OCH_2CH_2SO_2CH_2CH_2Cl$

als Pulver zugegeben, auf 30–40° erwärmt und dabei der pH-Wert durch Zutropfen von 100 Teilen 2-normaler Sodalösung auf 4,0–4,5 gehalten. Der erhaltene Farbstoff der Konstitution:

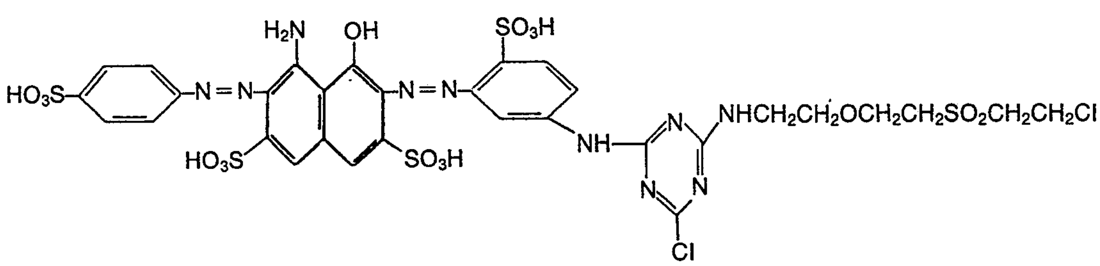

wird durch Aussalzen oder durch Sprühtrocknung isoliert.

Beispiel 48

81 Teile des Diazofarbstoffes
1-Amino-2-(3′-β-sulfatoäthylsulfonyl-phenylazo)-7-(2″-sulfo-5″-aminophenylazo)-8-naphthol-3,6-disulfonsäure
werden in Form einer neutralen Lösung bei 0–5° mit einer Anschlämmung von 18,5 Teilen Cyanurchlorid umgesetzt, welche in 110 Teilen Aceton gelöst und mit 250 Teilen Eis wieder gefällt wurden.

Die Umsetzung erfolgt bei pH 6,0–6,5, wobei die Einhaltung des pH-Wertes durch Zutropfen von 50 Teilen 2-normaler Sodalösung erfolgt. Anschliessend werden 26 Teile HCl $H_2NCH_2CH_2OCH_2CH_2SO_2CH_2CH_2Cl$ als Pulver zugegeben, auf 30–40° erwärmt und dabei der pH-Wert durch Zutropfen von 100 Teilen 2-normaler Sodalösung auf 4,0–4,5 gehalten. Der erhaltene Farbstoff der Konstitution:

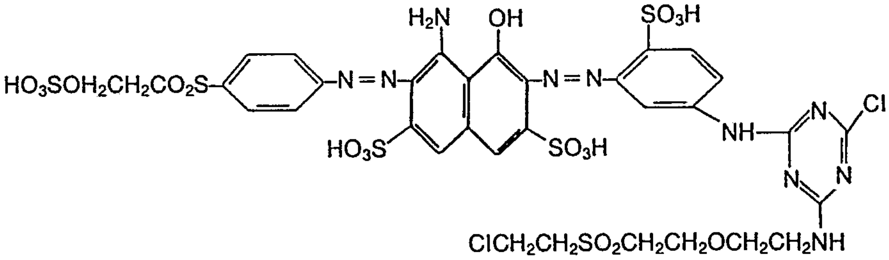

wird durch Aussalzen oder durch Sprühtrocknung isoliert.

Beispiel 49

81 Teile des Diazofarbstoffes
8-Amino-2-(4′-β-sulfatoäthylsulfonyl-phenylazo)-7-(2″-sulfo-5″-aminophenylazo)-1-naphthol-3,6-disulfonsäure
werden in Form einer neutralen Lösung bei 0–5° mit einer Anschlämmung von 18,5 Teilen Cyanurchlorid umgesetzt, welche in 110 Teilen Aceton gelöst und mit 250 Teilen Eis wieder gefällt wurden. Die Umsetzung erfolgt bei pH 6,0–6,5, wobei die Einhaltung des pH-Wertes durch Zutropfen von 50 Teilen 2-normaler Sodalösung erfolgt. Anschliessend werden 26 Teile

HCl $H_2NCH_2CH_2OCH_2CH_2SO_2CH_2CH_2Cl$

als Pulver zugegeben, auf 30–40° erwärmt und dabei der pH-Wert durch Zutropfen von 100 Teilen 2-normaler Sodalösung auf 4,0–4,5 gehalten. Der erhaltene Farbstoff der Konstitution:

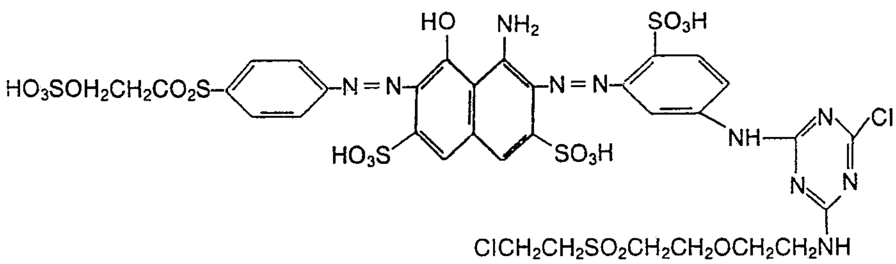

wird durch Aussalzen oder durch Sprühtrocknung isoliert.

Ähnliche wertvolle, erfindungsgemässe Farbstoffe erhält man, wenn man anstelle des als Ausgangsfarbstoff eingesetzten Diazofarbstoffs die folgenden Farbstoffe einsetzt und im übrigen wie oben beschrieben verfährt.

1-Amino-2-(2′-sulfophenylazo)-7-(2″-sulfo-5-aminophenylazo)-8-naphthol-3,6-disulfonsäure
1-Amino-2-(2′,4′-disulfophenylazo)-7-(2″-sulfo-5″-aminophenylazo)-8-naphthol-3,6-disulfonsäure
1-Amino-2-(2′,5′-sulfophenylazo)-7-(2′-sulfo-5″-amino-phenylazo)-8-naphthol-3,6-disulfonsäure
1-Amino-2-(4′-sulfophenylazo)-7-(2″-sulfo-4″-aminophenylazo)-8-naphthol-3,6-disulfonsäure
1-Amino-2-(2′,5′-disulfophenylazo)-7-(2″-sulfo-4″-aminophenylazo)-8-naphthol-3,6-disulfonsäure
1-Amino-2-(2′-sulfo-4′-aminophenylazo)-7-(4″-sulfophenylazo)-8-naphthol-3,6-disulfonsäure
1-Amino-2-(2′-sulfo-4′-aminophenylazo)-7-(2″,5″-disulfophenylazo)-8-naphthol-3,6-disulfonsäure
1-Amino-2-(2′,5′-disulfo-4-aminophenylazo)-7-phenylazo-8-naphthol-3,6-disulfonsäure
1-Amino-2-(2′-sulfo-5′-aminophenylazo)-7-(4″-sulfophenylazo)-8-naphthol-3,6-disulfonsäure
1-Amino-2-(2′-sulfo-5′-aminophenylazo)-7-(2″-sulfophenylazo)-8-naphthol-3,6-disulfonsäure
1-Amino-2-(2′-sulfo-5′-aminophenylazo)-7-2″,5″-disulfophenylazo)-8-naphthol-3,6-disulfonsäure
8-Amino-2-(2′-sulfophenylazo)-7-(2″-sulfo-5″-aminophenylazo)-1-naphthol-3,6-disulfonsäure
8-Amino-2-(2′,4′-disulfophenylazo)-7-(2″-sulfo-5″-aminophenylazo)-1-naphthol-3,6-disulfonsäure
8-Amino-2-(2′,5′-disulfophenylazo)-7-(2″-sulfo-5″aminophenylazo)-1-naphthol-3,6-disulfonsäure
8-Amino-2-(4′-sulfophenylazo)-7-(2″-sulfo-4″-aminophenylazo)-1-naphthol-3,6-disulfonsäure
8-Amino-2-(2′,5′-disulfophenylazo)-7-(2″-sulfo-4″-äthylsulfonylphenylazo)-1-naphthol-3,6-disulfonsäure
8-Amino-2-(2′-sulfo-3′-aminophenylazo)-7-(4″-sulfophenylazo)-1-naphthol-3,6-disulfonsäure
8-Amino-2-(2′-sulfo-4′-aminophenylazo)-7-(4″-methylsulfonylphenylazo)-1-naphthol-3,6-disulfonsäure
8-Amino-2-(2′,5′-disulfo-4-aminophenylazo)-7-phenylazo-1-naphthol-3,6-disulfonsäure
8-Amino-2-(2′-sulfo-5′-aminophenylazo)-7-(4″-sulfophenylazo)-1-naphthol-3,6-disulfonsäure
8-Amino-2-(2′-sulfo-5′-aminophenylazo)-7-(4″-sulfophenylazo)-1-naphthol-3,6-disulfonsäure
8-Amino-2-(2′-sulfo-5′-aminophenylazo)-7-(4''-sulfonamidphenylazo)-1-naphthol-3,6-disulfonsäure

1-Amino-2-(2'-brom-4'-β-sulfatoäthylsulfonyl-phenylazo)-7-(2'-sulfo-5''-amino-phenylazo)-8-naphthol-3,6-disulfonsäure

8-Amino-2-(2'-brom-4'-β-äthylsulfonyl-phenylazo)-7-(2''-sulfo-5''-amino-phenylazo)-1-naphthol-3,6-disulfonsäure

8-Amino-2-(4'-β-sulfatoäthylsulfonyl-phenylazo)-7-(2''-sulfo-4''-amino-phenylazo)-1-naphthol-3,6-disulfonsäure

1-Amino-2-(3'-β-äthylsulfonylphenylazo)-7-(2''-sulfo-5''-aminophenylazo)-8-naphthol-3,6-disulfonsäure

1-Amino-2-(4'-β-sulfatoäthylsulfonylphenylazo)-7-(2''-sulfo-4''-aminophenylazo)-8-naphthol-3,6-disulfonsäure.

Ersetzt man in der Herstellung der oben genannten Disazofarbstoffe die 1-Amino-8-naphthol-3,6-disulfonsäure durch die 1-Amino-8-naphthol-4,6-disulfonsäure, und verfährt im übrigen wie oben beschrieben, so erhält man ebenfalls wertvolle, erfindungsgemässe Farbstoffe.

Beispiel 50

Ersetzt man bei den Beispielen 47–49 die 26 Teile HCl $H_2N(CH_2)_2O(CH_2)_2SO_2(CH_2)_2Cl$ durch eine molare Menge des Hydrochlorids eines der im folgenden genannten Amine, so erhält man ebenfalls wertvolle, erfindungsgemässe Farbstoffe:

β,γ-(bis-β'-chloräthylsulfonyl)-propylamin-hydrochlorid,

α-Carbonsäure-β-(β'-chloräthylsulfonyl)-äthyl-amin-hydrochlorid,

β-Hydroxy-γ-(β'-chloräthylsulfonyl)-propyl-amin-hydrochlorid

HCl 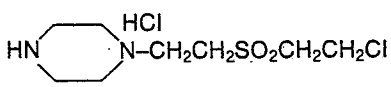 ; HCl 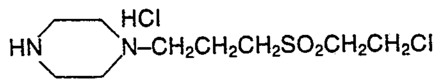 .

Beispiel 51

Ersetzt man bei den Beispielen 47, 48, 49 und 50 die 18,5 Teile Cyanurchlorid durch die molare Menge eines der im folgenden genannten Derivate des 1,3,5-Triazins, so erhält man ebenfalls wertvolle erfindungsgemässe Farbstoffe:

Tribromtriazin
Trifluortriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Beispiel 52

72,0 Teile des Diazofarbstoffes

1-Amino-2-(2'-sulfo-5'-aminophenylazo)-7-(2''-sulfo-5''-aminophenylazo)-8-naphthol-3,6-disulfonsäure

werden in Form einer neutralen Lösung bei 0–5° mit einer Anschlämmung von 37 Teilen Cyanurchlorid umgesetzt, welche in 110 Teilen Aceton und mit 250 Teilen Eis wieder gefällt wurden. Die Umsetzung erfolgt bei pH 6,0–6,5, wobei die Einhaltung des pH-Wertes durch Zutropfen von 100 Teilen 2-normaler Sodalösung erfolgt. Anschliessend werden 53 Teile HCl $H_2NCH_2CH_2OCH_2CH_2SO_2CH_2CH_2Cl$ als Pulver zugegeben, auf 30 bis 40° erwärmt und dabei der pH-Wert durch Zutropfen von 200 Teilen 2-normaler Sodalösung auf 4,5–5 gehalten. Der erhaltene Farbstoff der Konstitution:

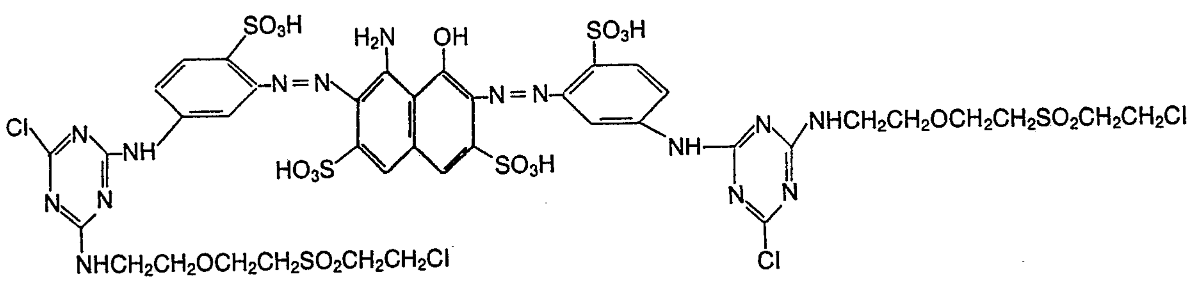

wird durch Aussalzen oder durch Sprühtrocknung isoliert.

Der als Ausgangsmaterial dienende Disazofarbstoff kann auf folgende Weise hergestellt werden:

Die Diazoverbindung von 46,0 Teilen 2-Amino-4-acetamino-benzol-sulfonsäure wird in der ersten Stufe in saurem Medium bei pH 2–4 mit 63,8 Teilen 1-Amino-8-naphthol-3,6-disulfonsäure und dann in der zweiten Stufe sodaalkalisch mit der Diazoverbindung von 46,0 Teilen 2-Amino-4-acetamino-benzol-sulfonsäure gekuppelt. Die Acetylgruppen des Disazofarbstoffes werden in Gegenwart von überschüssiger Natronlauge unter Erwärmen auf 90–100° verseift.

Ähnlich wertvolle, erfindungsgemässe Farbstoffe erhält man, wenn man anstelle des als Ausgangsfarbstoff eingesetzten Diazofarbstoffs die folgenden Farbstoffe einsetzt und im übrigen wie oben beschrieben verfährt:

1-Amino-2-(2'-sulfo-4'-aminophenyl-azo)-7-(2''-sulfo-4''-aminophenylazo)-8-naphthol-3,6-disulfonsäure

1-Amino-2-(2',5'-disulfo-4'-aminophenylazo)-7-(2'',5''-disulfo-4''-aminophenylazo)-8-naphthol-3,6-disulfonsäure

1-Amino-2-(2',4'-disulfo-5'-aminophenylazo)-7-(2'',4''-disulfo-5''-aminophenylazo)-8-naphthol-3,6-disulfonsäure.

Ersetzt man in der Herstellung der oben genannten Disazofarbstoffe die 1-Amino-8-naphthol-3,6-disulfonsäure durch die 1-Amino-8-naphthol-4,6-disulfonsäure, und verfährt im übrigen wie oben beschrieben, so erhält man ebenfalls wertvolle, erfindungsgemässe Farbstoffe.

Beispiel 53

Ersetzt man im Beispiel 52 die 26 Teile

HCl $H_2N(CH_2)_2O(CH_2)_2SO_2(CH_2)_2Cl$

durch eine molare Menge des Hydrochlorids eines der im folgenden genannten Amine, so erhält man ebenfalls wertvolle, erfindungsgemässe Farbstoffe:

β,γ-(Bis-β'-chloräthylsulfonyl)-propylamin-hydrochlorid,

α-Carbonsäure-β-(β'-chloräthylsulfonyl)-äthylamin-hydrochlorid,

β-Hydroxy-γ-(β'-chloräthylsulfonyl)-propylamin-hydrochlorid,

HCl 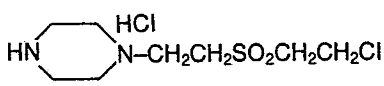 ; HCl 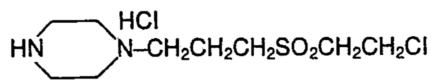 .

Beispiel 54

Ersetzt man im Beispiel 52 und 53 die 18,5 Teile Cyanurchlorid durch die molare Menge eines der im folgenden genannten Derivate des 1,3,5-Triazins, so erhält man ebenfalls wertvolle erfindungsgemässe Farbstoffe:

Tribromtriazin
Trifluortriazin
Trisulfotriazin
Tris-methylsulfonyltriazin
Tris-äthylsulfonyltriazin
Tris-phenylsulfonyltriazin
Dichlorfluortriazin
Chlor-disulfotriazin
Chlor-bis-methylsulfonyltriazin.

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35 °C gehalten. Danach wird die Temperatur innerhalb von 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25 °C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60 °C erhöht. Die Temperatur wird weitere 90 Minuten auf 60 °C gehalten. Danach wird gespült, während einer Viertelstunde mit einem nichtionogenen Waschmittel kochend geseift, nochmals gespült und getrocknet.

**Patentansprüche**

1. Reaktivfarbstoffe der Formel I

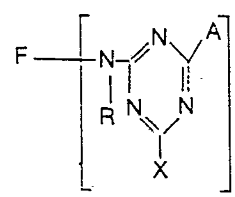 (I),

worin

F ein Rest eines mindestens eine $-SO_3H$ Gruppe enthaltenden metallfreien oder metallhaltigen Mono- oder Disazofarbstoffs, ein Rest eines Derivats des 1-Amino- oder 1-Anilino-anthrachinons, insbesondere ein Rest eines 4-Phenylamino-1-amino-anthrachinon-2-sulfonsäure-Derivats oder ein Rest eines Sulfophthalocyaninfarbstoffs, insbesondere eines im Phthalocyaninkern mindestens zwei Sulfonsäuregruppen tragenden Derivats eines Phthalocyaninsulfanilids oder -sulfalkylamids mit 2 bis 6 C-Atomen in der Alkylkette sowie ein Rest eines Formazan-, Phenazin-, Oxazin- oder Nitroarylfarbstoffs ist,

R Wasserstoff oder gegebenenfalls durch $-COOH$ oder $-SO_3H$ substituiertes Alkyl mit 1 bis 4 C-Atomen, Cyanäthyl oder Hydroxyäthyl bedeutet,

X für Fluor, Chlor, Brom, Alkylsulfonyl mit 1 bis 4 C-Atomen, Phenylsulfonyl oder den $-SO_3H$ Rest steht,

p 1 oder 2 und
A einen Rest der Formel II

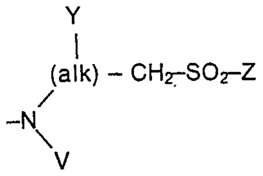

(II)

in der

Y Chlor, Brom, Fluor, $-OH$, $-OSO_3H$, $-O-$Acyl, $-CN$, $-COOH$, $-COO-$Alkyl mit 1 bis 4 C-Atomen im Alkylrest, $-CONH_2$ oder $-SO_2-Z$ ist,

alk ein Polymethylenrest mit 1 bis 6 C-Atomen oder dessen verzweigte Isomere bedeutet,

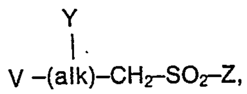

oder

Wasserstoff, Methyl oder eine gegebenenfalls durch die Carboxylgruppe oder die Sulfonsäuregruppe oder deren Derivate substituierte Methylgruppe oder ein gegebenenfalls durch Alkoxygruppen mit 1 oder 2 C-Atomen, durch Carboxy- oder Sulfonsäuregruppen oder durch Halogenatome oder Hydroxygruppen substituierter Alkylrest mit 1 bis 4 C-Atomen, und worin

Z ein β-Halogenäthyl-, oder ein Vinyl- oder β-Acetoxyäthylrest bedeutet,

oder einen Rest der Formeln II′

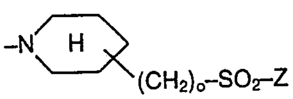

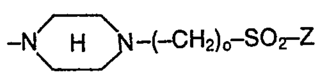

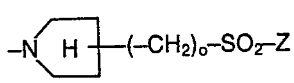

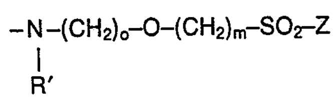

bedeutet, in denen R′ $C_{1-6}$-Alkyl oder Wasserstoff,

Z die oben angegebenen Bedeutungen hat,

o 0 bis 6 und

m 2 bis 6 ist.

2. Reaktivfarbstoffe gemäss Anspruch 1, dadurch gekennzeichnet, dass

F ein Mono- oder Disazofarbstoffrest der Formel VIa, VIb oder VIc

$$D-N=N-(M-N=N)_n-K- \qquad (VIa)$$
$$-D-N=N-(M-N=N)_n-K \qquad (VIb)$$
$$-D-N=N-(M-N=N)_n-K- \qquad (VIc)$$

oder eines davon abgeleiteten Metallkomplexes ist,

wobei in den Formeln VIa, VIb und VIc

D für den Rest einer gegebenenfalls durch Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Diazokomponente der Benzol- oder Naphthalinreihe,

K für den Rest einer gegebenenfalls durch Hydroxy-, Amino-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Kupplungskomponente der Benzol-, Naphthalin-, Pyrazolon-, 6-Hydroxypyridon-(2)- oder Acetessigsäurearylamid-Reihe,

M für den Rest einer gegebenenfalls durch Hydroxy-, Methyl-, Äthyl-, Methoxy- oder Äthoxygruppen, gegebenenfalls substituierte Alkanoylaminogruppen mit 2 bis 4 C-Atomen, gegebenenfalls substituierte Benzoylaminogruppen oder Halogenatome substituierten Mittelkomponente der Benzol- oder Naphthalinreihe steht und

n 0 bis 1 bedeutet, wobei

D, M und K zusammen mindestens zwei Sulfonsäuregruppen, vorzugsweise drei bis vier Sulfonsäuregruppen, enthalten.

3. Reaktivfarbstoffe gemäss Anspruch 1, dadurch gekennzeichnet, dass F ein Rest eines Anthrachinonfarbstoffs der allgemeinen Formel VII

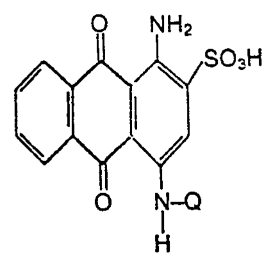

(VII)

ist, worin

Q für einen Phenylenrest steht, der einen Rest der allgemeinen Formel $-NRH$ (IIIa) trägt, wobei R die im Anspruch 1 angegebene Bedeutung hat und der Anthrachinonkern und/oder der Phenylenrest durch eine weitere $-SO_3H$ Gruppe, der Phenylenrest auch durch eine Carboxylgruppe, so dass der Farbstoff mindestens 2 stark wasserlöslichmachende Gruppen enthält, eine Alkoxygruppe mit 1 bis 3 C-Atomen, durch ein Halogenatom oder durch 1 bis 3 Alkylgruppen mit 1 bis 3 C-Atomen substituiert sein kann.

4. Reaktivfarbstoffe gemäss Anspruch 1, dadurch gekennzeichnet, dass F ein Rest eines Phthalocyaninfarbstoffs der allgemeinen Formel VIII

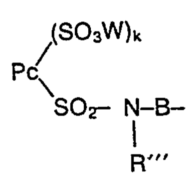

(VIII)

ist, worin

Pc den Rest eines metallhaltigen oder metallfreien Phthalocyanins, vorzugsweise Kupfer- oder Nickelphthalocyanins,

W –OH und/oder –NR′R″,

R′, R″ und R‴ unabhängig voneinander für Wasserstoff oder Alkyl mit 1 bis 4 C-Atomen stehen,

B einen gegebenenfalls durch Halogen, 1 bis 3 Alkylgruppen mit 1 bis 2 C-Atomen oder durch ein oder zwei Sulfonsäure- oder Carbonsäuregruppen substituierten Phenylrest oder einen Alkylrest mit 2 bis 6 C-Atomen, vorzugsweise einen durch eine Sulfonsäuregruppe substituierten Phenylen- oder den Äthylenrest und

k 1 bis 3 bedeutet.

5. Reaktivfarbstoffe gemäss Anspruch 1, worin A ein Rest der Formel

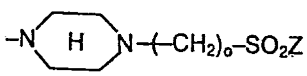

o 0 bis 6, m 2 bis 6, und Z β-Halogenoäthyl, Vinyl oder β-Acetoxyäthyl ist.

6. Reaktivfarbstoffe gemäss Anspruch 5, worin A ein Rest der Formel

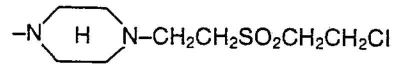

ist.

7. Reaktivfarbstoffe gemäss Anspruch 1, worin A ein Rest der Formel

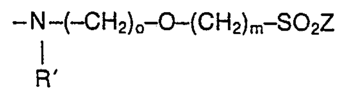

R′ $C_{1-6}$-Alkyl oder Wasserstoff, o 0 bis 6, und Z β-Halogenoäthyl, Vinyl oder β-Acetoxyäthyl ist.

8. Reaktivfarbstoffe gemäss Anspruch 7, worin A ein Rest der Formel

$$-NH-CH_2CH_2-O-CH_2CH_2SO_2CH_2CH_2Cl$$

ist.

9. Reaktivfarbstoff gemäss Anspruch 7, der Formel

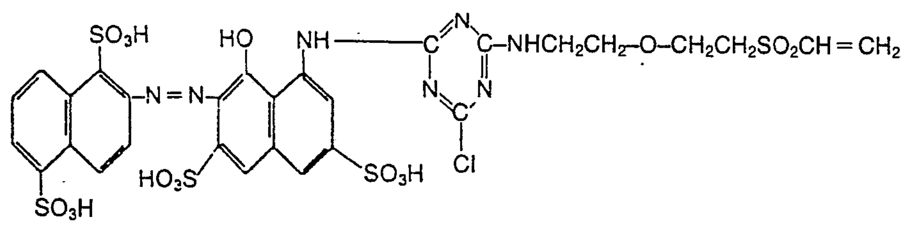

10. Reaktivfarbstoff gemäss Anspruch 8, der Formel

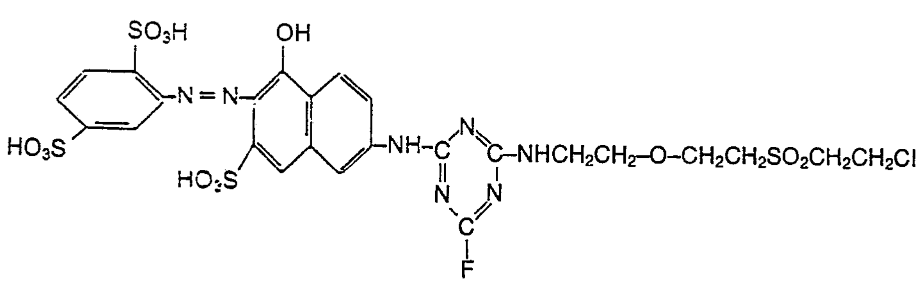

11. Reaktivfarbstoff gemäss Anspruch 8, der Formel

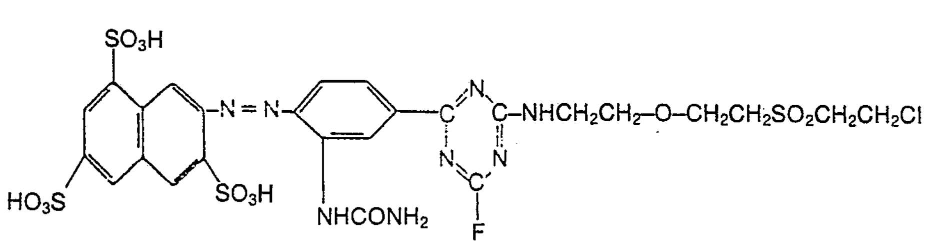

12. Reaktivfarbstoff gemäss Anspruch 8, der Formel

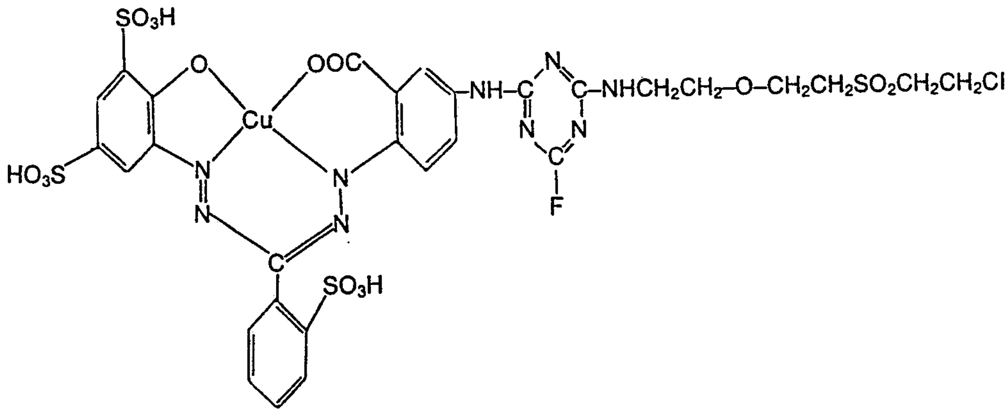

13. Reaktivfarbstoff gemäss Anspruch 8, der Formel

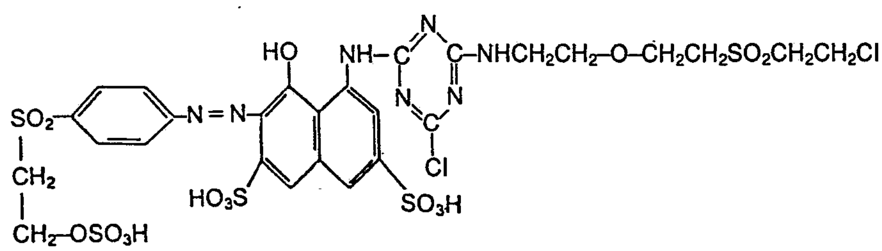

14. Verfahren zur Herstellung von Reaktivfarbstoffen der Formel I, worin die Symbole F, R, X, A und p die im Anspruch 1 genannten Bedeutungen haben, dadurch gekennzeichnet, dass der Farbstoff der Formel V

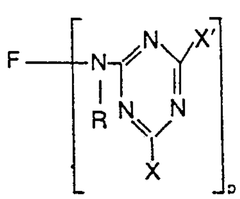

(V)

in der F, R und p die oben angegebenen Bedeutungen haben und X und X′ unabhängig voneinander eine der oben für X genannten Bedeutungen haben,
mit einem Amin der Formel IIa

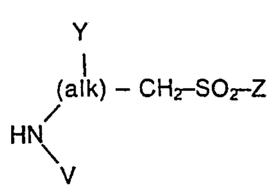

(IIa)

in der alk, Y, Z und V die oben angegebenen Bedeutungen haben, oder mit einem Amin der Formel II′a

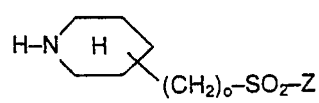

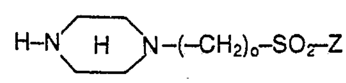

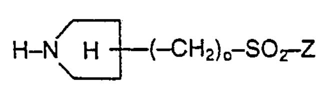

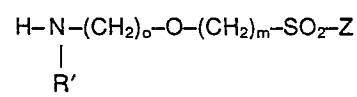

in denen Z und R′ die oben angegebenen Bedeutungen hat und o 0 bis 6 und m 2 bis 6 bedeuten, umgesetzt wird.

15. Verfahren gemäss Anspruch 14, dadurch gekennzeichnet, dass der Farbstoff der allgemeinen Formel V mit dem Amin der allgemeinen Formel IIa oder II′a bei Temperaturen von 5 bis 70 °C unter Zusatz säurebindender Mittel bei pH-Werten von 2 bis 6,5 in wässrigem Medium umgesetzt wird.

16. Verfahren zur Herstellung von Reaktivfarbstoffen gemäss Anspruch 14, dadurch gekennzeichnet, dass ein Farbstoff der Formel III

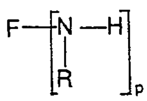

(III),

in der F, R und p die oben angegebenen Bedeutungen haben, zunächst mit einem reaktionsfähigen Derivat des 1,3,5-Triazins der Formel IV

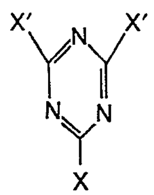

(IV)

in der X und X′ unabhängig voneinander die oben für X angegebenen Bedeutungen haben, umgesetzt wird, und der so erhaltene Farbstoff der allgemeinen Formel V anschliessend mit einem Amin der Formel IIa oder II′a zum Farbstoff der Formel I umgesetzt wird.

17. Verfahren zur Herstellung von Reaktivfarbstoffen der allgemeinen Formel I

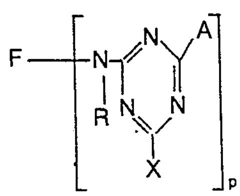

(I)

worin F, R, X und A die im Anspruch 1 genannten Bedeutungen haben und p für die Zahlen 1 oder 2 steht gemäss Anspruch 14, dadurch gekennzeichnet, dass eine Komponente dieses Farbstoffs, die einen Rest der Formel Va

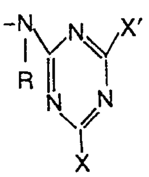

(Va)

in der R, X und X′ die oben angegebenen Bedeutungen haben, mit einer zur Herstellung des Farbstoffs benötigten zweiten Komponente, die gegebenenfalls einen Rest der Formel Va enthält, zu einem Azo- oder Formazanfarbstoff umgesetzt wird und der so erhaltene Farbstoff der Formel V in einem weiteren Schritt mit einem Amin der Formel IIa oder II′a zur Reaktion gebracht wird.

18. Verwendung von Farbstoffen der Formel I zum Färben und Bedrucken von Zellulose, natürlichen und synthetischen Polyamiden und diese Substrate enthaltenden Materialien.

**Claims**

1. A reactive dye of the formula I

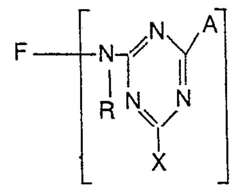

(I)

in which

F is a radical of a metal-free or metal-containing monoazo or disazo dye which contains at least one $-SO_3H$ group, a radical of a derivative of 1-aminoanthraquinone or 1-anilinoanthraquinone, in particular a radical of a 4-phenylamino-1-aminoanthraquinone-2-sulfonic acid derivative or a radical of a sulfophthalocyanine dye, in particular of a derivative of a phthalocyaninesulfanilide or phthalocyaninesulfalkylamide having 2–6 C atoms in the alkyl chain and carrying at least two sulfo groups in the phthalocyanine nucleus, or a radical of a formazan, phenazine, oxazine or nitroaryl dye,

R is hydrogen or –COOH– or $-SO_3H$-substituted or unsubstituted alkyl having 1 to 4 C atoms, cyanoethyl or hydroxyethyl,

X is fluorine, chlorine, bromine, alkylsulfonyl having 1 to 4 C atoms, phenylsulfonyl or a $-SO_3H$ radical,

p is 1 or 2 and

A is a radical of the formula II

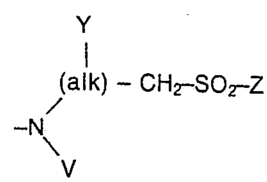

(II)

in which

Y is chlorine, bromine, fluorine, –OH, $-OSO_3H$, –O–acyl, –CN, –COOH, –COO-alkyl having 1 to 4 C atoms in the alkyl radical, $-CONH_2$ or $-SO_2-Z$,

alk is a polymethylene radical having 1 to 6 C atoms or its branched isomers,

V is 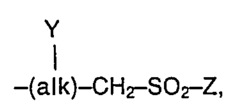

hydrogen, methyl or a methyl group which can be substituted by a carboxyl group or by a sulfo group or their derivatives or is an alkyl radical having 1 to 4 C atoms which can be substituted by alkoxy groups having 1 or 2 C atoms, by carboxyl or sulfo groups or by halogen atoms or hydroxyl groups, and in which

Z is a β-halogenoethyl or a vinyl or β-acetoxyethyl radical, or a radical of the formulae II′

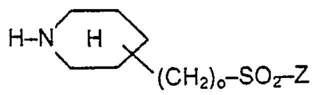

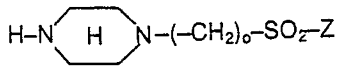

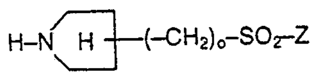

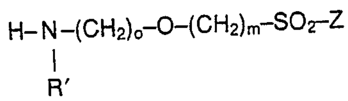

in all of which R′ is $C_{1-6}$alkyl or hydrogen, Z is a defined above, o is 0 to 6, and m is 2 to 6.

2. A reactive dye according to claim 1 wherein F is a monoazo or disazo dye radical of the formula VIa, VIb or VIc

| | |
|---|---|
| $D-N=N-(M-N=N)_n-K$ | (VIa) |
| $-D-N=N-(M-N=N)_n-K$ | (VIb) |
| $-D-N=N-(M-N=N)_n-K-$ | (VIc) |

or of a metal complex derived therefrom, where in the formulae VIa, VIb and VIc

D is the radical of a diazo component of the benzene or naphthalene series which can be substituted by hydroxyl, methyl, ethyl, methoxy or ethoxy groups, substituted or unsubstituted alkanoylamino groups having 2 to 4 C atoms, substituted or unsubstituted benzoylamino groups or halogen atoms,

K is the radical of a coupling component of the benzene, naphthalene, pyrazolone, 6-hydroxypyrid-2-one or acetoacetarylamide series which can be substituted by hydroxyl, amino, methyl, ethyl, methoxy or ethoxy groups, substituted or unsubstituted alkanoylamino groups having 2 to 4 C atoms, substituted or unsubstituted benzoylamino groups or halogen atoms,

M is the radical of a middle component of the benzene or naphthalene series which can be substituted by hydroxyl, methyl, ethyl, methoxy or ethoxy groups, substituted or unsubstituted alkanoylamino groups having 2 to 4 C atoms, substituted or unsubstituted benzoylamino groups or halogen atoms,

n is 0 or 1, and

D, M and K together contain at least two sulfo groups, preferably three or four sulfo groups.

3. A reactive dye according to claim 1 wherein F is a radical of an anthraquinone dye of the general formula VII

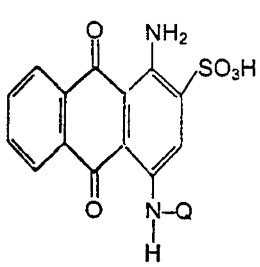

(VII)

in which

Q is a phenylene radical which carries a radical of the general formula IIIa, where the anthraquinone nucleus and/or the phenylene radical can be substituted by a further $-SO_3H$ group, the phenylene radical also by a carboxyl group, so that the dye contains at least two powerfully water-solubilizing groups, an alkoxy group having 1 to 3 C atoms, by a halogen atom or by 1 to 3 alkyl groups having 1 to 3 C atoms.

4. A reactive dye according to claim 1 wherein F is a radical of a phthalocyanine dye of the general formula VIII

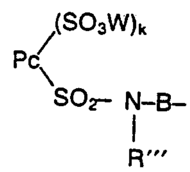

(VIII)

in which Pc is the radical of a metal-containing or metal-free phthalocyanine nucleus, preferably of copper- or nickel-phthalocyanine,

W is -OH and/or -NR′R″, where R′, R″ and R‴, independently of one another, are each hydrogen or alkyl having 1–4 C atoms,

B is a phenyl radical which can be substituted by halogen, 1 to 3 alkyl groups having 1–2 C atoms or by one or two sulfo or carboxyl groups or is an alkyl radical having 2–6 C atoms, preferably a phenylene radical which is substituted by a sulfo group or an ethylene radical and

k is 1 to 3.

5. A reactive dye according to claim 1 in which A is a radical of the formula

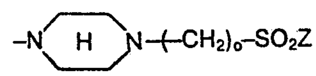

o is 0 to 6, m is 2 to 6, and Z is β-halogenoethyl, vinyl or β-acetoxyethyl.

6. A reactive dye according to claim 5 in which A is a radical of the formula

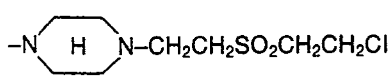

7. A reactive dye according to claim 1 in which A is a radical of the formula

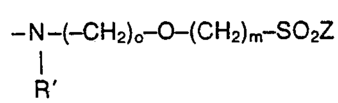

R′ is $C_{1-6}$-alkyl or hydrogen, o is 0 to 6, and Z is β-halogenoethyl, vinyl or β-acetoxyethyl.

8. A reactive dye according to claim 7 in which A is a radical of the formula

$$-NH-CH_2CH_2-O-CH_2CH_2SO_2CH_2CH_2Cl$$

9. A reactive dye according to claim 7 of the formula

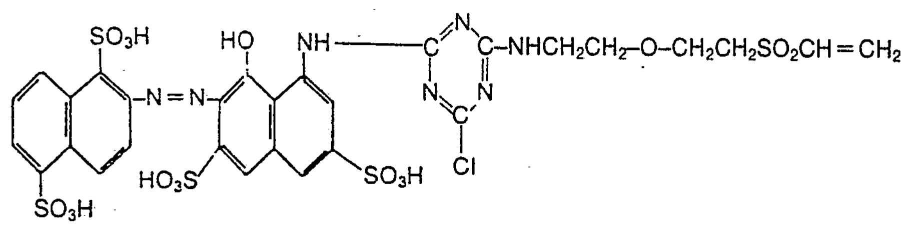

10. A reactive dye according to claim 8 of the formula

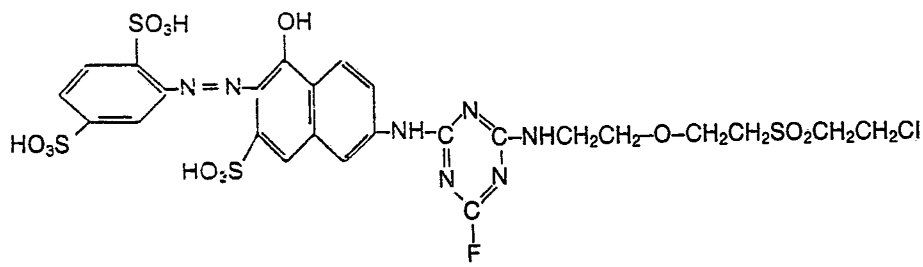

11. A reactive dye according to claim 8 of the formula

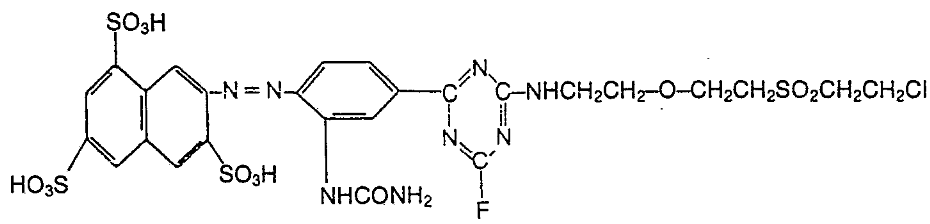

12. A reactive dye according to claim 8 of the formula

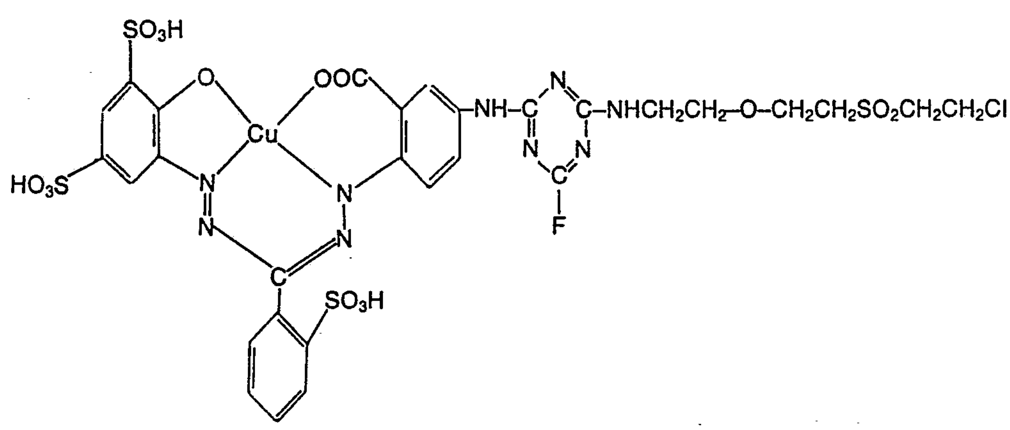

13. A reactive dye according to claim 8 of the formula

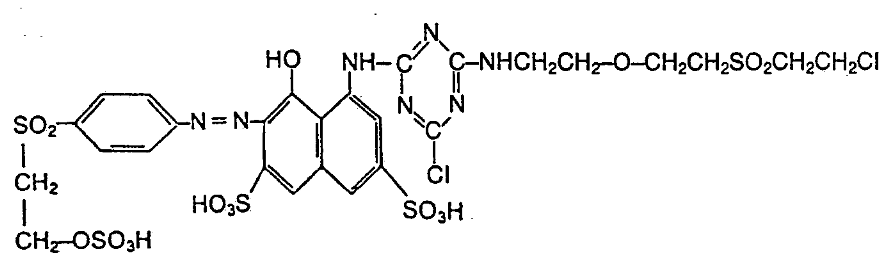

14. A process for preparing a reactive dye of the formula I in which the symbols F, R, X, A and p are as defined in claim 1, which comprises reacting the dye of the formula V

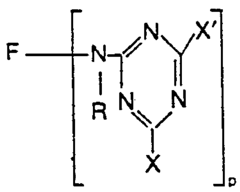

(V)

in which F, R and p are as defined above and X and X′, independently of each other, are defined in the same way as X, with an amine of the formula IIa

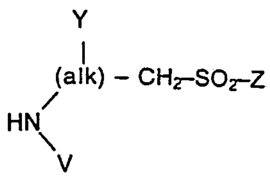

(IIa)

in which alk, Y, Z and V are as defined above, or with an amine of the formulae II′a

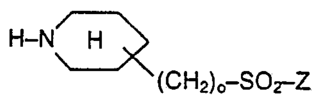

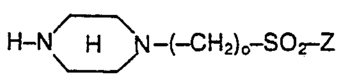

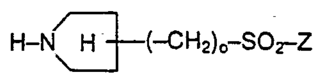

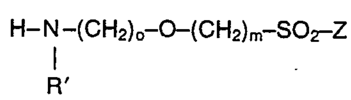

in which Z and R′ are as defined above, o is 0 to 6 and m is 2 to 6.

15. A process according to claim 14 wherein the dye of the general formula V is reacted with the amine of the general formula IIa or II′a at temperatures of 5 to 70 °C in the presence of acid-binding agents at pH 2–6.5 in an aqueous medium.

16. A process for preparing reactive dyes according to claim 14 wherein a dye of the formula III

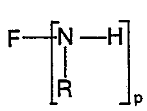

(III),

in which F, R and p are as defined above, is initially reacted with a reactive derivative of the 1,3,5-triazine of the formula IV

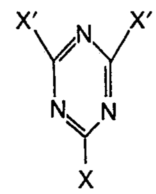

(IV)

in which X and X′, independently of each other, are defined in the same way as X above, and the dye of the general formula V thus obtained is then reacted with an amine of the formula IIa or II′a to give a dye of the formula I.

17. A process for preparing reactive dyes of the general formula I

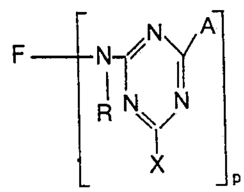

(I)

in which F, R, X and A are as defined in claim 1 and p is 1 or 2, according to claim 14, which comprises reacting a component of this dye which contains a radical of the formula Va

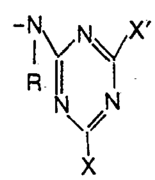

(Va)

in which R, X and X′ are as defined above, with a second component required for preparing the dye and which can contain a radical of the formula Va to give an azo or formazan dye, and reacting the dye of the formula V thus obtained in a further step with an amine of the formula IIa or II′a.

18. Use of dyes of the formula I for dyeing and printing cellulose, natural and synthetic polyamides and materials containing these substrates.

**Revendications**

1. Colorants réactifs repondant à la formule I

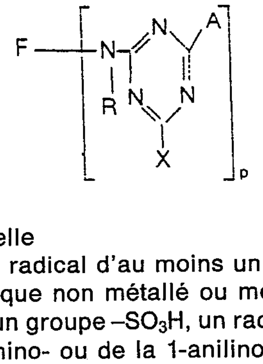

(I),

dans laquelle

F est un radical d'au moins un colorant mono- ou disazoïque non métallé ou métallé contenant au moins un groupe $-SO_3H$, un radical d'un dérivé de la 1-amino- ou de la 1-anilino-anthraquinone, en particulier un radical d'un dérivé de l'acide

4-phénylamino-1-aminoanthraquinone-2-sulfonique ou un radical d'un colorant sulfophtalocyanine, en particulier d'un dérivé portant au moins deux groupes acide sulfonique sur le noyau phtalocyanine d'un phtalocyanine-sulfanilide ou -sulfalkylamide ayant 2 à 6 atomes de carbone dans la chaîne alkyle, ainsi qu'un radical d'un colorant formazan, phénazine, oxazine ou nitroarylique,

R désigne un atome d'hydrogène ou un radical alkyle en $C_1$ à $C_4$ substitué le cas échéant par $-COOH$ ou $-SO_3H$, un radical cyanéthyle ou hydroxyéthyle,

X représente un atome de fluor, de chlore, de brome, un groupe alkylsulfonyle en $C_1$ à $C_4$, phénylsulfonyle ou le radical $-SO_3H$,

p vaut 1 ou 2 et

A est un radical répondant à la formule II

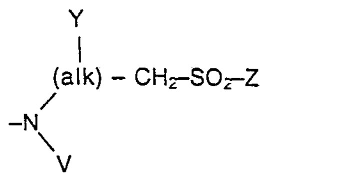

(II),

dans laquelle

Y désigne un atome de chlore, de brome, de fluor, un radical $-OH$, $-OSO_3H$, $-O-$acyle, $-CN$, $-COOH$, $-COO$-alkyle ayant 1 à 4 atome de carbone dans le radical alkyle, $-CONH_2$ ou $-SO_2-Z$,

alk représente un radical polyméthylène en $C_1$ à $C_6$ ou ses isomères ramifiés,

V désigne un groupe 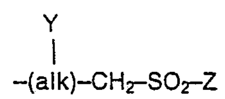

ou

un atome d'hydrogène, un groupe méthyle ou un groupe méthyle substitué le cas échéant par le groupe carboxyle ou le groupe acide sulfonique ou leurs dérivés, ou un radical alkyle en $C_1$ à $C_4$ substitué le cas échéant par des groupes alcoxy en $C_1$ à $C_2$, par des groupes carboxy ou acide sulfonique ou par des atomes d'halogène ou par des groupes hydroxy, et dans laquelle,

Z désigne un radical β-halogénoéthyle ou un radical vinyle ou β-acétoxyéthyle,

ou un radical répondant au formules II'

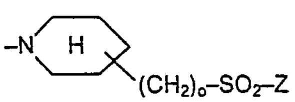

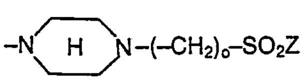

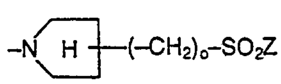

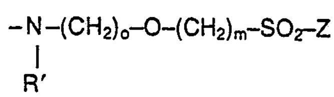

dans lesquelles R' désigne un radical alkyle en $C_1$ à $C_6$ ou un atome d'hydrogène,

Z a les significations indiquées ci-dessus,

o vaut 0 à 6 et

m vaut 2 à 6.

2. Colorants réactifs selon la revendication 1, caractérisé par le fait que

F est un radical d'un colorant mono- ou disazoïque répondant aux formules VIa, VIb ou VIc

$$D-N=N-(M-N=N)_n-K- \quad (VIa)$$
$$-D-N=N-(M-N=N)_n-K \quad (VIb)$$
$$-D-N=N-(M-N=N)_n-K \quad (VIc)$$

ou un complexe métallique en dérivant, étant entendu que dans les formules VIa, VIb et VIc

D représente le radical d'un composant diazo de la série du benzène ou du naphtalène, substitué le cas échéant par des groupes hydroxy, méthyle, éthyle, méthoxy ou éthoxy, par des groupes alcanoylamino en $C_2$ à $C_4$ éventuellement substitués, par des groupes benzoylamino éventuellement substitués ou par des atomes d'halogène,

K désigne un composant de copulation de la série du benzène, du naphtalène, de la pyrazolone, de la 6-hydroxypyridone-(2) ou de l'acétacétarylamide, substitué le cas échéant par des groupes hydroxy, amino, méthyle, éthyle, méthoxy ou éthoxy, par des groupes alcanoylamino en $C_2$ à $C_4$ éventuellement substitués, par des groupes benzoylamino éventuellement substitués ou par des atomes d'halogène,

M représente le radical d'un constituant central de la série du benzène ou du naphtalène, substitué le cas échéant par des groupes hydroxy, méthyle, éthyle, méthoxy ou éthoxy, par des groupes alcanoylamino en $C_2$ à $C_4$ substitués, éventuellement, par des groupes benzoylamino substitués éventuellement par des atomes d'halogène, et

n vaut 0 à 1,

D, M et K contenant ensemble au moins deux groupes acide sulfonique, de préférence trois à quatre groupes acide sulfonique.

3. Colorants réactifs selon la revendication 1, caractérisé par le fait que F est un colorant anthraquinonique répondant à la formule générale VII

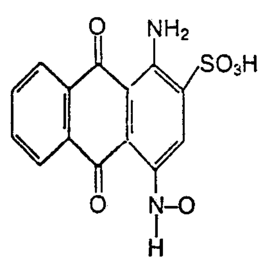

(VII)

dans laquelle

Q désigne un radical phénylène qui porte un radical répondant à la formule générale IIIa, le noyau anthraquinone et/ou le radical phénylène pouvant être substitués par un autre groupe $-SO_3H$, le radical phénylène également par un groupe carboxyle, de telle sorte que le colorant

contient au moins deux groupes fortement hydrosolubilisants, par un groupe alcoxy en $C_1$ à $C_3$, par un atome d'halogène ou par un à trois groupes alkyle en $C_1$ à $C_3$.

4. Colorants réactifs selon la revendication 1, caractérisés par le fait que F est un radical d'un colorant phtalocyanine répondant à la formule générale VIII

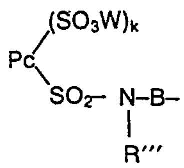

(VIII)

dans laquelle

Pc désigne le radical d'une phtalocyanine métallée ou non métallée, de préférence une phtalocyanine de cuivre ou de nickel,

W désigne –OH et/ou –NR′R″,

R′, R″ et R‴ représentent indépendamment les uns des autres, un atome d'hydrogène ou un groupe alkyle en $C_1$ à $C_4$,

B désigne un radical phénylène substitué le cas échéant par un atome d'halogène, par un à trois groupes alkyle en $C_1$ à $C_2$ par un ou deux groupes acide sulfonique ou acide carboxylique, ou bien un radical alkylène en $C_2$ à $C_6$, de préférence un radical phénylène substitué par un groupe acide sulfonique, ou le radical éthylène, et

k vaut 1 à 3.

5. Colorants réactifs selon la revendication 1, dans lesquels A désigne un radical répondant à la formule

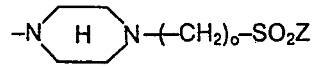

o vaut 0 à 6, m vaut 2 à 6, et Z est un radical β-halogénoéthyle, vinyle, ou β-acétoxyéthyle.

6. Colorants réactifs selon la revendication 5, dans lesquels A désigne un radical répondant à la formule

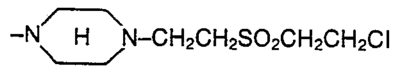

7. Colorants réactifs selon la revendication 1, dans lesquels A est un radical répondant à la formule

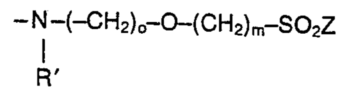

R′ est un radical alkyle en $C_1$ à $C_6$ ou un atome d'hydrogène, o vaut 0 à 6 et Z est un radical β-halogénoéthyle, vinyle ou β-acétoxyéthyle.

8. Colorants réactifs selon la revendication 7, dans lesquels A est un radical répondant à la formule

$-NH-CH_2CH_2-O-CH_2CH_2SO_2CH_2CH_2Cl$

9. Colorant réactif selon la revendication 7, répondant à la formule

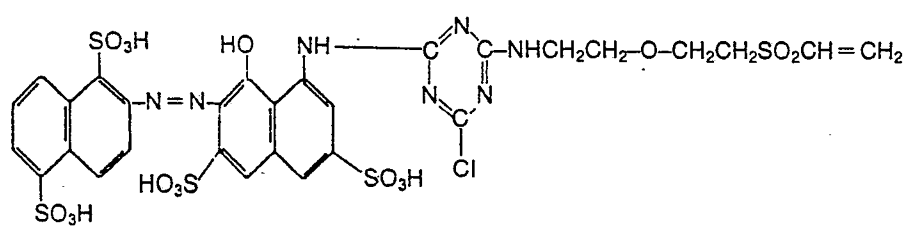

10. Colorant réactif selon la revendication 8, répondant à la formule

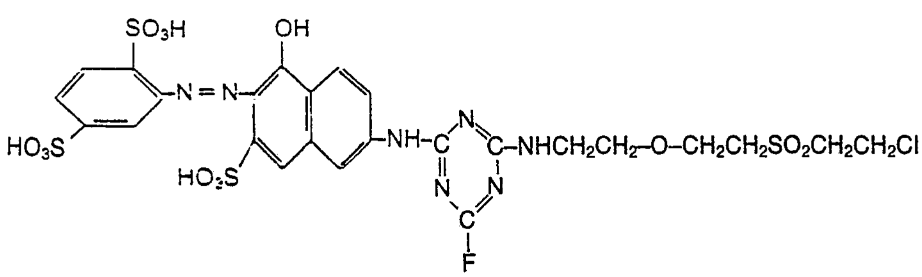

11. Colorant réactif selon la revendication 8, répondant à la formule

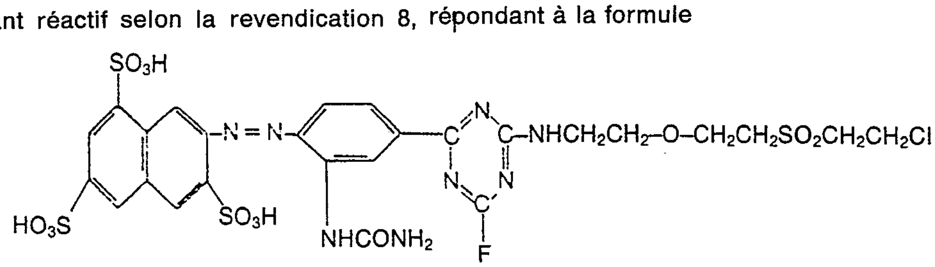

12. Colorant réactif selon la revendication 8, répondant à la formule

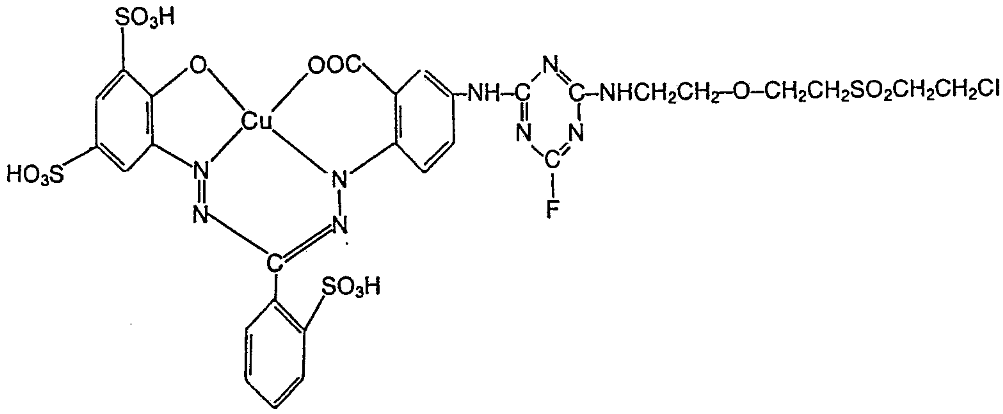

13. Colorant réactif selon la revendication 8, répondant à la formule

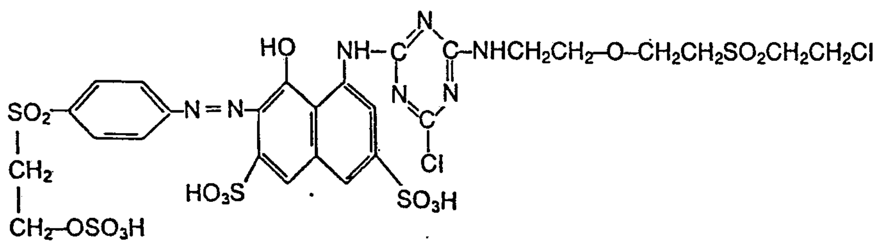

14. Procédé de préparation de colorants réactifs répondant à la formule I, dans laquelle les symboles F, R, X, A et p ont les significations indiquées dans la revendication 1, caractérisé par le fait que le colorant répondant à la formule V

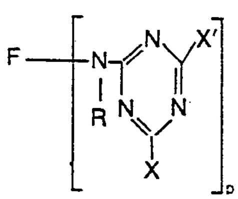 (V)

dans laquelle F, R et p ont les significations indiquées ci-dessus et

X et X′ ont indépendamment l'un de l'autre une des significations indiquées, ci-dessus pour X, est mis à réagir avec une amine répondant à la formule IIa

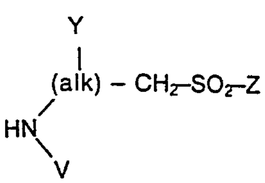 (IIa)

dans laquelle alk, Y, Z et V ont les significations indiquées ci-dessus, ou avec une amine répondant aux formules II'a

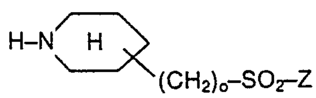

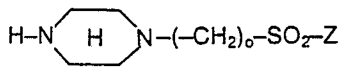

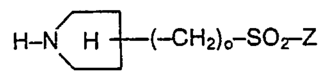

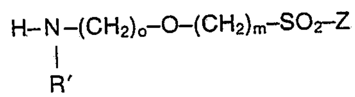

dans lesquelles Z et R′ ont les significations indiquées ci-dessus et

o vaut 0 à 6 et m vaut 2 à 6.

15. Procédé selon la revendication 14, caractérisé par le fait que le colorant répondant à la formule générale V est mis à réagir avec l'amine répondant à la formule générale IIa ou II'a à des températures de 5 à 70 °C, avec addition d'agents de fixation des acides, à des pH de 2 à 6,5 en milieu aqueux.

16. Procédé de préparation de colorants réactifs selon la revendication 14, caractérisé par le fait qu'un colorant répondant à la formule III

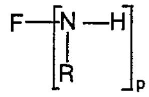 (III),

dans laquelle F, R et p ont les significations indiquées ci-dessus, est d'abord mis à réagir avec un dérivé réactif de la 1,3,5-triazine répondant à la formule IV

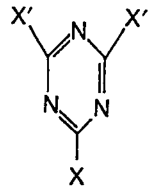

(IV)

dans laquelle X et X′ ont indépendamment l'un de l'autre les significations indiquées ci-dessus pour X, et par le fait que le colorant obtenu, répondant à la formule générale V, est ensuite mis à réagir avec une amine répondant aux formules IIa ou II′a pour donner le colorant répondant à la formule I.

17. Procédé de préparation de colorants réactifs répondant à la formule générale I

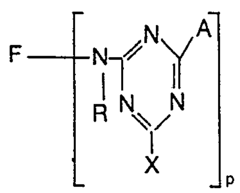

(I)

dans laquelle F, R, X et A ont les significations indiquées dans la revendication 1 et p représente les nombres 1 ou 2 conformément à la revendication 14, caractérisé par le fait que l'on fait réagir un constituant de ce colorant qui contient un radical répondant à la formule Va

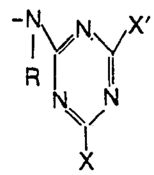

(Va)

dans laquelle R, X et X′ ont les significations indiquées ci-dessus, avec un second constituant nécessaire pour la préparation du colorant, qui contient le cas échéant un radical répondant à la formule Va, pour donner un colorant azoïque ou formazan, et par le fait que dans une étape ultérieure, on fait réagir le colorant répondant à la formule V ainsi obtenu avec une amine répondant aux formules IIa ou II′a.

18. Utilisation de colorants répondant à la formule I pour la teinture et l'impression de la cellulose, des polyamides naturels ou synthétiques, et de matières contenant ces substrats.